(19) Europäisches Patentamt
European Patent Office
Office européen des brevets

(11) **EP 4 384 016 B1**

(12) **EUROPEAN PATENT SPECIFICATION**

(45) Date of publication and mention of the grant of the patent:
**03.09.2025 Bulletin 2025/36**

(21) Application number: **22764725.2**

(22) Date of filing: **11.08.2022**

(51) International Patent Classification (IPC):
***A01P 3/00** (2006.01)* ***A01N 43/653** (2006.01)*
***A01N 43/40** (2006.01)*

(52) Cooperative Patent Classification (CPC):
(C-Sets available)
**A01P 3/00; A01N 43/653** (Cont.)

(86) International application number:
**PCT/EP2022/072541**

(87) International publication number:
**WO 2023/017120 (16.02.2023 Gazette 2023/07)**

(54) **ACTIVE COMPOUND COMBINATIONS AND FUNGICIDE COMPOSITIONS COMPRISING THOSE**

WIRKSTOFFKOMBINATIONEN UND FUNGIZIDE ZUSAMMENSETZUNGEN DAMIT

COMBINAISONS DE COMPOSÉS ACTIFS ET COMPOSITIONS FONGICIDES LES COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.08.2021 EP 21191334**

(43) Date of publication of application:
**19.06.2024 Bulletin 2024/25**

(73) Proprietor: **Bayer Aktiengesellschaft**
**51373 Leverkusen (DE)**

(72) Inventors:
- **GÖRTZ, Andreas**
**41541 Dormagen (DE)**
- **GÖHLICH, Frank**
**40789 Monheim am Rhein (DE)**
- **KLÜKEN, Michael Agostinos**
**47799 Krefeld (DE)**

(74) Representative: **BIP Patents**
**c/o Bayer Intellectual Property GmbH**
**Alfred-Nobel-Straße 50**
**40789 Monheim am Rhein (DE)**

(56) References cited:
**WO-A1-2021/209363**
**WO-A1-2021/209364**
**WO-A1-2021/209365**
**WO-A1-2021/209366**
**WO-A1-2021/209368**
**CA-A1- 3 135 695**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**A01N 43/653, A01N 43/40, A01N 2300/00**

## Description

The present invention relates to active compound combinations comprising as compound (A) methyl 2-[2-chloro-4-(4-chlorophenoxy)phenyl]-2-hydroxy-3-(1,2,4-triazol-1-yl)propanoate, as compound (B) (3.017) metarylpicoxamid and optionally as compound(s) (C) one or more further fungicide(s). Moreover, the invention relates to fungicide compositions comprising such compound combination and to the use of the compound combinations and the fungicide compositions as biologically active agent, especially for control of phytopathogenic fungi in crop protection and in the protection of industrial materials and as plant growth regulators.

Throughout this application the terms "composition" and "formulation" are used synonymously and refer to mixtures of a compound combination of the invention and at least one agriculturally suitable auxiliary.

Methyl 2-[2-chloro-4-(4-chlorophenoxy)phenyl]-2-hydroxy-3-(1,2,4-triazol-1-yl)propanoate and 2-[2-chloro-4-(4-chlorophenoxy)phenyl]-2-hydroxy-3-(1,2,4-triazol-1-yl)propanoic acid, preparation thereof and the fungicidal efficacy of said compounds is known from WO 2019/093522 A1. WO 2019/093522 A1 also discloses compositions comprising at least one of said compounds, and furthermore also active compound combinations comprising at least one of said compounds and at least one further active ingredient, in particular a further fungicide. Fungicides for agricultural or horticultural use comprising at least one of said compounds and at least one specific further active ingredient are known from WO 2020/213739 A1.

Methyl 2-[2-chloro-4-(4-chlorophenoxy)phenyl]-2-hydroxy-3-(1,2,4-triazol-1-yl)propanoate, 2-[2-chloro-4-(4-chlorophenoxy)phenyl]-2-hydroxy-3-(1,2,4-triazol-1-yl)propanoic acid and the known compound combinations comprising any of those compounds provide excellent means in protecting plants from diseases caused by fungi. However, there is still need to even improve those means in order to address the ever increasing environmental and economic requirements imposed on modem-day crop protection agents and compositions. This includes, for example, improvement to the spectrum of action, safety profile, selectivity, application rate, formation of residues, and favourable preparation ability, and development of new compositions to deal with potential problems, like resistances.

The present invention provides active compound combinations and compositions comprising said combinations which at least in some aspects achieve the stated objective.

Accordingly, the present invention provides active compound combinations comprising

(A) as compound (A) methyl 2-[2-chloro-4-(4-chlorophenoxy)phenyl]-2-hydroxy-3-(1,2,4-triazol-1-yl)propanoate, and

(B) as compound (B) (3.017) metarylpicoxamid.

As used herein, the term "biological control" is defined as control of harmful organisms such as a phytopathogenic fungi and/or insects and/or acarids and/or nematodes by the use or employment of a biological control agent.

As used herein, the term "biological control agent" is defined as an organism other than the harmful organisms and / or proteins or secondary metabolites produced by such an organism for the purpose of biological control. Mutants of the second organism shall be included within the definition of the biological control agent. The term "mutant" refers to a variant of the parental strain as well as methods for obtaining a mutant or variant in which the pesticidal activity is greater than that expressed by the parental strain. The "parent strain" is defined herein as the original strain before mutagenesis. To obtain such mutants the parental strain may be treated with a chemical such as N-methyl-N'-nitro-N-nitrosoguanidine, ethylmethanesulfone, or by irradiation using gamma, x-ray, or UV-irradiation, or by other means well known to those skilled in the art. Known mechanisms of biological control agents comprise enteric bacteria that control root rot by out-competing fungi for space on the surface of the root. Bacterial toxins, such as antibiotics, have been used to control pathogens. The toxin can be isolated and applied directly to the plant or the bacterial species may be administered so it produces the toxin *in situ.*

A "variant" is a strain having all the identifying characteristics of the NRRL or ATCC Accession Numbers as indicated in this text and can be identified as having a genome that hybridizes under conditions of high stringency to the genome of the NRRL or ATCC Accession Numbers.

"Hybridization" refers to a reaction in which one or more polynucleotides react to form a complex that is stabilized via hydrogen bonding between the bases of the nucleotide residues. The hydrogen bonding may occur by Watson-Crick base pairing, Hoogstein binding, or in any other sequence-specific manner. The complex may comprise two strands forming a duplex structure, three or more strands forming a multi-stranded complex, a single self-hybridizing strand, or any combination of these. Hybridization reactions can be performed under conditions of different "stringency". In general, a low stringency hybridization reaction is carried out at about 40 °C in 10 X SSC or a solution of equivalent ionic strength/-temperature. A moderate stringency hybridization is typically performed at about 50 °C in 6 X SSC, and a high stringency hybridization reaction is generally performed at about 60 °C in 1 X SSC.

A variant of the indicated NRRL or ATCC Accession Number may also be defined as a strain having a genomic

sequence that is greater than 85%, more preferably greater than 90% or more preferably greater than 95% sequence identity to the genome of the indicated NRRL or ATCC Accession Number. A polynucleotide or polynucleotide region (or a polypeptide or polypeptide region) has a certain percentage (for example, 80%, 85%, 90%, or 95%) of "sequence identity" to another sequence means that, when aligned, that percentage of bases (or amino acids) are the same in comparing the two sequences. This alignment and the percent homology or sequence identity can be determined using software programs known in the art, for example, those described in Current Protocols in Molecular Biology (F. M. Ausubel et al., eds., 1987).

NRRL is the abbreviation for the Agricultural Research Service Culture Collection, an international depositary authority for the purposes of deposing microorganism strains under the Budapest treaty on the international recognition of the deposit of microorganisms for the purposes of patent procedure, having the address National Center for Agricultural Utilization Research, Agricultural Research service, U.S. Department of Agriculture, 1815 North university Street, Peroira, Illinois 61604 USA.

ATCC is the abbreviation for the American Type Culture Collection, an international depositary authority for the purposes of deposing microorganism strains under the Budapest treaty on the international recognition of the deposit of microorganisms for the purposes of patent procedure, having the address ATCC Patent Depository, 10801 University Blvd., Manassas, VA 10110 USA.

The active compound combinations according to the invention comprise as compound (A) methyl 2-[2-chloro-4-(4-chlorophenoxy)phenyl]-2-hydroxy-3-(1,2,4-triazol-1-yl)propanoate, wherein the compound may be present in form of a salt or N-oxide thereof. The salts or N-oxides of said compounds also have fungicidal properties.

Methyl 2-[2-chloro-4-(4-chlorophenoxy)phenyl]-2-hydroxy-3-(1,2,4-triazol-1-yl)propanoate is depicted by formula (I-1)

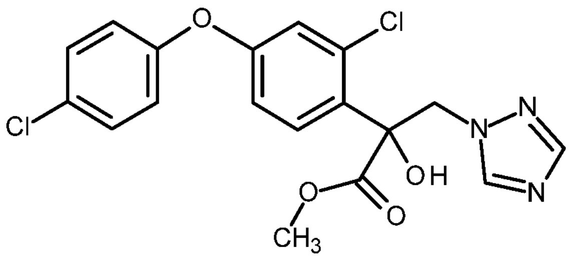

(I-1)

and is denoted in the following also compound (I-1) or simply (I-1).

As apparent from formula (I-1), compound (I-1) comprises a stereogenic center at the carbon atom bearing the hydroxy group. Hence, the compound can be present in form of the optical isomers, their racemic or scalemic mixtures (the term "scalemic" denotes a mixture of enantiomers in different proportions), in all proportions. Compound (I-1) may be used in the active compound combinations according to this invention in any of said forms, i.e. (I-1) may be present as methyl (2R)-2-[2-chloro-4-(4-chlorophenoxy)phenyl]-2-hydroxy-3-(1,2,4-triazol-1-yl)propanoate, methyl (2S)-2-[2-chloro-4-(4-chlorophenoxy)phenyl]-2-hydroxy-3-(1,2,4-triazol-1-yl)propanoate, the racemate of methyl (2R)-2-[2-chloro-4-(4-chlorophenoxy)phenyl]-2-hydroxy-3-(1,2,4-triazol-1-yl)propanoate and methyl (2S)-2-[2-chloro-4-(4-chlorophenoxy)phenyl]-2-hydroxy-3-(1,2,4-triazol-1-yl)propanoate, and any scalemic mixture of methyl (2R)-2-[2-chloro-4-(4-chlorophenoxy)phenyl]-2-hydroxy-3-(1,2,4-triazol-1-yl)propanoate and methyl (2S)-2-[2-chloro-4-(4-chlorophenoxy)phenyl]-2-hydroxy-3-(1,2,4-triazol-1-yl)propanoate.

The active compound combinations according to the invention comprise as compound (A) compound (I-1).

The active compound combinations according to the invention comprise as compound (B) (3.017) metarylpicoxamid.

The active compound combinations according to the invention optionally comprise as compound(s) (C) at least one further fungicidally active compound selected from the following groups (1') to (15'):

(1') inhibitors of the ergosterol synthesis selected from the group consisting of (1.001) cyproconazole, (1.002) difenoconazole, (1.003) epoxiconazole, (1.004) fenbuconazole, (1.005) fenhexamid, (1.006) fenpropidin, (1.007) fenpropimorph, (1.008) fenpyrazamine, (1.009) fluoxytioconazole, (1.010) fluquinconazole, (1.011) flutriafol, (1.012) hexaconazole, (1.013) imazalil, (1.014) imazalil sulfate, (1.015) ipconazole, (1.016) ipfentrifluconazole, (1.017) mefentrifluconazole, (1.018) metconazole, (1.019) myclobutanil, (1.020) paclobutrazol, (1.021) penconazole, (1.022) prochloraz, (1.023) propiconazole, (1.024) prothioconazole, (1.025) pyrisoxazole, (1.026) spiroxamine, (1.027) tebuconazole, (1.028) tetraconazole, (1.029) triadimenol, (1.030) tridemorph, (1.031) triticonazole, (1.032) (1R,2S,5S)-5-(4-chlorobenzyl)-2-(chloromethyl)-2-methyl-1-(1H-1,2,4-triazol-1-ylmethyl)cyclopentanol, (1.033) (1S,2R,5R)-5-(4-chlorobenzyl)-2-(chloromethyl)-2-methyl-1-(1H-1,2,4-triazol-1-ylmethyl)cyclopentanol,

(1.034) (2R)-2-(1-chlorocyclopropyl)-4-[(1R)-2,2-dichlorocyclopropyl]-1-(1H-1,2,4-triazol-1-yl)butan-2-ol, (1.035) (2R)-2-(1-chlorocyclopropyl)-4-[(1S)-2,2-dichlorocyclopropyl]-1-(1H-1,2,4-triazol-1-yl)butan-2-ol, (1.036) (2R)-2-[4-(4-chlorophenoxy)-2-(trifluoromethyl)phenyl]-1-(1H-1,2,4-triazol-1-yl)propan-2-ol, (1.037) (2S)-2-(1-chlorocyclopropyl)-4-[(1R)-2,2-dichlorocyclopropyl]-1-(1H-1,2,4-triazol-1-yl)butan-2-ol, (1.038) (2S)-2-(1-chlorocyclopropyl)-4-[(1S)-2,2-dichlorocyclopropyl]-1-(1H-1,2,4-triazol-1-yl)butan-2-ol, (1.039) (2S)-2-[4-(4-chlorophenoxy)-2-(trifluoromethyl)phenyl]-1-(1H-1,2,4-triazol-1-yl)propan-2-ol, (1.040) (R)-[3-(4-chloro-2-fluorophenyl)-5-(2,4-difluorophenyl)-1,2-oxazol-4-yl](pyridin-3-yl)methanol, (1.041) (S)-[3-(4-chloro-2-fluorophenyl)-5-(2,4-difluorophenyl)-1,2-oxazol-4-yl](pyridin-3-yl)methanol, (1.042) [3-(4-chloro-2-fluorophenyl)-5-(2,4-difluorophenyl)-1,2-oxazol-4-yl](pyridin-3-yl)methanol, (1.043) 1-({(2R,4S)-2-[2-chloro-4-(4-chlorophenoxy)phenyl]-4-methyl-1,3-dioxolan-2-yl}methyl)-1H-1,2,4-triazole, (1.044) 1-({(2S,4S)-2-[2-chloro-4-(4-chlorophenoxy)phenyl]-4-methyl-1,3-dioxolan-2-yl}methyl)-1H-1,2,4-triazole, (1.045) 1-{[3-(2-chlorophenyl)-2-(2,4-difluorophenyl)oxiran-2-yl]methyl}-1H-1,2,4-triazol-5-yl thiocyanate, (1.046) 1-{[rel(2R,3R)-3-(2-chlorophenyl)-2-(2,4-difluorophenyl)oxiran-2-yl]methyl}-1H-1,2,4-triazol-5-yl thiocyanate, (1.047) 1-{[rel(2R,3S)-3-(2-chlorophenyl)-2-(2,4-difluorophenyl)oxiran-2-yl]methyl}-1H-1,2,4-triazol-5-yl thiocyanate, (1.048) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.049) 2-[(2R,4R,5S)-1-(2,4-dichlorophenyl)-5-hydroxy-2,6,6-trimethylheptan-4-yl]-2,4-dihydro-3H-1,2,4-triazole-3-thione, (1.050) 2-[(2R,4S,5R)-1-(2,4-dichlorophenyl)-5-hydroxy-2,6,6-trimethylheptan-4-yl]-2,4-dihydro-3H-1,2,4-triazole-3-thione, (1.051) 2-[(2R,4S,5S)-1-(2,4-dichlorophenyl)-5-hydroxy-2,6,6-trimethylheptan-4-yl]-2,4-dihydro-3H-1,2,4-triazole-3-thione, (1.052) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.053) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.054) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.055) 2-[(2S,4S,5S)-1-(2,4-dichlorophenyl)-5-hydroxy-2,6,6-trimethylheptan-4-yl]-2,4-dihydro-3H-1,2,4-triazole-3-thione, (1.056) 2-[1-(2,4-dichlorophenyl)-5-hydroxy-2,6,6-trimethylheptan-4-yl]-2,4-dihydro-3H-1,2,4-triazole-3-thione, (1.057) 2-[6-(4-bromophenoxy)-2-(trifluoromethyl)-3-pyridyl]-1-(1,2,4-triazol-1-yl)propan-2-ol, (1.058) 2-[6-(4-chlorophenoxy)-2-(trifluoromethyl)-3-pyridyl]-1-(1,2,4-triazol-1-yl)propan-2-ol, (1.059) 2-{ [3-(2-chlorophenyl)-2-(2,4-difluorophenyl)oxiran-2-yl]methyl }-2,4-dihydro-3H-1,2,4-triazole-3-thione, (1.060) 2-{[rel(2R,3R)-3-(2-chlorophenyl)-2-(2,4-difluorophenyl)oxiran-2-yl]methyl}-2,4-dihydro-3H-1,2,4-triazole-3-thione, (1.061) 2-{[rel(2R,3S)-3-(2-chlorophenyl)-2-(2,4-difluorophenyl)oxiran-2-yl]methyl}-2,4-dihydro-3H-1,2,4-triazole-3-thione, (1.062) 3-[2-(1-chlorocyclopropyl)-3-(3-chloro-2-fluorophenyl)-2-hydroxypropyl]imidazole-4-carbonitrile, (1.063) 5-(4-chlorobenzyl)-2-(chloromethyl)-2-methyl-1-(1H-1,2,4-triazol-1-ylmethyl)cyclopentanol, (1.064) 5-(allylsulfanyl)-1-{[3-(2-chlorophenyl)-2-(2,4-difluorophenyl)oxiran-2-yl]methyl}-1H-1,2,4-triazole, (1.065) 5-(allylsulfanyl)-1-{[rel(2R,3R)-3-(2-chlorophenyl)-2-(2,4-difluorophenyl)oxiran-2-yl]methyl}-1H-1,2,4-triazole, (1.066) 5-(allylsulfanyl)-1-{[rel(2R,3S)-3-(2-chlorophenyl)-2-(2,4-difluorophenyl)oxiran-2-yl]methyl}-1H-1,2,4-triazole, (1.068) N'-(2-chloro-5-methyl-4-phenoxyphenyl)-N-ethyl-N-methylimidoformamide, (1.069) N'-[2-chloro-4-(2-fluorophenoxy)-5-methylphenyl]-N-ethyl-N-methylimidoformamide, (1.070) N'-[5-bromo-6-(2,3-dihydro-1H-inden-2-yloxy)-2-methylpyridin-3-yl]-N-ethyl-N-methylimidoformamide, (1.071) N'-{4-[(4,5-dichloro-1,3-thiazol-2-yl)oxy]-2,5-dimethylphenyl}-N-ethyl-N-methylimidoformamide, (1.072) N'-{5-bromo-2-methyl-6-[(1-propoxypropan-2-yl)oxy]pyridin-3-yl}-N-ethyl-N-methylimidoformamide, (1.073) N'-{5-bromo-6-[(1R)-1-(3,5-difluorophenyl)ethoxy]-2-methylpyridin-3-yl}-N-ethyl-N-methylimidoformamide, (1.074) N'-{5-bromo-6-[(1S)-1-(3,5-difluorophenyl)ethoxy]-2-methylpyridin-3-yl}-N-ethyl-N-methylimidoformamide, (1.075) N'-{5-bromo-6-[(cis-4-isopropyleyclohexyl)oxy]-2-methylpyridin-3-yl}-N-ethyl-N-methylimidoformamide, (1.076) N'-{ 5-bromo-6-[(trans-4-isopropylcyclohexyl)oxy]-2-methylpyridin-3-yl}-N-ethyl-N-methylimidoformamide, (1.077) N'-{5-bromo-6-[1-(3,5-difluorophenyl)ethoxy]-2-methylpyridin-3-yl}-N-ethyl-N-methylimidoformamide, (1.078) N-isopropyl-N'-[5-methoxy-2-methyl-4-(2,2,2-trifluoro-1-hydroxy-1-phenylethyl)phenyl]-N-methylimidoformamide,

(2') inhibitors of the respiratory chain at complex I or II selected from the group consisting of (2.001) benzovindiflupyr, (2.002) bixafen, (2.003) boscalid, (2.004) carboxin, (2.005) cyclobutrifluram, (2.006) flubeneteram, (2.007) fluindapyr, (2.008) fluopyram, (2.009) flutolanil, (2.010) fluxapyroxad, (2.011) furametpyr, (2.012) inpyrfluxam, (2.013) isofetamid, (2.014) isoflucypram, (2.015) isopyrazam, (2.016) penflufen, (2.017) penthiopyrad, (2.018) pydiflumetofen, (2.019) pyrapropoyne, (2.020) pyraziflumid, (2.021) sedaxane, (2.022) thifluxamide, (2.023) 1,3-dimethyl-N-(1,1,3-trimethyl-2,3-dihydro-1H-inden-4-yl)-1H-pyrazole-4-carboxamide, (2.024) 1,3-dimethyl-N-[(3R)-1,1,3-trimethyl-2,3-dihydro-1H-inden-4-yl]-1H-pyrazole-4-carboxamide, (2.025) 1,3-dimethyl-N-[(3S)-1,1,3-trimethyl-2,3-dihydro-1H-inden-4-yl]-1H-pyrazole-4-carboxamide, (2.026) 1-methyl-3-(trifluoromethyl)-N-[2'-(trifluoromethyl)biphenyl-2-yl]-1H-pyrazole-4-carboxamide, (2.027) 2-fluoro-6-(trifluoromethyl)-N-(1,1,3-trimethyl-2,3-dihydro-1H-inden-4-yl)benzamide, (2.028) 3-(difluoromethyl)-1-methyl-N-(1,1,3-trimethyl-2,3-dihydro-1H-inden-4-yl)-1H-pyrazole-4-carboxamide, (2.029) 3-(difluoromethyl)-1-methyl-N-[(3S)-1,1,3-trimethyl-2,3-dihydro-1H-inden-4-yl]-1H-pyrazole-4-carboxamide, (2.030) 3-(difluoromethyl)-N-[(3R)-7-fluoro-1,1,3-trimethyl-2,3-dihydro-1H-inden-4-yl]-1-methyl-1H-pyrazole-4-carboxamide, (2.031) 3-(difluoromethyl)-N-[(3S)-7-fluoro-1,1,3-trimethyl-2,3-dihydro-1H-inden-4-yl]-1-methyl-1H-pyrazole-4-carboxamide, (2.032) 5,8-difluoro-N-[2-(2-fluoro-4-{[4-(trifluoromethyl)pyridin-2-yl]oxy}phenyl)ethyl]quinazolin-4-amine, (2.033) N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, (2.034) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.035) N-[1-(2,4-dichlorophenyl)-1-methoxypropan-2-yl]-3-(difluoromethyl)-1-methyl-1H-pyrazole-4-carboxamide, (2.036) N-[rac-(1S,2S)-2-(2,4-dichlorophenyl)cyclobutyl]-2-(trifluoromethyl)nicotinamide,

(3') inhibitors of the respiratory chain at complex III selected from the group consisting of (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) fenpicoxamid, (3.012) florylpicoxamid, (3.013) flufenoxystrobin, (3.014) fluoxastrobin, (3.015) kresoxim-methyl, (3.016) mandestrobin, (3.017) metarylpicoxamid, (3.018) metominostrobin, (3.019) metyltetraprole, (3.020) orysastrobin, (3.021) picoxystrobin, (3.022) pyraclostrobin, (3.023) pyrametostrobin, (3.024) pyraoxystrobin, (3.025) trifloxystrobin, (3.026) (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, (3.027) (2E,3Z)-5-{[1-(4-chlorophenyl)-1H-pyrazol-3-yl]oxy}-2-(methoxyimino)-N,3-dimethylpent-3-enamide, (3.028) (2R)-2-{2-[(2,5-dimethylphenoxy)methyl]phenyl}-2-methoxy-N-methylacetamide, (3.029) (2S)-2-{2-[(2,5-dimethylphenoxy)methyl]phenyl}-2-methoxy-N-methylacetamide, (3.030) N-(3-ethyl-3,5,5-trimethylcyclohexyl)-3-formamido-2-hydroxybenzamide, (3.031) (2E,3Z)-5-{[1-(4-chloro-2-fluorophenyl)-1H-pyrazol-3-yl]oxy}-2-(methoxyimino)-N,3-dimethylpent-3-enamide, (3.032) methyl {5-[3-(2,4-dimethylphenyl)-1H-pyrazol-1-yl]-2-methylbenzyl}carbamate,

(4') inhibitors of the mitosis and cell division selected from the group consisting of (4.001) carbendazim, (4.002) diethofencarb, (4.003) ethaboxam, (4.004) fluopicolide, (4.005) fluopimomide, (4.006) metrafenone, (4.007) pencycuron, (4.008) pyridachlometyl, (4.009) pyriofenone (chlazafenone), (4.010) thiabendazole, (4.011) thiophanate-methyl, (4.012) zoxamide, (4.013) 3-chloro-5-(4-chlorophenyl)-4-(2,6-difluorophenyl)-6-methylpyridazine, (4.014) 3-chloro-5-(6-chloropyridin-3-yl)-6-methyl-4-(2,4,6-trifluorophenyl)pyridazine, (4.015) 4-(2-bromo-4-fluorophenyl)-N-(2,6-difluorophenyl)-1,3-dimethyl-1H-pyrazol-5-amine, (4.016) 4-(2-bromo-4-fluorophenyl)-N-(2-bromo-6-fluorophenyl)-1,3-dimethyl-1H-pyrazol-5-amine, (4.017) 4-(2-bromo-4-fluorophenyl)-N-(2-bromophenyl)-1,3-dimethyl-1H-pyrazol-5-amine, (4.018) 4-(2-bromo-4-fluorophenyl)-N-(2-chloro-6-fluorophenyl)-1,3-dimethyl-1H-pyrazol-5-amine, (4.019) 4-(2-bromo-4-fluorophenyl)-N-(2-chlorophenyl)-1,3-dimethyl-1H-pyrazol-5-amine, (4.020) 4-(2-bromo-4-fluorophenyl)-N-(2-fluorophenyl)-1,3-dimethyl-1H-pyrazol-5-amine, (4.021) 4-(2-chloro-4-fluorophenyl)-N-(2,6-difluorophenyl)-1,3-dimethyl-1H-pyrazol-5-amine, (4.022) 4-(2-chloro-4-fluorophenyl)-N-(2-chloro-6-fluorophenyl)-1,3-dimethyl-1H-pyrazol-5-amine, (4.023) 4-(2-chloro-4-fluorophenyl)-N-(2-chlorophenyl)-1,3-dimethyl-1H-pyrazol-5-amine, (4.024) 4-(2-chloro-4-fluorophenyl)-N-(2-fluorophenyl)-1,3-dimethyl-1H-pyrazol-5-amine, (4.025) 4-(4-chlorophenyl)-5-(2,6-difluorophenyl)-3,6-dimethylpyridazine, (4.026) N-(2-bromo-6-fluorophenyl)-4-(2-chloro-4-fluorophenyl)-1,3-dimethyl-1H-pyrazol-5-amine, (4.027) N-(2-bromophenyl)-4-(2-chloro-4-fluorophenyl)-1,3-dimethyl-1H-pyrazol-5-amine, (4.028) N-(4-chloro-2,6-difluorophenyl)-4-(2-chloro-4-fluorophenyl)-1,3-dimethyl-1H-pyrazol-5-amine,

(5') compounds capable of having a multisite action selected from the group consisting of (5.001) bordeaux mixture, (5.002) captafol, (5.003) captan, (5.004) chlorothalonil, (5.005) copper hydroxide, (5.006) copper naphthenate, (5.007) copper oxide, (5.008) copper oxychloride, (5.009) copper(2+) sulfate, (5.010) dithianon, (5.011) dodine, (5.012) folpet, (5.013) mancozeb, (5.014) maneb, (5.015) metiram, (5.016) metiram zinc, (5.017) oxine-copper, (5.018) propineb, (5.019) sulfur and sulfur preparations including calcium polysulfide, (5.020) thiram, (5.021) zineb, (5.022) ziram, (5.023) 6-ethyl-5,7-dioxo-6,7-dihydro-5H-pyrrolo[3',4':5,6][1,4]dithiino[2,3-c][1,2]thiazole-3-carbonitrile,

(6') compounds capable of inducing a host defense selected from the group consisting of 6.001) acibenzolar-S-methyl, (6.002) fosetyl-aluminium, (6.003) fosetyl-calcium, (6.004) fosetyl-sodium, (6.005) isotianil, (6.006) phosphorous acid and its salts, (6.007) probenazole, (6.008) tiadinil,

(7') inhibitors of the amino acid and/or protein biosynthesis selected from the group consisting of (7.001) cyprodinil, (7.002) kasugamycin, (7.003) kasugamycin hydrochloride hydrate, (7.004) oxytetracycline, (7.005) pyrimethanil,

(8') inhibitors of the ATP production selected from the group consisting of (8.001) silthiofam,

(9') inhibitors of the cell wall synthesis selected from the group consisting of (9.001) benthiavalicarb, (9.002)

dimethomorph, (9.003) flumorph, (9.004) iprovalicarb, (9.005) mandipropamid, (9.006) pyrimorph, (9.007) valifenalate, (9.008) (2E)-3-(4-tert-butylphenyl)-3-(2-chloropyridin-4-yl)-1-(morpholin-4-yl)prop-2-en-1-one, (9.009) (2Z)-3-(4-tert-butylphenyl)-3-(2-chloropyridin-4-yl)-1-(morpholin-4-yl)prop-2-en-1-one,

(10') inhibitors of the lipid and membrane synthesis selected from the group consisting of (10.001) fluoxapiprolin, (10.002) natamycin, (10.003) oxathiapiprolin, (10.004) propamocarb, (10.005) propamocarb hydrochloride, (10.006) propamocarb-fosetylate, (10.007) tolclofos-methyl, (10.008) 1-(4-{4-[(5R)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (10.009) 1-(4-{4-[(5S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (10.010) 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, (10.011) 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, (10.012) 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, (10.013) 2-{(5R)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (10.014) 2-{(5S)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (10.015) 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}phenyl methanesulfonate, (10.016) 3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (10.017) 9-fluoro-3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (10.018) 3-[2-(1-{[3,5-bis(difluoromethyl)-1H-pyrazol-1-yl]acetyl}piperidin-4-yl)-1,3-thiazol-4-yl]-1,5-dihydro-2,4-benzodioxepin-6-yl methanesulfonate, (10.019) 3-[2-(1-{[3,5-bis(difluoromethyl)-1H-pyrazol-1-yl]acetyl}piperidin-4-yl)-1,3-thiazol-4-yl]-9-fluoro-1,5-dihydro-2,4-benzodioxepin-6-yl methanesulfonate,

(11') inhibitors of the melanine biosynthesis selected from the group consisting of (11.001) tolprocarb, (11.002) tricyclazole,

(12') inhibitors of the nucleic acid synthesis selected from the group consisting of (12.001) benalaxyl, (12.002) benalaxyl-M (kiralaxyl), (12.003) metalaxyl, (12.004) metalaxyl-M (mefenoxam),

(13') inhibitors of the signal transduction selected from the group consisting of (13.001) fludioxonil, (13.002) iprodione, (13.003) procymidone, (13.004) proquinazid, (13.005) quinoxyfen, (13.006) vinclozolin,

(14') compounds capable of acting as uncoupler selected from the group consisting of (14.001) fluazinam, (14.002) meptyldinocap,

(15') other fungicides selected from the group consisting of (15.001) abscisic acid, (15.002) aminopyrifen, (15.003) benthiazole, (15.004) bethoxazin, (15.005) capsimycin, (15.006) carvone, (15.007) chinomethionat, (15.008) chloroinconazide, (15.009) cufraneb, (15.010) cyflufenamid, (15.011) cymoxanil, (15.012) cyprosulfamide, (15.013) dipymetitrone, (15.014) flutianil, (15.015) flufenoxadiazam, (15.016) flumetylsulforim, (15.017) ipflufenoquin, (15.018) methyl isothiocyanate, (15.019) mildiomycin, (15.020) nickel dimethyldithiocarbamate, (15.021) nitrothal-isopropyl, (15.022) oxyfenthiin, (15.023) pentachlorophenol and salts, (15.024) picarbutrazox, (15.025) quinofumelin, (15.026) D-tagatose, (15.027) tebufloquin, (15.028) tecloftalam, (15.029) tolnifanide, (15.030) 2-(6-benzylpyridin-2-yl)quinazoline, (15.031) 2-[6-(3-fluoro-4-methoxyphenyl)-5-methylpyridin-2-yl]quinazoline, (15.032) 2-phenylphenol and salts, (15.033) 4-amino-5-fluoropyrimidin-2-ol (tautomeric form: 4-amino-5-fluoropyrimidin-2(1H)-one), (15.034) 4-oxo-4-[(2-phenylethyl)amino]butanoic acid, (15.035) 5-amino-1,3,4-thiadiazole-2-thiol, (15.036) 5-chloro-N'-phenyl-N'-(prop-2-yn-1-yl)thiophene-2-sulfonohydrazide, (15.037) 5-fluoro-2-[(4-fluorobenzyl)oxy]pyrimidin-4-amine, (15.038) 5-fluoro-2-[(4-methylbenzyl)oxy]pyrimidin-4-amine, (15.039) but-3-yn-1-yl {6-[({[(Z)-(1-methyl-1H-tetrazol-5-yl)(phenyl)methylene]amino}oxy)methyl]pyridin-2-yl}carbamate, (15.040) ethyl (2Z)-3-amino-2-cyano-3-phenylacrylate, (15.041) phenazine-1-carboxylic acid, (15.042) propyl 3,4,5-trihydroxybenzoate, (15.043) quinolin-8-ol, (15.044) quinolin-8-ol sulfate (2:1), (15.045) 1-(4,5-dimethyl-1H-benzimidazol-1-yl)-4,4-difluoro-3,3-dimethyl-3,4-dihydroisoquinoline, (15.046) 1-(5-(fluoromethyl)-6-methyl-pyridin-3-yl)-4,4-difluoro-3,3-dimethyl-3,4-dihydroisoquinoline, (15.047) 1-(5,6-dimethylpyridin-3-yl)-4,4-difluoro-3,3-dimethyl-3,4-dihydroisoquinoline, (15.048) 1-(6-(difluoromethyl)-5-methoxy-pyridin-3-yl)-4,4-difluoro-3,3-dimethyl-3,4-dihydroisoquinoline, (15.049) 1-(6-(difluoromethyl)-5-methyl-pyridin-3-yl)-4,4-difluoro-3,3-dimethyl-3,4-dihydroisoquinoline, (15.050) 1-(6,7-dimethylpyrazolo[1,5-a]pyridin-3-yl)-4,4-difluoro-3,3-dimethyl-3,4-dihydroisoquinoline, (15.051) 2-{2-fluoro-6-[(8-fluoro-2-methylquinolin-3-yl)oxy]phenyl}propan-2-ol, (15.052) 3-(4,4,5-trifluoro-3,3-dimethyl-3,4-dihydroisoquinolin-1-yl)quinoline, (15.053) 3-(4,4-difluoro-3,3-dimethyl-3,4-dihydroisoquinolin-1-yl)-8-fluoroquinoline, (15.054) 3-(4,4-difluoro-5,5-dimethyl-4,5-dihydrothieno[2,3-c]pyridin-7-yl)quinoline, (15.055) 3-(5-fluoro-3,3,4,4-tetramethyl-3,4-dihydroisoquinolin-1-yl)quinoline, (15.056) 5-bromo-1-(5,6-dimethylpyridin-3-yl)-3,3-dimethyl-3,4-dihydroisoquinoline, (15.057) 8-fluoro-3-(5-fluoro-3,3,4,4-tetramethyl-3,4-dihydroisoquinolin-1-yl)-quinoline, (15.058) 8-fluoro-3-(5-fluoro-3,3-dimethyl-3,4-dihydroisoquinolin-1-yl)-quinoline, (15.059) 8-fluoro-N-(4,4,4-trifluoro-2-methyl-1-phenylbutan-2-yl)quinoline-3-carboxamide, (15.060) 8-fluoro-N-[(2S)-4,4,4-trifluoro-2-methyl-1-phenylbutan-2-yl]quinoline-3-carboxamide, (15.061) 9-fluoro-2,2-dimethyl-5-(quinolin-3-yl)-2,3-dihydro-1,4-benzoxazepine, (15.062) N-(2,4-dimethyl-1-phenylpentan-2-yl)-8-fluoroquinoline-3-carboxamide, (15.063) N-[(2S)-2,4-dimethyl-1-phenylpentan-2-yl]-8-fluoroquinoline-3-carboxamide, (15.063A) N-[(2R)-2,4-dimethyl-1-phenylpentan-2-yl]-8-fluoroquinoline-3-carboxamide, (15.063B) 2-benzyl-N-(8-fluoro-2-methyl-3-quinolyl)-2,4-dimethyl-pentanamide, (15.063C) (2S)-2-benzyl-N-(8-fluoro-2-methyl-3-quinolyl)-2,4-dimethyl-pentanamide, (15.063D) (2R)-2-benzyl-N-(8-fluoro-2-methyl-3-quinolyl)-2,4-dimethyl-pentanamide (15.064) 1,1-diethyl-3-[[4-[5-(trifluoromethyl)-1,2,4-oxadiazol-3-yl]phenyl]methyl]urea, (15.065) 1,3-dimethoxy-1-[[4-[5-(trifluoromethyl)-1,2,4-oxadiazol-3-yl]phenyl]methyl]urea, (15.066) 1-[[3-fluoro-4-(5-(trifluoromethyl)-1,2,4-oxadiazol-3-yl)phenyl]methyl]azepan-2-one, (15.067) 1-[[4-[5-(trifluoromethyl)-1,2,4-oxadiazol-3-yl]phenyl]methyl]piperidin-2-one, (15.068) 1-methoxy-1-methyl-3-[[4-[5-(trifluoromethyl)-1,2,4-oxadiazol-3-yl]phenyl]methyl]urea, (15.069) 1-methoxy-3-methyl-1-[[4-[5-(trifluoromethyl)-1,2,4-oxadiazol-3-yl]phenyl]methyl]urea, (15.070) 1-methoxy-3-methyl-1-[[4-[5-(trifluoromethyl)-1,2,4-oxadiazol-3-yl]phenyl]methyl]urea, (15.071) 2,2-difluoro-N-methyl-2-[4-[5-(trifluoromethyl)-1,2,4-oxadiazol-3-yl]phenyl]acetamide, (15.072) 3,3-dimethyl-1-[[4-[5-(trifluoromethyl)-1,2,4-oxadiazol-3-yl]phenyl]methyl]piperidin-2-one, (15.073) 3-ethyl-1-methoxy-1-[[4-[5-(trifluoromethyl)-1,2,4-oxadiazol-3-yl]phenyl]methyl]urea, (15.074) 4,4-dimethyl-1-[[4-[5-(trifluoromethyl)-1,2,4-oxadiazol-3-yl]phenyl]methyl]pyrrolidin-2-one, (15.075) 4,4-dimethyl-2-[[4-[5-(trifluoromethyl)-1,2,4-oxadiazol-3-yl]phenyl]methyl]isoxazolidin-3-one, (15.076) 4-[5-(trifluoromethyl)-1,2,4-oxadiazol-3-yl]phenyl dimethylcarbamate, (15.077) 5,5-dimethyl-2-[[4-[5-(trifluoromethyl)-1,2,4-oxadiazol-3-yl]phenyl]methyl]isoxazolidin-3-one, (15.078) 5-methyl-1-[[4-[5-(trifluoromethyl)-1,2,4-oxadiazol-3-yl]phenyl]methyl]pyrrolidin-2-one, (15.079) ethyl 1-{4-[5-(trifluoromethyl)-1,2,4-oxadiazol-3-yl]benzyl}-1H-pyrazole-4-carboxylate, (15.080) methyl {4-[5-(trifluoromethyl)-1,2,4-oxadiazol-3-yl]phenyl } carbamate, (15.081) N-(1-methylcyclopropyl)-4-[5-(trifluoromethyl)-1,2,4-oxadiazol-3-yl]benzamide, (15.082) N-(2,4-difluorophenyl)-4-[5-(trifluoromethyl)-1,2,4-oxadiazol-3-yl]benzamide, (15.083) N,2-dimethoxy-N-[[4-[5-(trifluoromethyl)-1,2,4-oxadiazol-3-yl]phenyl]methyl]propanamide, (15.084) N,N-dimethyl-1-{4-[5-(trifluoromethyl)-1,2,4-oxadiazol-3-yl]benzyl}-1H-1,2,4-triazol-3-amine, (15.085) N-[(E)-methoxyiminomethyl]-4-[5-(trifluoromethyl)-1,2,4-oxadiazol-3-yl]benzamide, (15.086) N-[(E)-N-methoxy-C-methyl-carbonimidoyl]-4-[5-(trifluoromethyl)-1,2,4-oxadiazol-3-yl]benzamide, (15.087) N-[(Z)-methoxyiminomethyl]-4-[5-(trifluoromethyl)-1,2,4-oxadiazol-3-yl]benzamide, (15.088) N-[(Z)-N-methoxy-C-methyl-carbonimidoyl]-4-[5-(trifluoromethyl)-1,2,4-oxadiazol-3-yl]benzamide, (15.089) N-[[2,3-difluoro-4-[5-(trifluoromethyl)-1,2,4-oxadiazol-3-yl]phenyl]methyl]-3,3,3-trifluoro-propanamide, (15.090) N-[[4-[5-(trifluoromethyl)-1,2,4-oxadiazol-3-yl]phenyl]methyl]propanamide, (15.091) N-[4-[5-(trifluoromethyl)-1,2,4-oxadiazol-3-yl]phenyl]cyclopropanecarboxamide, (15.092) N-{2,3-difluoro-4-[5-(trifluoromethyl)-1,2,4-oxadiazol-3-yl]benzyl} butanamide, (15.093) N-{4-[5-(trifluoromethyl)-1,2,4-oxadiazol-3-yl]benzyl}cyclopropanecarboxamide, (15.094) N-{4-[5-(trifluoromethyl)-1,2,4-oxadiazol-3-yl]phenyl}propanamide, (15.095) N-allyl-N-[[4-[5-(trifluoromethyl)-1,2,4-oxadiazol-3-yl]phenyl]methyl]acetamide, (15.096) N-allyl-N-[[4-[5-(trifluoromethyl)-1,2,4-oxadiazol-3-yl]phenyl]methyl]propanamide, (15.097) N-ethyl-2-methyl-N-[[4-[5-(trifluoromethyl)-1,2,4-oxadiazol-3-yl]phenyl]methyl]propanamide, (15.098) N-methoxy-N-[[4-[5-(trifluoromethyl)-1,2,4-oxadiazol-3-yl]phenyl]methyl]cyclopropanecarboxamide, (15.099) N-methyl-4-[5-(trifluoromethyl)-1,2,4-oxadiazol-3-yl]benzamide, (15.100) N-methyl-4-[5-(trifluoromethyl)-1,2,4-oxadiazol-3-yl]benzenecarbothioamide, (15.101) N-methyl-N-phenyl-4-[5-(trifluoromethyl)-1,2,4-oxadiazol-3-yl]benzamide,

wherein the at least one further active compound (C) is different from compound (A) and compound (B).

Compound (C) is preferably selected from:

(1.002) difenoconazole, (1.009) fluoxytioconazole, (1.015) ipconazole, (1.017) mefentrifluconazole, (1.024) prothioconazole, (1.026) spiroxamine, (1.027) tebuconazole,

(2.001) benzovindiflupyr, (2.002) bixafen, (2.007) fluindapyr, (2.008) fluopyram, (2.010) fluxapyroxad, (2.012) inpyrfluxam, (2.014) isoflucypram, (2.016) penflufen, (2.017) penthiopyrad, (2.018) pydiflumetofen, (2.021) sedaxane,

(3.003) azoxystrobin, (3.011) fenpicoxamid, (3.014) fluoxastrobin, (3.016) mandestrobin, (3.021) picoxystrobin, (3.022) pyraclostrobin, (3.025) trifloxystrobin,

(4.007) pencycuron, (4.009) pyriofenone (chlazafenone), (4.011) thiophanate-methyl,

(5.004) chlorothalonil, (5.011) dodine, (5.012) folpet, (5.013) mancozeb, (5.018) propineb,

(6.005) isotianil,

(7.005) pyrimethanil,

(12.003) metalaxyl, (12.004) metalaxyl-M (mefenoxam),

(13.001) fludioxonil, (13.004) proquinazid,

(14.001) fluazinam, (14.002) meptyldinocap,

(15.010) cyflufenamid, (15.025) quinofumelin.

Compound (C) is most preferably selected from:

(1.015) ipconazole, (1.017) mefentrifluconazole, (1.024) prothioconazole, (1.026) spiroxamine, (1.027) tebuconazole,

(2.002) bixafen, (2.008) fluopyram, (2.012) inpyrfluxam, (2.014) isoflucypram, (2.016) penflufen,

(3.011) fenpicoxamid, (3.014) fluoxastrobin, (3.025) trifloxystrobin,

(4.007) pencycuron,

(5.004) chlorothalonil, (5.013) mancozeb, (5.018) propineb,

(6.005) isotianil,

(12.003) metalaxyl, (12.004) metalaxyl-M (mefenoxam),

(13.001) fludioxonil, (13.004) proquinazid,

(15.010) cyflufenamid, (15.025) quinofumelin.

The compound combinations according to the invention may comprise 1, 2 or even more compounds (C). If compound (C) is present in the compound combinations according to the invention, the compound combinations according to the invention preferably comprise 1 or 2 compounds (C), more preferred just 1 compound (C).

In the following compound (B) and compound(s) (C) are also simply denoted by their respective number(s) as given above, e.g. (1.009) fluoxytioconazole is simply referred to as (1.009), (1.014) imazalil sulfate as (1.014), (2.005) cyclobutrifluram as (2.005) and so on.

Most preferred is the compound combination (I-1) + (3.017), i.e. the mixture of the compounds (I-1) methyl 2-[2-chloro-4-(4-chlorophenoxy)phenyl]-2-hydroxy-3-(1,2,4-triazol-1-yl)propanoate and (3.017) metarylpicoxamid.

In the combinations according to the invention compounds (A) and (B) can be present in a broad range of effective weight ratio of A:B, for example in a range of 5,000:1 to 1:5,000, 2,500:1 to 1:2,500, 2,000:1 to 1:2,000, 1,500:1 to 1:1,500, 1,000:1 to 1:1,000, 500:1 to 1:500, 400:1 to 1:400, 300:1 to 1:300, 250:1 to 1:250, 200:1 to 1:200, 150:1 to 1:150, 100:1 to 1:100, preferably in a weight ratio of 50:1 to 1:50, most preferably in a weight ratio of 20:1 to 1:20. Further ratios of A:B which can be used according to the present invention with increasing preference in the order given are: 95:1 to 1:95, 90:1 to 1:90, 85:1 to 1:85, 80:1 to 1:80, 75:1 to 1:75, 70:1 to 1:70, 65:1 to 1:65, 60:1 to 1:60, 55:1 to 1:55, 45:1 to 1:45, 40:1 to 1:40, 35:1 to 1:35, 30:1 to 1:30, 25:1 to 1:25, 15:1 to 1:15, 10:1 to 1:10, 5:1 to 1:5, 4:1 to 1:4, 3:1 to 1:3, 2:1 to 1:2.

Further ratios of A:B which can be used according to the present invention are: 5,000:1 to 1:1, 2,500:1 to 1:1, 2,000:1 to 1:1, 1,500:1 to 1:1, 1,000:1 to 1:1, 500:1 to 1:1, 250:1 to 1:1, 100:1 to 1:1, 95:1 to 1:1, 90:1 to 1:1, 85:1 to 1:1, 80:1 to 1:1, 75:1 to 1:1, 70:1 to 1:1, 65:1 to 1:1, 60:1 to 1:1, 55:1 to 1:1, 45:1 to 1:1, 40:1 to 1:1, 35:1 to 1:1, 30:1 to 1:1, 25:1 to 1:1, 15:1 to 1:1, 10:1 to 1:1, 5:1 to 1:1, 4:1 to 1:1, 3:1 to 1:1, 2:1 to 1:1.

Further ratios of A:B which can be used according to the present invention are: 1:1 to 1:5,000, 1:1 to 1:2,500, 1:1 to 1:2,000, 1:1 to 1:1,500, 1:1 to 1:1,000, 1:1 to 1:500, 1:1 to 1:250, 1:1 to 1:100, 1:1 to 1:95, 1:1 to 1:90, 1:1 to 1:85, 1:1 to

1:80, 1:1 to 1:75, 1:1 to 1:70, 1:1 to 1:65, 1:1 to 1:60, 1:1 to 1:55, 1:1 to 1:45, 1:1 to 1:40, 1:1 to 1:35, 1:1 to 1:30, 1:1 to 1:25, 1:1 to 1:15, 1:1 to 1:10, 1:1 to 1:5, 1:1 to 1:4, 1:1 to 1:3, 1:1 to 1:2.

In the combinations according to the invention that comprise as compound(s) (C) at least one further fungicidally active compound as defined above compounds (A) and (C) can be present in a broad range of effective weight ratio of A:C, for example in a range of 5,000:1 to 1:5,000, 2,500:1 to 1:2,500, 2,000:1 to 1:2,000, 1,500:1 to 1:1,500, 1,000:1 to 1:1,000, 500:1 to 1:500, 400:1 to 1:400, 300:1 to 1:300, 250:1 to 1:250, 200:1 to 1:200, 150:1 to 1:150, 100:1 to 1:100, preferably in a weight ratio of 50:1 to 1:50, most preferably in a weight ratio of 20:1 to 1:20. Further ratios of A:C which can be used according to the present invention with increasing preference in the order given are: 95:1 to 1:95, 90:1 to 1:90, 85:1 to 1:85, 80:1 to 1:80, 75:1 to 1:75, 70:1 to 1:70, 65:1 to 1:65, 60:1 to 1:60, 55:1 to 1:55, 45:1 to 1:45, 40:1 to 1:40, 35:1 to 1:35, 30:1 to 1:30, 25:1 to 1:25, 15:1 to 1:15, 10:1 to 1:10, 5:1 to 1:5, 4:1 to 1:4, 3:1 to 1:3, 2:1 to 1:2.

Further ratios of A:C which can be used according to the present invention are: 5,000:1 to 1:1, 2,500:1 to 1:1, 2,000:1 to 1:1, 1,500:1 to 1:1, 1,000:1 to 1:1, 500:1 to 1:1, 250:1 to 1:1, 100:1 to 1:1, 95:1 to 1:1, 90:1 to 1:1, 85:1 to 1:1, 80:1 to 1:1, 75:1 to 1:1, 70:1 to 1:1, 65:1 to 1:1, 60:1 to 1:1, 55:1 to 1:1, 45:1 to 1:1, 40:1 to 1:1, 35:1 to 1:1, 30:1 to 1:1, 25:1 to 1:1, 15:1 to 1:1, 10:1 to 1:1, 5:1 to 1:1, 4:1 to 1:1, 3:1 to 1:1, 2:1 to 1:1.

Further ratios of A:C which can be used according to the present invention are: 1:1 to 1:5,000, 1:1 to 1:2,500, 1:1 to 1:2,000, 1:1 to 1:1,500, 1:1 to 1:1,000, 1:1 to 1:500, 1:1 to 1:250, 1:1 to 1:100, 1:1 to 1:95, 1:1 to 1:90, 1:1 to 1:85, 1:1 to 1:80, 1:1 to 1:75, 1:1 to 1:70, 1:1 to 1:65, 1:1 to 1:60, 1:1 to 1:55, 1:1 to 1:45, 1:1 to 1:40, 1:1 to 1:35, 1:1 to 1:30, 1:1 to 1:25, 1:1 to 1:15, 1:1 to 1:10, 1:1 to 1:5, 1:1 to 1:4, 1:1 to 1:3, 1:1 to 1:2.

In the combinations according to the invention that comprise as compound(s) (C) at least one further fungicidally active compound as defined above, also the compounds (B) and (C) can be present in a broad range of effective weight ratio of B:C. The respective weight ratio automatically derives from the chosen weight ratios A:B and A:C.

If more than one, e.g. 2 or 3, compounds (C) are present, the weight ratios refer to the total amount of compound (C), i.e. to the sum of the amount of each compound (C) present in the combination.

*Isomers*

As already outlined above, compound (I-1) may be present in the form of different stereoisomers. Depending on the nature of the substituents of compounds (B) and (C), also compounds (B) and (C) may be present in the compound combinations of the invention in the form of different stereoisomers. These stereoisomers are, for example, enantiomers, diastereomers, atropisomers or geometric isomers. Accordingly, the invention encompasses both pure stereoisomers and any mixture of these isomers. Where a compound can be present in two or more tautomer forms in equilibrium, reference to the compound by means of one tautomeric description is to be considered to include all tautomer forms. Where a compound can be present in isomeric forms and/or tautomeric forms, such a compound is understood hereinabove and hereinbelow also to include, where applicable, corresponding isomeric and/or tautomeric forms or mixtures thereof, even when these are not specifically mentioned in each case.

*Salts / N-Oxides*

Depending on the nature of the substituents, the compounds present in the compound combinations of the invention may be present in the form of the free compound and/or a solvate and/or an agrochemically active salt and/or an N-oxide thereof.

Agrochemically active salts include acid addition salts of inorganic and organic acids well as salts of customary bases. Examples of inorganic acids are hydrohalic acids, such as hydrogen fluoride, hydrogen chloride, hydrogen bromide and hydrogen iodide, sulfuric acid, phosphoric acid and nitric acid, and acidic salts, such as sodium bisulfate and potassium bisulfate. Useful organic acids include, for example, formic acid, carbonic acid and alkanoic acids such as acetic acid, trifluoroacetic acid, trichloroacetic acid and propionic acid, and also glycolic acid, thiocyanic acid, lactic acid, succinic acid, citric acid, benzoic acid, cinnamic acid, oxalic acid, saturated or mono- or diunsaturated fatty acids having 6 to 20 carbon atoms, alkylsulphuric monoesters, alkylsulphonic acids (sulphonic acids having straight-chain or branched alkyl radicals having 1 to 20 carbon atoms), arylsulphonic acids or aryldisulphonic acids (aromatic radicals, such as phenyl and naphthyl, which bear one or two sulphonic acid groups), alkylphosphonic acids (phosphonic acids having straight-chain or branched alkyl radicals having 1 to 20 carbon atoms), arylphosphonic acids or aryldiphosphonic acids (aromatic radicals, such as phenyl and naphthyl, which bear one or two phosphonic acid radicals), where the alkyl and aryl radicals may bear further substituents, for example p-toluenesulphonic acid, salicylic acid, p-aminosalicylic acid, 2-phenoxybenzoic acid, 2-acetoxybenzoic acid.

Solvates of the compounds present in the compound combinations of the invention or their salts are stoichiometric compositions of the compounds with solvents.

N-oxides of compounds present in the compound combination of the invention or intermediates thereof can be obtained in a simple manner by customary processes, for example by N-oxidation with hydrogen peroxide ($H_2O_2$),

peracids, for example peroxy sulfuric acid or peroxy carboxylic acids, such as meta-chloroperoxybenzoic acid or peroxymonosulfuric acid (Caro's acid).

E.g. the corresponding N-oxides may be prepared starting from the respective compounds using conventional oxidation methods, e.g. by treating the compounds with an organic peracid such as metachloroperbenzoic acid (e.g. WO-A 2003/64572 or J. Med. Chem. 38 (11), 1892-1903, 1995); or with inorganic oxidizing agents such as hydrogen peroxide (e.g. J. Heterocyc. Chem. 18 (7), 1305-1308, 1981) or oxone (e.g. J. Am. Chem. Soc. 123 (25), 5962-5973, 2001). The oxidation may lead to pure mono-N-oxides or to a mixture of different N-oxides, which can be separated by conventional methods such as chromatography.

*Crystalline Form*

The compounds present in the compound combinations of the invention may exist in multiple crystalline and/or amorphous forms. Crystalline forms include unsolvated crystalline forms, solvates and hydrates.

*Formulations*

The present invention further relates to compositions for controlling unwanted microorganisms, comprising a compound combination according to the invention. The compositions may be applied to the microorganisms and/or their habitat.

The composition comprises a compound combination of the invention and at least one agriculturally suitable auxiliary, e.g. carrier(s) and/or surfactant(s).

A carrier is a solid or liquid, natural or synthetic, organic or inorganic substance that is generally inert. The carrier generally improves the application of the active compounds, for instance, to plants, plants parts or seeds. Examples of suitable *solid carriers* include, but are not limited to, ammonium salts, natural rock flours, such as kaolins, clays, talc, chalk, quartz, attapulgite, montmorillonite and diatomaceous earth, and synthetic rock flours, such as finely divided silica, alumina and silicates. Examples of typically useful solid carriers for preparing granules include, but are not limited to crushed and fractionated natural rocks such as calcite, marble, pumice, sepiolite and dolomite, synthetic granules of inorganic and organic flours and granules of organic material such as paper, sawdust, coconut shells, maize cobs and tobacco stalks. Examples of suitable *liquid carriers* include, but are not limited to, water, organic solvents and combinations thereof. Examples of suitable *solvents* include polar and nonpolar organic chemical liquids, for example from the classes of aromatic and nonaromatic hydrocarbons (such as cyclohexane, paraffins, alkylbenzenes, xylene, toluene alkylnaphthalenes, chlorinated aromatics or chlorinated aliphatic hydrocarbons such as chlorobenzenes, chloroethylenes or methylene chloride), alcohols and polyols (which may optionally also be substituted, etherified and/or esterified, such as butanol or glycol), ketones (such as acetone, methyl ethyl ketone, methyl isobutyl ketone or cyclohexanone), esters (including fats and oils) and (poly)ethers, unsubstituted and substituted amines, amides (such as dimethylformamide), lactams (such as N-alkylpyrrolidones) and lactones, sulfones and sulfoxides (such as dimethyl sulfoxide). The carrier may also be a liquefied gaseous extender, i.e. liquid which is gaseous at standard temperature and under standard pressure, for example aerosol propellants such as halohydrocarbons, butane, propane, nitrogen and carbon dioxide. The amount of carrier typically ranges from 1 to 99.99%, preferably from 5 to 99.9%, more preferably from 10 to 99.5%, and most preferably from 20 to 99% by weight of the composition.

The surfactant can be an ionic (cationic or anionic) or non-ionic surfactant, such as ionic or non-ionic emulsifier(s), foam former(s), dispersant(s), wetting agent(s) and any mixtures thereof. Examples of suitable surfactants include, but are not limited to, salts of polyacrylic acid, salts of lignosulfonic acid, salts of phenolsulfonic acid or naphthalenesulfonic acid, polycondensates of ethylene and/or propylene oxide with fatty alcohols, fatty acids or fatty amines (polyoxyethylene fatty acid esters, polyoxyethylene fatty alcohol ethers, for example alkylaryl polyglycol ethers), substituted phenols (preferably alkylphenols or arylphenols), salts of sulfosuccinic esters, taurine derivatives (preferably alkyl taurates), phosphoric esters of polyethoxylated alcohols or phenols, fatty esters of polyols and derivatives of compounds containing sulfates, sulfonates, phosphates (for example, alkylsulfonates, alkyl sulfates, arylsulfonates) and protein hydrolysates, lignosulfite waste liquors and methylcellulose. A surfactant is typically used when a compound of the compound combination of the invention and/or the carrier is insoluble in water and the application is made with water. If present, the amount of surfactants typically ranges from 5 to 40% by weight based on the total weight of the composition.

Further examples of suitable auxiliaries include water repellents, siccatives, binders (adhesive, tackifier, fixing agent, such as carboxymethylcellulose, natural and synthetic polymers in the form of powders, granules or latices, such as gum arabic, polyvinyl alcohol and polyvinyl acetate, natural phospholipids such as cephalins and lecithins and synthetic phospholipids, polyvinylpyrrolidone and tylose), thickeners, stabilizers (e.g. cold stabilizers, preservatives, antioxidants, light stabilizers, or other agents which improve chemical and/or physical stability), dyes or pigments (such as inorganic pigments, e.g. iron oxide, titanium oxide and Prussian Blue ; organic dyes, e.g. alizarin, azo and metal phthalocyanine dyes), antifoams (e.g. silicone antifoams and magnesium stearate), preservatives (e.g. dichlorophene and benzyl alcohol

hemiformal), secondary thickeners (cellulose derivatives, acrylic acid derivatives, xanthan, modified clays and finely divided silica), stickers, gibberellins and processing auxiliaries, mineral and vegetable oils, perfumes, waxes, nutrients (including trace nutrients, such as salts of iron, manganese, boron, copper, cobalt, molybdenum and zinc), protective colloids, thixotropic substances, penetrants, sequestering agents and complex formers.

The choice of the auxiliaries is related to the intended mode of application of the compound combination of the invention and/or on the physical properties. Furthermore, the auxiliaries may be chosen to impart particular properties (technical, physical and/or biological properties) to the formulations/compositions or use forms prepared therefrom. The choice of auxiliaries may allow customizing the compositions to specific needs.

The composition may be in any customary form, such as solutions (e.g aqueous solutions), emulsions, wettable powders, water- and oil-based suspensions, powders, dusts, pastes, soluble powders, soluble granules, granules for broadcasting, suspoemulsion concentrates, natural or synthetic products impregnated with the compound combination of the invention, fertilizers and also microencapsulations in polymeric substances. The compound combination of the invention may be present in a suspended, emulsified or dissolved form.

The formulations mentioned can be prepared in a manner known per se, for example by mixing the active ingredients with at least one auxiliary.

The composition may be provided to the end user as ready-for-use formulation, i.e. the compositions may be directly applied to the plants or seeds by a suitable device, such as a spraying or dusting device. Alternatively, the compositions may be provided to the end user in the form of concentrates which have to be diluted, preferably with water, prior to use.

The formulations contain generally between 0.01 and 99% by weight, from 0.05 and 98% by weight, preferably between 0.1 and 95% by weight, more preferably between 0.5 and 90%, most preferably from 1 to 80% by weight of the compound combination of the present invention. If the composition comprises two or more active ingredients, the outlined ranges refer to the total amount of the compound combination of the present invention.

The formulations described above can be used for controlling unwanted microorganisms by applying it to the microorganisms and/or in their habitat.

In one particular embodiment of the invention, the compound combination is provided in sprayable form to allow spray application. In this embodiment, the compound combination according to the invention is provided as composition / formulation, comprising the active ingredients and at least one suitable liquid carrier.

Suitable liquid carriers are preferably selected from water, organic solvents and combinations thereof. More preferred, the liquid carrier is water or a mixture of water and an organic solvent.

Preferred suitable organic solvents are those already described above.

The amount of liquid carrier typically ranges from 1 to 99.99%, preferably from 5 to 99.9%, more preferably from 10 to 99.5%, and most preferably from 20 to 99% by weight of the composition.

Preferably, the sprayable composition further comprises at least one surfactant. Suitable surfactants are disclosed above. It may also comprise at least one further auxiliary as outlined above.

Preferably, the sprayable composition is provided as an emulsifiable concentrate or suspension concentrate, more preferably an emulsifiable concentrate comprising the active ingredients in a total amount of 20 to 400 g/L, preferably 40 to 200 g/L, or a suspension concentrate comprising the active ingredients in a total amount of 50 to 500 g/L, preferably 100 to 400 g/L.

Preparation of said concentrates is well known to those skilled in the art. For example, emulsifiable concentrates (EC) can be prepared by dissolving the desired amount of active ingredients, e.g. 20 to 400 g per litre concentrate, and 50 to 100 g per litre concentrate of at least one surfactant in a water-insoluble organic solvent, e.g. an aromatic hydrocarbon, or a water-soluble organic solvent, e.g. N-methyl-2-pyrrolidone (NMP), dimethylsulfoxide (DMSO), γ-butyrolactone. Suspension concentrates (SC) can be prepared by mixing the desired amount of active ingredients, e.g. 50 to 500 g per litre concentrate, 20 to 100 g per litre concentrate of at least one surfactant and 1 to 20 g per litre concentrate of at least one binder and/or secondary thickener and suspending this mixture in water.

Preferably, before applying said concentrates to the plant or a part thereof, the concentrate is diluted with water. More preferably, the emulsifiable concentrate or suspension concentrate is mixed with water in such amount to arrive at a total concentration of active ingredients in the resulting mixture of 0.1 to 5, preferably 0.2 to 2, more preferred 0.25 to 1 g/l.

*Further active ingredients*

Compound combinations according to the invention can be used as such or in compositions / formulations thereof and can be mixed with further known active ingredients, for example bactericides, acaricides, nematicides or insecticides, in order thus to broaden, for example, the activity spectrum or to prevent development of resistance.

Useful mixing partners include, for example, insecticides, acaricides, nematicides and bactericides (see also Pesticide Manual, 14th ed.).

A mixture with other known active ingredients, such as herbicides, or with fertilizers and growth regulators,

safeners and/or semiochemicals, is also possible.

"Insecticides" as well as the term "insecticidal" refers to the ability of a substance to increase mortality or inhibit growth rate of insects. As used herein, the term "insects" comprises all organisms in the class "Insecta".

"Nematicide" and "nematicidal" refers to the ability of a substance to increase mortality or inhibit the growth rate of nematodes. In general, the term "nematode" comprises eggs, larvae, juvenile and mature forms of said organism.

"Acaricide" and "acaricidal" refers to the ability of a substance to increase mortality or inhibit growth rate of ectoparasites belonging to the class Arachnida, sub-class Acari.

Examples of insecticides, acaricides and nematicides, respectively, which could be mixed with the compound combination of the invention are:

(1) Acetylcholinesterase (AChE) inhibitors, preferably carbamates selected from alanycarb, aldicarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, triazamate, trimethacarb, XMC and xylylcarb, or organophosphates selected from acephate, azamethiphos, azinphos-ethyl, azinphos-methyl, cadusafos, chlorethoxyfos, chlorfenvinphos, chlormephos, chlorpyrifos-methyl, coumaphos, cyanophos, demeton-S-methyl, diazinon, dichlorvos/DDVP, dicrotophos, dimethoate, dimethylvinphos, disulfoton, EPN, ethion, ethoprophos, famphur, fenamiphos, fenitrothion, fenthion, fosthiazate, heptenophos, imicyafos, isofenphos, isopropyl O-(methoxyaminothiophosphoryl) salicylate, isoxathion, malathion, mecarbam, methamidophos, methidathion, mevinphos, monocrotophos, naled, omethoate, oxydemeton-methyl, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, triclorfon and vamidothion.

(2) GABA-gated chloride channel blockers, preferably cyclodiene-organochlorines selected from chlordane and endosulfan, or phenylpyrazoles (fiproles) selected from ethiprole and fipronil.

(3) Sodium channel modulators, preferably pyrethroids selected from acrinathrin, allethrin, d-cis-trans allethrin, d-trans allethrin, bifenthrin, bioallethrin, bioallethrin s-cyclopentenyl isomer, bioresmethrin, cycloprothrin, cyfluthrin, beta-cyfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin [(1R)-trans-isomer], deltamethrin, empenthrin [(EZ)-(1R)-isomer], esfenvalerate, etofenprox, fenpropathrin, fenvalerate, flucythrinate, flumethrin, tau-fluvalinate, halfenprox, imiprothrin, kadethrin, momfluorothrin, permethrin, phenothrin [(1R)-trans-isomer], prallethrin, pyrethrins (pyrethrum), resmethrin, silafluofen, tefluthrin, tetramethrin, tetramethrin [(1R)- isomer)], tralomethrin and transfluthrin, or DDT or methoxychlor.

(4) Nicotinic acetylcholine receptor (nAChR) competitive modulators, preferably neonicotinoids selected from acetamiprid, clothianidin, dinotefuran, imidacloprid, nitenpyram, thiacloprid and thiamethoxam, or nicotine, or sulfoximines selected from sulfoxaflor, or butenolids selected from flupyradifurone, or mesoionics selected from triflumezopyrim.

(5) Nicotinic acetylcholine receptor (nAChR) allosteric modulators (Site I), preferably spinosyns selected from spinetoram and spinosad.

(6) Glutamate-gated chloride channel (GluCl) allosteric modulators, preferably avermectins/milbemycins selected from abamectin, emamectin benzoate, lepimectin and milbemectin.

(7) Juvenile hormone mimics, preferably juvenile hormone analogues selected from hydroprene, kinoprene and methoprene, or fenoxycarb or pyriproxyfen.

(8) Miscellaneous non-specific (multi-site) inhibitors, preferably alkyl halides selected from methyl bromide and other alkyl halides, or chloropicrine or sulphuryl fluoride or borax or tartar emetic or methyl isocyanate generators selected from diazomet and metam.

(9) Chordotonal organ TRPV channel modulators, preferably pyridine azomethanes selected from pymetrozine and pyrifluquinazone, or pyropenes selected from afidopyropen.

(10) Mite growth inhibitors affecting CHS1 selected from clofentezine, hexythiazox, diflovidazin and etoxazole.

(11) Microbial disruptors of the insect gut membranes selected from *Bacillus thuringiensis* subspecies *israelensis, Bacillus sphaericus, Bacillus thuringiensis* subspecies *aizawai, Bacillus thuringiensis* subspecies *kurstaki, Bacillus thuringiensis* subspecies *tenebrionis,* and *B.t.* plant proteins selected from Cry1Ab, Cry1Ac, Cry1Fa, Cry1A.105, Cry2Ab, Vip3A, mCry3A, Cry3Ab, Cry3Bb and Cry34Ab1/35Ab1.

(12) Inhibitors of mitochondrial ATP synthase, preferably ATP disruptors selected from diafenthiuron, or organotin compounds selected from azocyclotin, cyhexatin and fenbutatin oxide, or propargite or tetradifon.

(13) Uncouplers of oxidative phosphorylation via disruption of the proton gradient selected from chlorfenapyr, DNOC and sulfluramid.

(14) Nicotinic acetylcholine receptor channel blockers selected from bensultap, cartap hydrochloride, thiocylam and thiosultap-sodium.

(15) Inhibitors of chitin biosynthesis affecting CHS1, preferably benzoylureas selected from bistrifluron, chlorfluazuron, diflubenzuron, flucycloxuron, flufenoxuron, hexaflumuron, lufenuron, novaluron, noviflumuron, teflubenzuron and triflumuron.

(16) Inhibitors of chitin biosynthesis, type 1 selected from buprofezin.

(17) Moulting disruptor (in particular for Diptera, i.e. dipterans) selected from cyromazine.

(18) Ecdysone receptor agonists, preferably diacylhydrazines selected from chromafenozide, halofenozide, methoxyfenozide and tebufenozide.

(19) Octopamine receptor agonists selected from amitraz.

(20) Mitochondrial complex III electron transport inhibitors selected from hydramethylnone, acequinocyl, fluacrypyrim and bifenazate.

(21) Mitochondrial complex I electron transport inhibitors, preferably METI acaricides and insecticides selected from fenazaquin, fenpyroximate, pyrimidifen, pyridaben, tebufenpyrad and tolfenpyrad, or rotenone (Derris).

(22) Voltage-dependent sodium channel blockers, preferably oxadiazines selected from indoxacarb, or semicarbazones selected from metaflumizone.

(23) Inhibitors of acetyl CoA carboxylase, preferably tetronic and tetramic acid derivatives selected from spirodiclofen, spiromesifen, spiropidion and spirotetramat.

(24) Mitochondrial complex IV electron transport inhibitors, preferably phosphides selected from aluminium phosphide, calcium phosphide, phosphine and zinc phosphide, or cyanides selected from calcium cyanide, potassium cyanide and sodium cyanide.

(25) Mitochondrial complex II electron transport inhibitors, preferably *beta*-ketonitrile derivatives selected from cyenopyrafen and cyflumetofen, or carboxanilides selected from pyflubumide.

(26) Ryanodine receptor modulators, preferably diamides selected from chlorantraniliprole, cyantraniliprole, cyclaniliprole, flubendiamide and tetraniliprole.

(27) Chordotonal organ Modulators (with undefined target site) selected from flonicamid.

(28) GABA-gated chlorid channel allosteric modulators, preferably meta-diamides selected from broflanilide, or isoxazoles selected from fluxametamide.

(29) Baculoviruses, preferably Granuloviruses (GVs) selected from *Cydia pomonella* GV and *Thaumatotibia leucotreta* (GV), or Nucleopolyhedroviruses (NPVs) selected from *Anticarsia gemmatalis* MNPV, Flucypyriprole and *Helicoverpa armigera* NPV.

(30) Nicotinic acetylcholine receptor allosteric modulators (Site II) selected from GS-omega/kappa HXTX-Hvla peptide.

(31) further active compounds selected from Acynonapyr, Afoxolaner, Azadirachtin, Benclothiaz, Benzoximate, Benzpyrimoxan, Bromopropylate, Chinomethionat, Chloroprallethrin, Cryolite, Cyclobutrifluram, Cycloxaprid, Cyetpyrafen, Cyhalodiamide, Cyproflanilide (CAS 2375110-88-4), Dicloromezotiaz, Dicofol, Dimpropyridaz, epsilon-Metofluthrin, epsilon-Momfluthrin, Flometoquin, Fluazaindolizine, Flucypyriprole (CAS 1771741-86-6), Fluensulfone, Flufenerim, Flufenoxystrobin, Flufiprole, Fluhexafon, Fluopyram, Flupyrimin, Fluralaner, Fufenozide, Flupentiofenox, Guadipyr, Heptafluthrin, Imidaclothiz, Iprodione, Isocycloseram, kappa-Bifenthrin, kappa-Tefluthrin, Lotilaner, Meperfluthrin, Nicofluprole (CAS 1771741-86-6), Oxazosulfyl, Paichongding, Pyridalyl, Pyrifluquinazon, Pyriminostrobin, Sarolaner, Spidoxamat, Spirobudiclofen, Tetramethylfluthrin, Tetrachlorantraniliprole, Tigolaner, Tioxazafen, Thiofluoximate, Tyclopyrazoflor, Iodomethane; furthermore preparations based on *Bacillus firmus* (I-1582, Votivo) and azadirachtin (BioNeem), and also the following compounds: 1-{2-fluoro-4-methyl-5-[(2,2,2-trifluoroethyl)sulphinyl]phenyl}-3-(trifluoromethyl)-1H-1,2,4-triazole-5-amine (known from WO2006/043635) (CAS 885026-50-6), 2-chloro-N-[2-{1-[(2E)-3-(4-chlorophenyl)prop-2-en-1-yl]piperidin-4-yl}-4-(trifluoromethyl)phenyl]isonicotinamide (known from WO2006/003494) (CAS 872999-66-1), 3-(4-chloro-2,6-dimethylphenyl)-4-hydroxy-8-methoxy-1,8-diazaspiro[4.5]dec-3-en-2-one (known from WO 2010052161) (CAS 1225292-17-0), 3-(4-chloro-2,6-dimethylphenyl)-8-methoxy-2-oxo-1,8-diazaspiro[4.5]dec-3-en-4-yl ethyl carbonate (known from EP2647626) (CAS 1440516-42-6), PF1364 (known from JP2010/018586) (CAS 1204776-60-2), (3E)-3-[1-[(6-chloro-3-pyridyl)methyl]-2-pyridylidene]-1,1,1-trifluoro-propan-2-one (known from WO2013/144213) (CAS 1461743-15-6), N-[3-(benzylcarbamoyl)-4-chlorophenyl]-1-methyl-3-(pentafluoroethyl)-4-(trifluoromethyl)-1H-pyrazole-5-carboxamide (known from WO2010/051926) (CAS 1226889-14-0), 5-bromo-4-chloro-N-[4-chloro-2-methyl-6-(methylcarbamoyl)phenyl]-2-(3-chloro-2-pyridyl)pyrazole-3-carboxamide (known from CN103232431) (CAS 1449220-44-3), 4-[5-(3,5-dichlorophenyl)-4,5-dihydro-5-(trifluoromethyl)-3-isoxazolyl]-2-methyl-*N*-(*cis*-1-oxido-3-thietanyl)-benzamide, 4-[5-(3,5-dichlorophenyl)-4,5-dihydro-5-(trifluoromethyl)-3-isoxazolyl]-2-methyl-*N*-(*trans*-1-oxido-3-thietanyl)-benzamide and 4-[(5*S*)-5-(3,5-dichlorophenyl)-4,5-dihydro-5-(trifluoromethyl)-3-isoxazolyl]-2-methyl-*N*-(*cis*-1-oxido-3-thietanyl) benzamide (known from WO 2013/050317 A1) (CAS 1332628-83-7), *N*-[3-chloro-1-(3-pyridinyl)-1*H*-pyrazol-4-yl]-*N*-ethyl-3-[(3,3,3-trifluoropropyl)sulfinyl]-propanamide, (+)-*N*-[3-chloro-1-(3-pyridinyl)-1*H*-pyrazol-4-yl]-*N*-ethyl-3-[(3,3,3-trifluoropropyl)sulfinyl]-propanamide and (-)-*N*-[3-chloro-1-(3-pyridinyl)-1*H*-pyrazol-4-yl]-*N*-ethyl-3-[(3,3,3-trifluoropropyl)sulfinyl]-propanamide (known from WO 2013/162715 A2, WO 2013/162716 A2, US 2014/0213448 A1) (CAS 1477923-37-7), 5-[[(2*E*)-3-chloro-2-propen-1-yl]amino]-1-[2,6-dichloro-4-(trifluoromethyl)phenyl]-4-[(trifluoromethyl)sulfinyl]-1*H*-pyrazole-3-carbonitrile (known from CN 101337937 A) (CAS 1105672-77-2), 3-bromo-*N*-[4-chloro-2-methyl-6-[(methylamino)thioxomethyl] phenyl]-1-(3-chloro-2-pyridinyl)-1*H*-pyrazole-5-carboxamide, (Liudaibenjiaxuanan, known from CN 103109816 A) (CAS 1232543-85-9); *N*-[4-chloro-2-[[(1,1-dimethylethyl)amino]carbonyl]-6-methylphenyl]-1-(3-chloro-2-pyridinyl)-3-(fluoromethoxy)-1*H*-pyrazole-5-carboxamide (known from WO 2012/034403 A1) (CAS 1268277-22-0), *N*-[2-(5-amino-1,3,4-thiadiazol-2-yl)-4-chloro-6-methylphenyl]-3-bromo-1-(3-chloro-2-pyridinyl)-1*H*-pyrazole-5-carboxamide (known from WO 2011/085575 A1) (CAS 1233882-22-8), 4-[3-[2,6-dichloro-4-[(3,3-dichloro-2-propen-1-yl)oxy]phenoxy]propoxy]-2-methoxy-6-(trifluoromethyl)-pyrimidine (known from CN 101337940 A) (CAS 1108184-52-6); (2*E*)- and 2(*Z*)-2-[2-(4-cyanophenyl)-1-[3-(trifluoromethyl)phenyl]ethylidene]-*N*-[4-(difluoromethoxy)phenyl]-hydrazinecarboxamide (known from CN 101715774 A) (CAS 1232543-85-9); 3-(2,2-dichloroethenyl)-2,2-dimethyl-4-(1*H*-benzimidazol-2-yl)phenyl-cyclopropanecarboxylic acid ester (known from CN 103524422 A) (CAS 1542271-46-4); (4a*S*)-7-chloro-2,5-dihydro-2-[[(methoxycarbonyl) [4-[(trifluoromethyl)thio]phenyl]amino]carbonyl]-indeno[1,2-*e*][1,3,4]oxadiazine-4a(3*H*)-carboxylic acid methyl ester (known from CN 102391261 A) (CAS 1370358-69-2); 6-deoxy-3-*O*-ethyl-2,4-di-*O*-methyl-, 1-[*N*-[4-[1-[4-(1,1,2,2,2-pentafluoroethoxy)phenyl]-1*H*-1,2,4-triazol-3-yl]phenyl]carbamate]-$\alpha$-L-mannopyranose (known from US 2014/0275503 A1) (CAS 1181213-14-8); 8-(2-cyclopropylmethoxy-4-trifluoromethyl-phenoxy)-3-(6-trifluoromethyl-pyridazin-3-yl)-3-aza-bicyclo[3.2.1 ]octane (CAS 1253850-56-4), (8-*anti*)-8-(2-cyclopropylmethoxy-4-trifluoromethyl-phenoxy)-3-(6-trifluoromethyl-pyridazin-3-yl)-3-aza-bicyclo[3.2.1 ]octane (CAS 933798-27-7), (8-*syn*)-8-(2-cyclopropylmethoxy-4-trifluoromethyl-phenoxy)-3-(6-trifluoromethyl-pyridazin-3-yl)-3-aza-bicyclo[3.2.1]octane (known from WO 2007040280 A1, WO 2007040282 A1) (CAS 934001-66-8), N-[4-(aminothioxomethyl)-2-methyl-6-[(methylamino)carbonyl]phenyl]-3-bromo-1-(3-chloro-2-pyridinyl)-1*H*-pyrazole-5-carboxamide (known from CN 103265527 A) (CAS 1452877-50-7), 3-(4-chloro-2,6-dimethylphenyl)-8-methoxy-1-methyl-1,8-diazaspiro[4.5]decane-2,4-dione (known from WO 2014/187846 A1) (CAS 1638765-58-8), 3-(4-chloro-2, 6-dimethylphenyl)-8-methoxy-1-methyl-2-oxo-1,8-diazaspiro[4.5]dec-3-en-4-yl-carbonic acid ethyl ester (known from WO 2010/066780 A1, WO 2011151146 A1) (CAS 1229023-00-0), *N*-[1-(2,6-difluorophenyl) -1H-pyrazol-3-yl]-2-(trifluoromethyl)benzamide (known from WO 2014/053450 A1) (CAS 1594624-87-9), **N**-[2-(2,6-difluorophenyl)-2**H**-1,2,3-triazol-4-yl]-2-(trifluoromethyl)benzamide (known from WO 2014/053450 A1) (CAS 1594637-65-6), N-[1-(3,5-difluoro-2-pyridinyl)-1H-pyrazol-3-yl]-2-(trifluoromethyl)benzamide (known from WO 2014/053450 A1) (CAS 1594626-19-3), (3*R*)-3-(2-chloro-5-thiazolyl)-2,3-dihydro-8-methyl-5,7-dioxo-6-phenyl-5H-thiazolo[3,2-a]pyrimidinium inner salt (known from WO 2018/177970 A1) (CAS 2246757-58-2); 3-(2-chloro-5-thiazolyl)-2,3-dihydro-8-methyl-5,7-dioxo-6-phenyl-5H-thiazolo[3,2-a]pyrimidinium inner salt (known from WO 2018/177970 A1) (CAS 2246757-56-0); *N*-[3-chloro-1-(3-pyridinyl)-1H-pyrazol-4-yl]-2-(methylsulfonyl)-propanamide (known from WO 2019/236274 A1) (CAS 2396747-83-2), N-[2-bromo-4-[1,2,2,2-tetrafluoro-1-(trifluoromethyl) ethyl]-6-(trifluoromethyl)phenyl]-2-fluoro-3-[(4-fluorobenzoyl)amino]-benzamide (known from WO 2019059412 A1) (CAS 1207977-87-4), 3-Bromo-1-(3-chloro-2-pyridinyl)-N-[4,6-dichloro-3-fluoro-2-[(methylamino)carbonyl]phenyl]-1H-Pyrazole-5-carboxamide (Fluchlorodiamide; known from CN110835330 A, CN106977494 A) (CAS: 2129147-03-9).

Examples of nematicides which could be mixed with the compound combination and the composition of the invention are:

(Group N-1) Acetylcholinesterase (AChE) inhibitors, preferably (N-1A) carbamates selected from aldicarb, benfuracarb, carbofuran, carbosulfan and thiodicarb, or (N-1B) organophosphates selected from cadusafos, ethoprofos, fenamiphos, fosthiazate, imicyafos, phorate and terbufos.

(Group N-2) Glutamate-gated chloride channel (GluCl) allosteric modulators, preferably avermectins selected from abamectin and emamectin benzoate.

(Group N-3) Mitochondrial complex II electron transport inhibitors, especially inhibitors of succinate-coenzyme Q reductase, preferably pyridinylmethyl-benzamides selected from fluopyram.

(Group N-4) Lipid synthesis/growth regulation modulators, especially inhibitors of acetyl CoA carboxylase, preferably tetronic and tetramic acid derivatives selected from spirotetramat.

(Group N-UN) Compounds of unknown or uncertain mode of action with various chemistries, selected from fluensulfone, fluazaindolizine, furfural, iprodione and tioxazafen.

(Group N-UNX) Compounds of unknown or uncertain mode of action: Presumed multi-site inhibitors, preferably volatile sulphur generators selected from carbon disulphide and dimethyl disulphide (DMDS), or carbon disulphide liberators selected from sodium tetrathiocarbonate, or alkyl halides selected from methyl bromide and methyl iodide (iodomethane), or halogenated hydrocarbons selected from 1,2-dibromo-3-chloropropane (DBCP) and 1,3-dichloropropene, or chloropicrin, or methyl isothiocyanate generators selected from allyl isothiocyanate, diazomet, metam potassium and metam sodium.

(Group N-UNB) Bacterial agents (non-Bt) of unknown or uncertain mode of action, preferably bacterium or bacterium-derived, selected from *Burkholderia* spp., e.g. *rinojensis* A396, *Bacillus* spp., e.g. *firmus, licheniformis, amyloliquefaciens* or *subtilis, Pasteuria* spp., e.g. *penetrans* or *nishizawae, Pseudomonas* spp., e.g. *chlororaphis* or *fluorescens,* and *Streptomyces* spp., e.g. *lydicus, dicklowii* or *albogriseolus.*

(Group N-UNF) Fungal agents of unknown or uncertain mode of action, preferably fungus or fungus-derived, selected from *Actinomyces* spp., e.g. *streptococcus, Arthrobotrys* spp., e.g. *oligospora, Aspergillus* spp., e.g. *niger, Muscodor* spp., e.g. *albus, Myrothecium* spp., e.g. *verrucaria, Paecilomyces* spp., e.g. *lilacinus* (*Purpureocillium lilacinum*), *carneus* or *fumosoroseus, Pochonia* spp., e.g. *chlamydosporia,* and *Trichoderma* spp., e.g. *harzianum, virens, atroviride* or *viride.*

(Group N-UNE) Botanical or animal derived agents, including synthetic extracts and unrefined oils, with unknown or uncertain mode of action, preferably botanical or animal derived agents selected from azadirachtin, camellia seed cake, essential oils, garlic extract, pongamia oil, terpenes, e.g. carvacrol, and *Quillaja saponaria* extract.

Examples of herbicides which could be mixed with the compound combination of the invention are:
acetochlor, acifluorfen, acifluorfen-methyl, acifluorfen-sodium, aclonifen, alachlor, allidochlor, alloxydim, alloxydim-sodium, ametryn, amicarbazone, amidochlor, amidosulfuron, 4-amino-3-chloro-6-(4-chloro-2-fluoro-3-methylphenyl)-5-fluoropyridine-2-carboxylic acid, aminocyclopyrachlor, aminocyclopyrachlor-potassium, aminocyclopyrachlor-methyl, aminopyralid, aminopyralid-dimethylammonium, aminopyralid-tripromine, amitrole, ammoniumsulfamate, anilofos, asulam, asulam-potassium, asulam sodium, atrazine, azafenidin, azimsulfuron, beflubutamid, (S)-(-)-beflubutamid, beflubutamid-M, benazolin, benazolin-ethyl, benazolin-dimethylammonium, benazolin-potassium, benfluralin, benfuresate,

bensulfuron, bensulfuron-methyl, bensulide, bentazone, bentazone-sodium, benzobicyclon, benzofenap, bicyclopyrone, bifenox, bilanafos, bilanafos-sodium, bipyrazone, bispyribac, bispyribac-sodium, bixlozone, bromacil, bromacil-lithium, bromacil-sodium, bromobutide, bromofenoxim, bromoxynil, bromoxynil-butyrate, -potassium, -heptanoate und -octanoate, busoxinone, butachlor, butafenacil, butamifos, butenachlor, butralin, butroxydim, butylate, cafenstrole, cambendichlor, carbetamide, carfentrazone, carfentrazone-ethyl, chloramben, chloramben-ammonium, chloramben-diolamine, chlroamben-methyl, chloramben-methylammonium, chloramben-sodium, chlorbromuron, chlorfenac, chlorfenac-ammonium, chlorfenac-sodium, chlorfenprop, chlorfenprop-methyl, chlorflurenol, chlorflurenol-methyl, chloridazon, chlorimuron, chlorimuron-ethyl, chlorophthalim, chlorotoluron, chlorsulfuron, chlorthal, chlorthal-dimethyl, chlorthal-monomethyl, cinidon, cinidon-ethyl, cinmethylin, exo-(+)-cinmethylin, i.e. (1R,2S,4S)-4-isopropyl-1-methyl-2-[(2-methylbenzyl)oxy]-7-oxabicyclo[2.2.1]heptane, exo-(-)-cinmethylin, i.e. (1R,2S,4S)-4-isopropyl-1-methyl-2-[(2-methylbenzyl)oxy]-7-oxabicyclo[2.2.1]heptane, cinosulfuron, clacyfos, clethodim, clodinafop, clodinafop-ethyl, clodinafop-propargyl, clomazone, clomeprop, clopyralid, clopyralid-methyl, clopyralid-olamine, clopyralid-potassium, clopyralid-tripomine, cloransulam, cloransulam-methyl, cumyluron, cyanamide, cyanazine, cycloate, cyclopyranil, cyclopyrimorate, cyclosulfamuron, cycloxydim, cyhalofop, cyhalofop-butyl, cyprazine, 2,4-D (including thea mmonium, butotyl, -butyl, choline, diethylammonium, -dimethylammonium, -diolamine, -doboxyl, -dodecylammonium, etexyl, ethyl, 2-ethylhexyl, heptylammonium, isobutyl, isooctyl, isopropyl, isopropylammonium, lithium, meptyl, methyl, potassium, tetradecylammonium, triethylammonium, triisopropanolammonium, tripromine and trolamine salt thereof), 2,4-DB, 2,4-DB-butyl, -dimethylammonium, isooctyl, -potassium und -sodium, daimuron (dymron), dalapon, dalapon-calcium, dalapon-magnesium, dalapon-sodium, dazomet, dazomet-sodium, n-decanol, 7-deoxy-D-sedoheptulose, desmedipham, detosyl-pyrazolate (DTP), dicamba and its salts, e. g. dicamba-biproamine, dicamba-N,N-Bis(3-aminopropyl)methylamine, dicamba-butotyl, dicamba-choline, dicamba-diglycolamine, dicamba-dimethylammonium, dicamba-diethanolamine ammonium, dicamba-diethylammonium, dicamba-isopropylammonium, dicamba-methyl, dicamba-monoethanolamine, dicamba-olamine, dicamba-potassium, dicamba-sodium, dicamba-triethanolamine, dichlobenil, 2-(2,4-dichlorobenzyl)-4,4-dimethyl-1,2-oxazolidin-3-one, 2-(2,5-dichlorobenzyl)-4,4-dimethyl-1,2-oxazolidin-3-one, dichlorprop, dichlorprop-butotyl, dichlorprop-dimethylammonium, dichhlorprop-etexyl, dichlorprop-ethylammonium, dichlorprop-isoctyl, dichlorprop-methyl, dichlorprop-potassium, dichlorprop-sodium, dichlorprop-P, dichlorprop-P-dimethylammonium, dichlorprop-P-etexyl, dichlorprop-P-potassium, dichlorprop-sodium, diclofop, diclofop-methyl, diclofop-P, diclofop-P-methyl, diclosulam, difenzoquat, difenzoquat-metilsulfate, diflu-fenican, diflufenzopyr, diflufenzopyr-sodium, dimefuron, dimepiperate, dimesulfazet, dimethachlor, dimethametryn, dimethenamid, dimethenamid-P, dimetrasulfuron, dinitramine, dinoterb, dinoterb-acetate, diphenamid, diquat, diquat-dibromid, diquat-dichloride, dithiopyr, diuron, DNOC, DNOC-ammonium, DNOC-potassium, DNOC-sodium, endothal, endothal-diammonium, endothal-dipotassium, endothal-disodium, Epyrifenacil (S-3100), EPTC, esprocarb, ethalfluralin, ethametsulfuron, ethametsulfuron-methyl, ethiozin, ethofumesate, ethoxyfen, ethoxyfen-ethyl, ethoxysulfuron, etobenzanid, F-5231, i.e. N-[2-Chlor-4-fluor-5-[4-(3-fluorpropyl)-4,5-dihydro-5-oxo-1H-tetrazol-1-yl]-phenyl]-ethansulfonamid, F-7967, i.e. 3-[7-Chlor-5-fluor-2-(trifluormethyl)-1H-benzimidazol-4-yl]-1-methyl-6-(trifluormethyl)pyrimidin-2,4(1H,3H)-dione, fenoxaprop, fenoxaprop-P, fenoxaprop-ethyl, fenoxaprop-P-ethyl, fenoxasulfone, fenpyrazone, fenquinotrione, fentrazamide, flamprop, flamprop-isoproyl, flamprop-methyl, flamprop-M-isopropyl, flamprop-M-methyl, flazasulfuron, florasulam, florpyrauxifen, florpyrauxifen-benzyl, fluazifop, fluazifop-butyl, fluazifop-methyl, fluazifop-P, fluazifop-P-butyl, flucarbazone, flucarbazone-sodium, flucetosulfuron, fluchloralin, flufenacet, flufenpyr, flufenpyr-ethyl, flumetsulam, flumiclorac, flumiclorac-pentyl, flumioxazin, fluometuron, flurenol, flurenol-butyl, - dimethylammonium und -methyl, fluoroglycofen, fluoroglycofen-ethyl, flupropanate, flupropanate-sdium, flupyrsulfuron, flupyrsulfuron-methyl, flupyrsulfuron-methyl-sodium, fluridone, flurochloridone, fluroxypyr, fluroxypyr-butometyl, fluroxypyr-meptyl, flurtamone, fluthiacet, fluthiacet-methyl, fomesafen, fomesafen-sodium, foramsulfuron, foramsulfuron sodium salt, fosamine, fosamine-ammonium, glufosinate, glufosinate-ammonium, glufosinate-sodium, L-glufosinate-ammonium, L-glufosiante-sodium, glufosinate-P-sodium, glufosinate-P-ammonium, glyphosate, glyphosate-ammonium, -isopropylammonium, -diammonium, -dimethylammonium, -potassium, -sodium, sesquisodium and -trimesium, H-9201, i.e. O-(2,4-Dimethyl-6-nitrophenyl)-O-ethyl-isopropylphosphoramidothioat, halauxifen, halauxifen-methyl, halosafen, halosulfuron, halosulfuron-methyl, haloxyfop, haloxyfop-P, haloxyfop-ethoxyethyl, haloxyfop-P-ethoxyethyl, haloxyfop-methyl, haloxyfop-P-methyl, haloxifop-sodium, hexazinone, HNPC-A8169, i.e. prop-2-yn-1-yl (2S)-2-{3-[(5-tert-butylpyridin-2-yl)oxy]phenoxy}propanoate, HW-02, i.e. 1-(Dimethoxyphosphoryl)-ethyl-(2,4-dichlorphenoxy)acetat, hydantocidin, imazamethabenz, imazamethabenz-methyl, imazamox, imazamox-ammonium, imazapic, imazapic-ammonium, imazapyr, imazapyr-isopropylammonium, imazaquin, imazaquin-ammonium, imazaquin.methyl, imazethapyr, imazethapyr-immonium, imazosulfuron, indanofan, indaziflam, iodosulfuron, iodosulfuron-methyl, iodosulfuron-methyl-sodium, ioxynil, ioxynil-lithium, -octanoate, -potassium und sodium, ipfencarbazone, isoproturon, isouron, isoxaben, isoxaflutole, karbutilate, KUH-043, i.e. 3-({[5-(Difluormethyl)-1-methyl-3-(trifluormethyl)-1H-pyrazol-4-yl]methyl}sulfonyl)-5,5-dimethyl-4,5-dihydro-1,2-oxazol, ketospiradox, ketospiradox-potassium, lactofen, lancotrione, lenacil, linuron, MCPA, MCPA-butotyl, -butyl, -dimethylammonium, -diolamine, - 2-ethylhexyl, -ethyl, -isobutyl, isoctyl, -isopropyl, -isopropylammonium, -methyl, olamine, -potassium, - sodium and -trolamine, MCPB, MCPB-methyl, -ethyl und -sodium, mecoprop, mecoprop-butotyl, mecoprop- demethylammonium, mecoprop-diolamine, mecoprop-etexyl, mecoprop-ethadyl, mecoprop-isoctyl, mecoprop-methyl, mecoprop-potassium, mecoprop-sodium, and mecoprop-trolamine, mecoprop-P, mecoprop-P-butotyl, -dimethylammonium, -2-ethylhexyl and -potassium, mefenacet, mefluidide, mefluidide-diolamine, mefluidide-potassium, mesosulfuron, mesosulfuron-methyl, mesosulfuron sodium salt, mesotrione, methabenzthiazuron, metam, metamifop, metamitron, metazachlor, metazosulfuron, methabenzthiazuron, methiopyrsulfuron, methiozolin, methyl isothiocyanate, metobromuron, metolachlor, S-metolachlor, metosulam, metoxuron, metribuzin, metsulfuron, metsulfuron-methyl, molinate, monolinuron, monosulfuron, monosulfuron-methyl, MT-5950, i.e. N-[3-chlor-4-(1-methylethyl)-phenyl]-2-methylpentanamid, NGGC-011, napropamide, NC-310, i.e. 4-(2,4-Dichlorbenzoyl)-1-methyl-5-benzyloxypyrazol, NC-656, i.e. 3-[(isopropylsulfonyl)methyl]-N-(5-methyl-1,3,4-oxadiazol-2-yl)-5-(trifluoromethyl)[1,2,4]triazolo[4,3-a]pyridine-8-carboxamide, neburon, nicosulfuron, nonanoic acid (pelargonic acid), norflurazon, oleic acid (fatty acids), orbencarb, orthosulfamuron, oryzalin, oxadiargyl, oxadiazon, oxasulfuron, oxaziclomefone, oxyfluorfen, paraquat, paraquat-dichloride, paraquat-dimethylsulfate, pebulate, pendimethalin, penoxsulam, pentachlorphenol, pentoxazone, pethoxamid, petroleum oils, phenmedipham, phenmedipham-ethyl, picloram, picloram-dimethylammonium, picloram-etexyl, picloram-isoctyl, picloram-methyl, picloram-olamine, picloram-potassium, picloram-triethylammonium, picloram-tripromine, picloram-trolamine, picolinafen, pinoxaden, piperophos, pretilachlor, primisulfuron, primisulfuron-methyl, prodiamine, profoxydim, prometon, prometryn, propachlor, propanil, propaquizafop, propazine, propham, propisochlor, propoxycarbazone, propoxycarbazone-sodium, propyrisulfuron, propyzamide, prosulfocarb, prosulfuron, pyraclonil, pyraflufen, pyraflufen-ethyl, pyrasulfotole, pyrazolynate (pyrazolate), pyrazosulfuron, pyrazosulfuron-ethyl, pyrazoxyfen, pyribambenz, pyribambenz-isopropyl, pyribambenz-propyl, pyribenzoxim, pyributicarb, pyridafol, pyridate, pyriftalid, pyriminobac, pyriminobac-methyl, pyrimisulfan, pyrithiobac, pyrithiobac-sodium, pyroxasulfone, pyroxsulam, quinclorac, quinclorac-dimethylammonium, quinclorac-methyl, quinmerac, quinoclamine, quizalofop, quizalofop-ethyl, quizalofop-P, quizalofop-P-ethyl, quizalofop-P-tefuryl, QYM201, i.e. 1-{2-chloro-3-[(3-cyclopropyl-5-hydroxy-1-methyl-1H-pyrazol-4-yl)carbonyl]-6-(trifluoromethyl)phenyl}piperidin-2-one, rimsulfuron, saflufenacil, sethoxydim, siduron, simazine, simetryn, SL-261, sulcotrione, sulfentrazone, sulfometuron, sulfometuron-methyl, sulfosulfuron, , SYP-249, i.e. 1-Ethoxy-3-methyl-1-oxobut-3-en-2-yl-5-[2-chlor-4-(trifluormethyl)phenoxy]-2-nitrobenzoat, SYP-300, i.e. 1-[7-Fluor-3-oxo-4-(prop-2-in-1-yl)-3,4-dihydro-2H-1,4-benzoxazin-6-yl]-3-propyl-2-thioxoimidazolidin-4,5-dion, 2,3,6-TBA, TCA (trichloro acetic acid) and its salts, e.g. TCA-ammonium, TCA-calcium, TCA-ethyl, TCA-magnesium, TCA-sodium, tebuthiuron, tefuryltrione, tembotrione, tepraloxydim, terbacil, terbucarb, terbumeton, terbuthylazine, terbutryn, tetflupyrolimet, thaxtomin, thenylchlor, thiazopyr, thiencarbazone, thiencarbazone-methyl, thifensulfuron, thifensulfuron-methyl, thiobencarb, tiafenacil, tolpyralate, topramezone, tralkoxydim, triafamone, tri-allate, triasulfuron, triaziflam, tribenuron, tribenuron-methyl, triclopyr, triclopyr-butotyl, triclopyr-choline, triclopyr-ethyl, triclopyr-triethylammonium, trietazine, trifloxysulfuron, trifloxysulfuron-sodium, trifludimoxazin, trifluralin, triflusulfuron, triflusulfuron-methyl, tritosulfuron, urea sulfate, vernolate, XDE-848, ZJ-0862, i.e. 3,4-Dichlor-N-{2-[(4,6-dimethoxypyrimidin-2-yl)oxy]benzyl}anilin, 3-(2-chloro-4-fluoro-5-(3-methyl-2,6-dioxo-4-trifluoromethyl-3,6-dihydropyrimidin-1 (2H)-yl)phenyl)-5-methyl-4,5-dihydroisoxazole-5-carboxylic acid ethyl ester, ethyl-[(3-{2-chlor-4-fluor-5-[3-methyl-2,6-dioxo-4-(trifluormethyl)-3,6-dihydropyrimidin-1(2H)-yl]phenoxy}pyridin-2-yl)oxy]acetate, 3-chloro-2-[3-(difluoromethyl)isoxazolyl-5-yl]phenyl-5-chloropyrimidin-2-yl ether, 2-(3,4-dimethoxyphenyl)-4-[(2-hydroxy-6-oxocyclohex-1-en-1-yl)carbonyl]-6-methylpyridazine-3(*2H*)-one, 2-({2-[(2-methoxyethoxy)methyl]-6-methylpyridin-3-yl}carbonyl)cyclohexane-1,3-dione, (5-hydroxy-1-methyl-1H-pyrazol-4-yl)(3,3,4-trimethyl-1,1-dioxido-2,3-dihydro-1-benzothiophen-5-yl)methanone, 1-methyl-4-[(3,3,4-trimethyl-1,1-dioxido-2,3-dihydro-1-benzothiophen-5-yl)carbonyl]-1H-pyrazol-5-yl propane-1-sulfonate, 4-{2-chloro-3-[(3,5-dimethyl-1H-pyrazol-1-yl)methyl]-4-(methylsulfonyl)benzoyl}-1-methyl-1H-pyrazol-5-yl-1,3-dimethyl-1H-pyrazole-4-carboxylate; cyanomethyl 4-amino-3-chloro-5-fluoro-6-(7-fluoro-1H-indol-6-yl)pyridine-2-carboxylate, prop-2-yn-1-yl 4-amino-3-chloro-5-fluoro-6-(7-fluoro-1H-indol-6-yl)pyridine-2-carboxylate, methyl 4-amino-3-chloro-5-fluoro-6-(7-fluoro-1H-indol-6-yl)pyridine-2-carboxylate, 4-amino-3-chloro-5-fluoro-6-(7-fluoro-1H-indol-6-yl)pyridine-2-carboxylic acid, benzyl 4-amino-3-chloro-5-fluoro-6-(7-fluoro-1H-indol-6-yl)pyridine-2-carboxylate, ethyl 4-amino-3-chloro-5-fluoro-6-(7-fluoro-1H-indol-6-yl)pyridine-2-carboxylate, methyl 4-amino-3-chloro-5-fluoro-6-(7-fluoro-1-isobutyryl-1H-indol-6-yl)pyridine-2-carboxylate, methyl 6-(1-acetyl-7-fluoro-1H-indol-6-yl)-4-amino-3-chloro-5-fluoropyridine-2-carboxylate, methyl 4-amino-3-chloro-6-[1-(2,2-dimethylpropanoyl)-7-fluoro-1H-indol-6-yl]-5-fluoropyridine-2-carboxylate, methyl 4-amino-3-chloro-5-fluoro-6-[7-fluoro-1-(methoxyacetyl)-1H-indol-6-yl]pyridine-2-carboxylate, potassium 4-amino-3-chloro-5-fluoro-6-(7-fluoro-1H-indol-6-yl)pyridine-2-carboxylate, sodium 4-amino-3-chloro-5-fluoro-6-(7-fluoro-1H-indol-6-yl)pyridine-2-carboxylate, butyl 4-amino-3-chloro-5-fluoro-6-(7-fluoro-1H-indol-6-yl)pyridine-2-carboxylate, 4-hydroxy-1-methyl-3-[4-(trifluoromethyl)pyridin-2-yl]imidazolidin-2-one, 3-(5-tert-butyl-1,2-oxazol-3-yl)-4-hydroxy-1-methylimidazolidin-2-one, 3-[5-chloro-4-(trifluormethyl)pyridin-2-yl]-4-hydroxy-1-methylimidazolidin-2-one, 4-hydroxy-1-methoxy-5-methyl-3-[4-(trifluormethyl)pyridin-2-yl]imidazolidin-2-one, 6-[(2-hydroxy-6-oxocyclohex-1-en-1-yl)carbonyl]-1,5-dimethyl-3-(2-methylphenyl)quinazolin-2,4(1H,3H)-dione, 3-(2,6-dimethylphenyl)-6-[(2-hydroxy-6-oxocyclohex-1-en-1-yl)carbonyl]-1-methylquinazolin-2,4(1H,3H)-dione, 2-[2-chloro-4-(methylsulfonyl)-3-(morpholin-4-ylmethyl)benzoyl]-3-hydroxycyclohex-2-en-1-one, 1-(2-carboxyethyl)-4-(pyrimidin-2-yl)pyridazin-1-ium salt (with anions such as chloride, acetate or trifluoroacetate), 1-(2-carboxyethyl)-4-(pyridazin-3-yl)pyridazin-1-ium salt (with anions such as chloride, acetate or trifluoroacetate), 4-(pyrimidin-2-yl)-1-(2-sulfoethyl)pyridazin-1-ium

salt (with anions such as chloride, acetate or trifluoroacetate), 4-(pyridazin-3-yl)-1-(2-sulfoethyl)pyridazin-1-ium salt (with anions such as chloride, acetate or trifluoroacetate), 1-(2-Carboxyethyl)-4-(1,3-thiazol-2-yl)pyridazin-1-ium salt (with anions such as chloride, acetate or trifluoroacetate), 1-(2-Carboxyethyl)-4-(1,3-thiazol-2-yl)pyridazin-1-ium salt (with anions such as chloride, acetate or trifluoroacetate).

Examples of plant growth regulators which could be mixed with the compound combination and the composition of the invention are:
Abscisic acid and related analogues [e.g. (2Z,4E)-5-[6-Ethynyl-1-hydroxy-2,6-dimethyl-4-oxocyclohex-2-en-1-yl]-3-methylpenta-2,4-dienoic acid, methyl-(2Z,4E)-5-[6-ethynyl-1-hydroxy-2,6-dimethyl-4-oxocyclohex-2-en-1-yl]-3-methylpenta-2,4-dienoate, (2Z,4E)-3-ethyl-5-(1-hydroxy-2,6,6-trimethyl-4-oxocyclohex-2-en-1-yl)penta-2,4-dienoic acid, (2E,4E)-5-(1-hydroxy-2,6,6-trimethyl-4-oxocyclohex-2-en-1-yl)-3-(trifluoromethyl)penta-2,4-dienoic acid, methyl (2E,4E)-5-(1-hydroxy-2,6,6-trimethyl-4-oxocyclohex-2-en-1-yl)-3-(trifluoromethyl)penta-2,4-dienoate, (2Z,4E)-5-(2-hydroxy-1,3-dimethyl-5-oxobicyclo[4.1.0]hept-3-en-2-yl)-3-methylpenta-2,4-dienoic acid], acibenzolar, acibenzolar-S-methyl, S-adenosylhomocysteine, allantoin, 2-Aminoethoxyvinylglycine (AVG), aminooxyacetic acid and related esters [e.g. (Isopropylidene)-aminooxyacetic acid-2-(methoxy)-2-oxoethylester, (Isopropylidene)-aminooxyacetic acid-2-(hexyloxy)-2-oxoethylester, (Cyclohexylidene)-aminooxyacetic acid-2-(isopropyloxy)-2-oxoethylester], 1-aminocycloprop-1-yl carboxylic acid and derivatives thereof, e.g. disclosed in DE3335514, EP30287, DE2906507 or US5123951, 5-aminolevulinic acid, ancymidol, 6-benzylaminopurine, bikinin, brassinolide, brassinolide-ethyl, L-canaline, catechin and catechines (e.g. (2S,3R)-2-(3,4-Dihydroxyphenyl)-3,4-dihydro-2H-chromen-3,5,7-triol), chitooligosaccharides (CO; COs differ from LCOs in that they lack the pendant fatty acid chain that is characteristic of LCOs. COs, sometimes referred to as N-acetylchitooligosaccharides, are also composed of GlcNAc residues but have side chain decorations that make them different from chitin molecules [$(C_8H_{13}NO_5)_n$, CAS No. 1398-61-4] and chitosan molecules [$(C_5H_{11}NO_4)_n$, CAS No. 9012-76-4]), chitinous compounds, chlormequat chloride, cloprop, cyclanilide, 3-(Cycloprop-1-enyl)propionic acid, 1-[2-(4-cyano-3,5-dicyclopropylphenyl)acetamido]cyclohexanecarboxylic acid, 1-[2-(4-cyano-3-cyclopropylphenyl)acetamido]cyclohexanecarboxylic acid, daminozide, dazomet, dazomet-sodium, n-decanol, dikegulac, dikegulac-sodium, endothal, endothal-dipotassium, -disodium, and mono(N,N-dimethylalkylammonium), ethephon, flumetralin, flurenol, flurenol-butyl, flurenol-methyl, flurprimidol, forchlorfenuron, gibberellic acid, inabenfide, indol-3-acetic acid (IAA), 4-indol-3-ylbutyric acid, isoprothiolane, probenazole, jasmonic acid, Jasmonic acid or derivatives thereof (e.g. jasmonic acid methyl ester, jasmonic acid ethyl ester), lipo-chitooligosaccharides (LCO, sometimes referred to as symbiotic nodulation (Nod) signals (or Nod factors) or as Myc factors, consist of an oligosaccharide backbone of β -1,4-linked N-acetyl-D-glucosamine ("GlcNAc") residues with an N-linked fatty acyl chain condensed at the non-reducing end. As understood in the art, LCOs differ in the number of GlcNAc residues in the backbone, in the length and degree of saturation of the fatty acyl chain and in the substitutions of reducing and non-reducing sugar residues), linoleic acid or derivatives thereof, linolenic acid or derivatives thereof, maleic hydrazide, mepiquat chloride, mepiquat pentaborate, 1-methylcyclopropene, 3-methylcyclopropene, 1-ethylcyclopropene, 1-n-propylcyclopropene, 1-cyclopropenylmethanol, methoxyvinylglycin (MVG), 3'-methyl abscisic acid, 1-(4-methylphenyl)-N-(2-oxo-1-propyl-1,2,3,4-tetrahydroquinolin-6-yl) methanesulfonamide and related substituted tetrahydroquinolin-6-yl)methanesulfonamides, (3E,3aR,8bS)-3-({[(2R)-4-Methyl-5-oxo-2,5-dihydrofuran-2-yl]oxy}methylen)-3,3a,4,8b-tetrahydro-2H-indeno[1,2-b]furan-2-one and related lactones as outlined in EP2248421, 2-(1-naphthyl)acetamide, 1-naphthylacetic acid, 2- naphthyloxyacetic acid, nitrophenolate-mixture, 4-Oxo-4[(2-phenylethyl)amino]butyric acid, paclobutrazol, 4-phenylbutyric acid and its related salts (e.g. sodium-4-phenylbutanoate, potassium-4-phenylbutanoate), phenylalanine, N-phenylphthalamic acid, prohexadione, prohexadione-calcium, putrescine, prohydrojasmon, rhizobitoxin, salicylic acid, salicylic acid methyl ester, sarcosine, sodium cycloprop-1-en-1-yl acetate, sodium cycloprop-2-en-1-yl acetate, sodium-3-(cycloprop-2-en-1-yl)propanoate, sodium-3-(cycloprop-1-en-1-yl) propanoate, sidefungin, spermidine, spermine, strigolactone, tecnazene, thidiazuron, triacontanol, trinexapac, trinexapac-ethyl, tryptophan, tsitodef, uniconazole, uniconazole-P, 2-fluoro-N-(3-methoxyphenyl)-*9H*-purin-6-amine.

Examples of safeners which could be mixed with the compound combination and the composition of the invention are, for example, benoxacor, cloquintocet (-mexyl), cyometrinil, cyprosulfamide, dichlormid, fenchlorazole (-ethyl), fenclorim, flurazole, fluxofenim, furilazole, isoxadifen (-ethyl), mefenpyr (-diethyl), naphthalic anhydride, oxabetrinil, 2-methoxy-N-({4-[(methylcarbamoyl)amino]phenyl}-sulphonyl)benzamide (CAS 129531-12-0), 4-(dichloroacetyl)-1-oxa-4-azaspiro[4.5]decane (CAS 71526-07-3), 2,2,5-trimethyl-3-(dichloroacetyl)-1,3-oxazolidine (CAS 52836-31-4).

Examples of nitrification inhibitors wich can be mixed with the compound combination and the composition of the invention are selected from the group consisting of 2-(3,4-dimethyl-1 H-pyrazol-1 -yl)succinic acid, 2-(4,5-dimethyl-1 H-pyrazol-1 -yl)succinic acid, 3,4-dimethyl pyrazolium glycolate, 3,4-dimethyl pyrazolium citrate, 3,4-dimethyl pyrazolium lactate, 3,4-dimethyl pyrazolium mandelate, 1 ,2,4-triazole, 4-Chloro-3-methylpyrazole, N-((3(5)-methyl-1H-pyrazole-1-yl)methyl)acetamide, N-((3(5)-methyl-1 H-pyrazole-1-yl)methyl)formamide, N-((3(5),4-dimethylpyrazole-1-yl)methyl)formamide, N-((4-chloro-3(5)-methyl-pyrazole-1-yl)methyl)formamide; reaction adducts of dicyandiamide, urea and formaldehyde, triazonyl- formaldehyde-dicyandiamide adducts, 2-cyano-1-((4-oxo-1,3,5-triazinan-1-yl)methyl)guanidine, 1-((2-cyanoguanidino)methyl)urea, 2-cyano-1-((2-cyanoguanidino)methyl)guanidine, 2-chloro-6-(trichloromethyl)-pyridine (nitrapyrin or N-serve), dicyandiamide, 3,4-dimethyl pyrazole phosphate, 4,5-dimethyl pyrazole phosphate, 3,4-dimethylpyrazole, 4,5-dimethyl pyrazole, ammoniumthiosulfate, neem, products based on ingredients of neem, linoleic acid, alpha-linolenic acid, methyl p-coumarate, methyl ferulate, methyl 3-(4-hydroxyphenyl) propionate, karanjin, brachialacton, p-benzoquinone sorgoleone, 4-amino-1,2,4-triazole hydrochloride, 1-amido-2-thiourea, 2-amino-4-chloro-6-methylpyrimidine, 2-mercapto-benzothiazole, 5-ethoxy-3-trichloromethyl-1,2,4-thiodiazole (terrazole, etridiazole), 2-sulfanilamidothiazole, 3-methylpyrazol, 1,2,4-triazol thiourea, cyan amide, melamine, zeolite powder, catechol, benzoquinone, sodium tetraborate, allylthiourea, chlorate salts, and zinc sulfate.

The compound combination of the invention may be combined with one or more agriculturally beneficial agents.

Examples of agriculturally beneficial agents include biostimulants, plant growth regulators, plant signal molecules, growth enhancers, microbial stimulating molecules, biomolecules, soil amendments, nutrients, plant nutrient enhancers, etc., such as lipo-chitooligosaccharides (LCO), chitooligosaccharides (CO), chitinous compounds, flavonoids, jasmonic acid or derivatives thereof (e.g., jasmonates), cytokinins, auxins, gibberellins, absiscic acid, ethylene, brassinosteroids, salicylates, macro- and micro-nutrients, linoleic acid or derivatives thereof, linolenic acid or derivatives thereof, karrikins, and beneficial microorganisms (e.g., *Rhizobium* spp., *Bradyrhizobium* spp., *Sinorhizobium* spp., *Azorhizobium* spp., *Glomus* spp., *Gigaspora* spp., *Hymenoscyphous* spp., *Oidiodendron* spp., *Laccaria* spp., *Pisolithus* spp., *Rhizopogon* spp., *Scleroderma* spp., *Rhizoctonia* spp., *Acinetobacter* spp., *Arthrobacter* spp., *Arthrobotrys* spp., *Aspergillus* spp., *Azospirillum* spp., *Bacillus* spp., *Burkholderia* spp., *Candida* spp., *Chryseomonas* spp., *Enterobacter* spp., *Eupenicillium* spp., *Exiguobacterium* spp., *Klebsiella* spp., *Kluyvera* spp., *Microbacterium* spp.,*Mucor* spp., *Paecilomyces* spp., *Paenibacillus* spp., *Penicillium* spp., *Pseudomonas* spp., *Serratia* spp., *Stenotrophomonas* spp., *Streptomyces* spp., *Streptosporangium* spp., *Swaminathania* spp., *Thiobacillus* spp., *Torulospora* spp., *Vibrio* spp., *Xanthobacter* spp., *Xanthomonas* spp., etc.), and combinations thereof.

According to some embodiments, the compound combination and the composition of the invention may be combined with one or more biostimulants. Biostimulants may enhance metabolic or physiological processes such as respiration, photosynthesis, nucleic acid uptake, ion uptake, nutrient delivery, or a combination thereof. Non-limiting examples of biostimulants that may be included or used in the composition of the present invention may include seaweed extracts (e.g., ascophyllum nodosum; BAYFOLAN ALGAE, Aglukon gmbH, Germany), bacterial extracts (e.g., extracts of one or more diazotrophs, phosphate-solubilizing microorgafjaponisms and/or biopesticides), fungal extracts, humic acids (e.g., potassium humate), fulvic acids, myo-inositol, and/or glycine, protein hydrolysates and amino-acids both from animal BAYFOLAN AMBITION & BAYFOLAN cobre, SICIT, Italy) and plant origin, inorganic compounds (e.g silica) and any combinations thereof. According to some embodiments, the biostimulants may comprise one or more *Azospirillum* extracts (e.g., an extract of media comprising *A. brasilense* INTA Az-39), one or more *Bradyrhizobium* extracts (e.g., an extract of media comprising *B. elkanii* SEMIA 501, *B. elkanii* SEMIA 587, *B. elkanii* SEMIA 5019, *B. japonicum* NRRL B-50586 (also deposited as NRRL B-59565), *B. japonicum* NRRL B-50587 (also deposited as NRRL B-59566), *B. japonicum* NRRL B-50588 (also deposited as NRRL B-59567), *B. japonicum* NRRL B-50589 (also deposited as NRRL B-59568), *B. japonicum* NRRL B-50590 (also deposited as NRRL B-59569), *B. japonicum* NRRL B-50591 (also deposited as NRRL B-59570), *B. japonicum* NRRL B-50592 (also deposited as NRRL B-59571), *B. japonicum* NRRL B-50593 (also deposited as NRRL B-59572), *B. japonicum* NRRL B-50594 (also deposited as NRRL B-50493), *B. japonicum* NRRL B-50608, *B. japonicum* NRRL B-50609, *B. japonicum* NRRL B-50610, *B. japonicum* NRRL B-50611, *B. japonicum* NRRL B-50612, *B. japonicum* NRRL B-50726, *B. japonicum* NRRL B-50727, *B. japonicum* NRRL B-50728, *B. japonicum* NRRL B-50729, *B. japonicum* NRRL B-50730, *B. japonicum* SEMIA 566, *B. japonicum* SEMIA 5079, *B. japonicum* SEMIA 5080, *B. japonicum* USDA 6, *B. japonicum* USDA 110, *B. japonicum* USDA 122, *B. japonicum* USDA 123, *B. japonicum* USDA 127, *B. japonicum* USDA 129 and/or *B. japonicum* USDA 532C), one or more *Rhizobium* extracts (e.g., an extract of media comprising *R. leguminosarum* SO12A-2), one or more *Sinorhizobium* extracts (e.g., an extract of media comprising S. *fredii* CCBAU114 and/or S. *fredii* USDA 205), one or more *Penicillium* extracts (e.g., an extract of media comprising *P. bilaiae* ATCC 18309, *P. bilaiae* ATCC 20851, *P. bilaiae* ATCC 22348, *P. bilaiae* NRRL 50162, *P. bilaiae* NRRL 50169, *P. bilaiae* NRRL 50776, *P. bilaiae* NRRL 50777, *P. bilaiae* NRRL 50778, *P. bilaiae* NRRL 50777, *P. bilaiae* NRRL 50778, *P. bilaiae* NRRL 50779, *P. bilaiae* NRRL 50780, *P. bilaiae* NRRL 50781, *P. bilaiae* NRRL 50782, *P. bilaiae* NRRL 50783, *P. bilaiae* NRRL 50784, *P. bilaiae* NRRL 50785, *P. bilaiae* NRRL 50786, *P. bilaiae* NRRL 50787, *P. bilaiae* NRRL 50788, *P. bilaiae* RS7B-SD1, *P. brevicompactum* AgRF18, *P. canescens* ATCC 10419, *P. expansum* ATCC 24692, *P. expansum* YT02, *P. fellatanum* ATCC 48694, *P. gaestrivorus* NRRL 50170, *P. glabrum* DAOM 239074, *P. glabrum* CBS 229.28, *P. janthinellum* ATCC 10455, *P. lanosocoeruleum* ATCC 48919, *P. radicum* ATCC 201836, *P. radicum* FRR 4717, *P. radicum* FRR 4719, *P. radicum* N93/47267 and/or *P. raistrickii* ATCC 10490), one or more *Pseudomonas* extracts (e.g., an extract of media comprising *P. jessenii* PS06), one or more acaricidal, insecticidal and/or nematicidal extracts (e.g., an extract of media comprising *Bacillus firmus* I-1582, *Bacillus mycoides* AQ726, NRRL B-21664; *Beauveria bassiana* ATCC-74040, *Beauveria bassiana* ATCC-74250, *Burkholderia* sp. A396 sp. nov. rinojensis, NRRL B-50319, *Chromobacterium subtsugae* NRRL B-30655, *Chromobacterium vaccinii* NRRL B-50880, *Flavobacterium* H492, NRRL B-50584, *Metarhizium anisopliae* F52 (also known as *Metarhizium anisopliae* strain 52, *Metarhizium anisopliae* strain 7, *Metarhizium anisopliae* strain 43 and *Metarhizium anisopliae* BIO-1020, TAE-001; deposited as DSM 3884, DSM 3885, ATCC 90448, SD 170 and

ARSEF 7711) and/or *Paecilomycesfumosoroseus* FE991), and/or one or more fungicidal extracts (e.g., an extract of media comprising *Ampelomyces quisqualis* AQ 10® (Intrachem Bio GmbH & Co. KG, Germany), *Aspergillus flavus* AFLA-GUARD® (Syngenta Crop Protection, Inc., CH), *Aureobasidium pullulans* BOTECTOR® (bio-ferm GmbH, Germany), *Bacillus pumilus* AQ717 (NRRL B-21662), *Bacillus pumilus* NRRL B-30087, *Bacillus* AQ175 (ATCC 55608), *Bacillus* AQ177 (ATCC 55609), *Bacillus subtilis* AQ713 (NRRL B-21661), *Bacillus subtilis* AQ743 (NRRL B-21665), *Bacillus amyloliquefaciens* FZB24, *Bacillus amyloliquefaciens* NRRL B-50349, *Bacillus amyloliquefaciens* TJ1000 (also known as 1BE, isolate ATCC BAA-390), *Bacillus thuringiensis* AQ52 (NRRL B-21619), *Candida oleophila* I-82 (e.g., ASPIRE® from Ecogen Inc., USA), *Candida saitoana* BIOCURE® (in mixture with lysozyme; BASF, USA) and BIOCOAT® (ArystaLife Science, Ltd., Cary, NC), *Clonostachys rosea f. catenulata* (also referred to as *Gliocladium catenulatum*) J1446 (PRESTOP®, Verdera, Finland), *Coniothyrium minitans* CONTANS® (Prophyta, Germany), *Cryphonectria parasitica* (CNICM, France), *Cryptococcus albidus* YIELD PLUS® (Anchor Bio-Technologies, South Africa), *Fusarium oxysporum* BIOFOX® (from S.I.A.P.A., Italy) and FUSACLEAN® (Natural Plant Protection, France), *Metschnikowia fructicola* SHEMER® (Agrogreen, Israel), *Microdochium dimerum* ANTIBOT® (Agrauxine, France), *Muscodor albus* NRRL 30547, *Muscodor roseus* NRRL 30548, *Phlebiopsis gigantea* ROTSOP® (Verdera, Finland), *Pseudozyma flocculosa* SPORODEX® (Plant Products Co. Ltd., Canada), *Pythium oligandrum* DV74 (POLYVERSUM®, Remeslo SSRO, Biopreparaty, Czech Rep.), *Reynoutria sachlinensis* (*e.g.,* REGALIA® from Marrone BioInnovations, USA), *Streptomyces* NRRL B-30145, *Streptomyces* M1064, *Streptomyces galbus* NRRL 30232, *Streptomyces lydicus* WYEC 108 (ATCC 55445), *Streptomyces violaceusniger* YCED 9 (ATCC 55660; DE-THATCH-9®, DECOMP-9® and THATCH CONTROL®, Idaho Research Foundation, USA), *Streptomyces* WYE 53 (ATCC 55750; DE-THATCH-9®, DECOMP-9® and THATCH CONTROL®, Idaho Research Foundation, USA), *Talaromyces flavus* V117b (PROTUS®, Prophyta, Germany), *Trichoderma asperellum* SKT-1 (ECO-HOPE®, Kumiai Chemical Industry Co., Ltd., Japan), *Trichoderma atroviride* LC52 (SENTINEL®, Agrimm Technologies Ltd, NZ), *Trichoderma harzianum* T-22 (PLANTSHIELD®, der Firma BioWorks Inc., USA), *Trichoderma harzianum* TH-35 (ROOT PRO®, from Mycontrol Ltd., Israel), *Trichoderma harzianum* T-39 (TRICHODEX®, Mycontrol Ltd., Israel; TRICHODERMA 2000®, Makhteshim Ltd., Israel), *Trichoderma harzianum* ICC012 and *Trichoderma viride* TRICHOPEL (Agrimm Technologies Ltd, NZ), *Trichoderma harzianum* ICC012 and *Trichoderma viride* ICC080 (REMEDIER® WP, Isagro Ricerca, Italy), *Trichoderma polysporum* and *Trichoderma harzianum* (BINAB®, BINAB Bio-Innovation AB, Sweden), *Trichoderma stromaticum* TRICOVAB® (C.E.P.L.A.C., Brazil), *Trichoderma virens* GL-21 (SOILGARD®, Certis LLC, USA), *Trichoderma virens* G1-3, ATCC 57678, *Trichoderma virens* G1-21 (Thermo Trilogy Corporation, Wasco, CA), *Trichoderma virens* G1-3 and *Bacillus amyloliquefaciens* FZB2, *Trichoderma virens* G1-3 and *Bacillus amyloliquefaciens* NRRL B-50349, *Trichoderma virens* G1-3 and *Bacillus amyloliquefaciens* TJ1000, *Trichoderma virens* G1-21 and *Bacillus amyloliquefaciens* FZB24, *Trichoderma virens* G1-21 and *Bacillus amyloliquefaciens* NRRL B-50349, *Trichoderma virens* G1-21 and *Bacillus amyloliquefaciens* TJ1000, *Trichoderma viride* TRIECO® (Ecosense Labs. (India) Pvt. Ltd., Indien, BIO-CURE® F from T. Stanes & Co. Ltd., Indien), *Trichoderma viride* TV1 (Agribiotec srl, Italy), *Trichoderma viride* ICC080, and/or *Ulocladium oudemansii* HRU3 (BOTRY-ZEN®, Botry-Zen Ltd, NZ)), and combinations thereof.

According to some embodiments, the compound combination and the composition of the invention may be combined with one or more lipo-chitooligosaccharides (LCOs), chitooligosaccharides (COs), and/or chitinous compounds. LCOs, sometimes referred to as symbiotic nodulation (Nod) signals (or Nod factors) or as Myc factors, consist of an oligosaccharide backbone of β-1,4-linked N-acetyl-D-glucosamine ("GlcNAc") residues with an N-linked fatty acyl chain condensed at the non-reducing end. As understood in the art, LCOs differ in the number of GlcNAc residues in the backbone, in the length and degree of saturation of the fatty acyl chain and in the substitutions of reducing and non-reducing sugar residues. *See,* e.g., Denarie et al., Ann. Rev. Biochem. 65:503 (1996); Diaz et al., Mol. Plant-Microbe Interactions 13:268 (2000); Hungria et al., Soil Biol. Biochem. 29:819 (1997); Hamel et al., Planta 232:787 (2010); and Prome et al., Pure & Appl. Chem. 70(1):55 (1998).

LCOs (and derivatives thereof) may be included or utilized in various forms of purity and can be used alone or in the form of a culture of LCO-producing bacteria or fungi. For example, OPTIMIZE® (commercially available from Bayer Company) contains a culture of *Bradyrhizobium japonicum* that produces LCO. Methods to provide substantially pure LCOs include removing the microbial cells from a mixture of LCOs and the microbe, or continuing to isolate and purify the LCO molecules through LCO solvent phase separation followed by HPLC chromatography as described, for example, in U.S. Patent No. 5,549,718. Purification can be enhanced by repeated HPLC and the purified LCO molecules can be freeze-dried for long-term storage. Compositions and methods of the present disclosure may comprise analogues, derivatives, hydrates, isomers, salts and/or solvates of LCOs. LCOs may be incorporated into the composition according to the inventionin any suitable amount(s)/concentration(s). For example, the composition according to the invention comprise about 1 x $10^{-20}$ M to about 1 x $10^{-1}$ M LCO(s). The amount/concentration of LCO may be an amount effective to impart a positive trait or benefit to a plant, such as to enhance the growth and/or yield of the plant to which the composition is applied. According to some embodiments, the LCO amount/concentration is not effective to enhance the yield of the plant without beneficial contributions from one or more other constituents of the composition, such as CO and/or one or more pesticides.

The compound combination and the composition of the invention may be combined with any suitable COs, perhaps in combination with one or more LCOs. COs differ from LCOs in that they lack the pendant fatty acid chain that is characteristic of LCOs. COs, sometimes referred to as N-acetylchitooligosaccharides, are also composed of GlcNAc residues but have side chain decorations that make them different from chitin molecules [$(C_8H_{13}NO_5)_n$, CAS No. 1398-61-4] and chitosan molecules [$(C_5H_{11}NO_4)_n$, CAS No. 9012-76-4]. *See, e.g.,* D'Haeze et al., Glycobiol. 12(6):79R (2002); Demont-Caulet et al., Plant Physiol. 120(1):83 (1999); Hanel et al., Planta 232:787 (2010); Muller et al., Plant Physiol. 124:733 (2000); Robina et al., Tetrahedron 58:521-530 (2002); Rouge et al., Docking of Chitin Oligomers and Nod Factors on Lectin Domains of the LysM-RLK Receptors in the Medicago-Rhizobium Symbiosis, in The Molecular Immunology of Complex Carbohydrates-3 (Springer Science, 2011); Van der Holst et al., Curr. Opin. Struc. Biol. 11:608 (2001); and Wan et al., Plant Cell 21:1053 (2009). COs may be obtained from any suitable source. For example, the CO may be derived from an LCO. For example, in an aspect, the composition according to the invention comprise one or more COs derived from an LCO obtained (i.e., isolated and/or purified) from a strain of *Azorhizobium, Bradyrhizobium* (*e.g., B. japonicum*), *Mesorhizobium, Rhizobium* (e.g., *R. leguminosarum), Sinorhizobium* (e.g., *S. meliloti),* or mycorhizzal fungi (e.g., *Glomus intraradicus*). Alternatively, the CO may be synthetic. Methods for the preparation of recombinant COs are known in the art. See, *e.g.,* Cottaz et al., Meth. Eng. 7(4):311 (2005); Samain et al., Carbohydrate Res. 302:35 (1997.); and Samain et al., J. Biotechnol. 72:33 (1999), the contents and disclosures of which are incorporated herein by reference.

COs (and derivatives thereof) may be included or utilized in various forms of purity and can be used alone or in the form of a culture of CO-producing bacteria or fungi. It is to be understood that the compound combination and the composition according to the invention may be combined with hydrates, isomers, salts and/or solvates of COs. COs may be used in any suitable amount(s)/concentration(s). For example, the compound combination and the composition according to the invention may comprise about 1 x $10^{-20}$ M to about 1 x $10^{-1}$ M COs. The amount/concentration of CO may be an amount effective to impart or confer a positive trait or benefit to a plant, such as to enhance the soil microbial environment, nutrient uptake, or increase the growth and/or yield of the plant to which the composition is applied. According to some embodiments, a CO amount/concentration may not be effective to enhance the growth of the plant without beneficial contributions from one or more other ingredients of the composition, such as LCO and/or one or more inoculants, biomolecules, nutrients, or pesticides.

The compound combination and the composition of the invention may be combined with one or more suitable chitinous compounds, such as, for example, chitin, chitosan, and isomers, salts and solvates thereof. Chitins and chitosans, which are major components of the cell walls of fungi and the exoskeletons of insects and crustaceans, are composed of GlcNAc residues. Chitins and chitosans may be obtained commercially or prepared from insects, crustacean shells, or fungal cell walls. Methods for the preparation of chitin and chitosan are known in the art. *See, e.g.,* U.S. Patent Nos. 4,536,207 (preparation from crustacean shells) and 5,965,545 (preparation from crab shells and hydrolysis of commercial chitosan); and Pochanavanich et al., Lett. Appl. Microbiol. 35:17 (2002) (preparation from fungal cell walls). Deacetylated chitins and chitosans may be obtained that range from less than 35% to greater than 90% deacetylation and cover a broad spectrum of molecular weights, e.g., low molecular weight chitosan oligomers of less than 15kD and chitin oligomers of 0.5 to 2kD; "practical grade" chitosan with a molecular weight of about 15kD; and high molecular weight chitosan of up to 70kD. Chitin and chitosan compositions formulated for seed treatment are commercially available. Commercial products include, for example, ELEXA® (Plant Defense Boosters, Inc.) and BEYOND™ (Agrihouse, Inc.).

The compound combination and the composition of the invention may be combined with one or more suitable flavonoids, including, but not limited to, anthocyanidins, anthoxanthins, chalcones, coumarins, flavanones, flavanonols, flavans and isoflavonoids, as well as analogues, derivatives, hydrates, isomers, polymers, salts and solvates thereof. Flavonoids are phenolic compounds having the general structure of two aromatic rings connected by a three-carbon bridge. Classes of flavonoids are known in the art. *See, e.g.,* Jain et al., J. Plant Biochem. & Biotechnol. 11:1 (2002); and Shaw et al., Environ. Microbiol. 11:1867 (2006), the contents and disclosures of which are incorporated herein by reference. Several flavonoid compounds are commercially available. Flavonoid compounds may be isolated from plants or seeds, e.g., as described in U.S. Patents 5,702,752; 5,990,291; and 6,146,668. Flavonoid compounds may also be produced by genetically engineered organisms, such as yeast. *See, e.g.,* Ralston et al., Plant Physiol. 137:1375 (2005).

According to some embodiments, the compound combination and the composition of the invention may be combined with one or more flavanones, such as one or more of butin, eriodictyol, hesperetin, hesperidin, homoeriodictyol, isosakuranetin, naringenin, naringin, pinocembrin, poncirin, sakuranetin, sakuranin, and/or sterubin, one or more flavanonols, such as dihydrokaempferol and/or taxifolin, one or more flavans, such as one or more flavan-3-ols (e.g., catechin (C), catechin 3-gallate (Cg), epicatechins (EC), epigallocatechin (EGC) epicatechin 3-gallate (ECg), epigallcatechin 3-gallate (EGCg), epiafzelechin, fisetinidol, gallocatechin (GC), gallcatechin 3-gallate (GCg), guibourtinidol, mesquitol, robinetinidol, theaflavin-3-gallate, theaflavin-3'-gallate, theflavin-3,3'-digallate, thearubigin), flavan-4-ols (e.g., apiforol and/or luteoforol) and/or flavan-3,4-diols (e.g., leucocyanidin, leucodelphinidin, leucofisetinidin, leucomalvidin, luecopelargonidin, leucopeonidin, leucorobinetinidin, melacacidin and/or teracacidin) and/or dimers, trimers,

oligomers and/or polymers thereof (e.g., one or more proanthocyanidins), one or more isoflavonoids, such as one or more isoflavones or flavonoid derivatives (e.g., biochanin A, daidzein, formononetin, genistein and/or glycitein), isoflavanes (e.g., equol, ionchocarpane and/or laxifloorane), isoflavandiols, isoflavenes (e.g., glabrene, haginin D and/or 2-methoxyjudaicin), coumestans (e.g., coumestrol, plicadin and/or wedelolactone), pterocarpans, roetonoids, neoflavonoids (e.g., calophyllolide, coutareagenin, dalbergichromene, dalbergin, nivetin), and/or pterocarpans (e.g., bitucarpin A, bitucarpin B, erybraedin A, erybraedin B, erythrabyssin II, erthyrabissin-1, erycristagallin, glycinol, glyceollidins, glyceollins, glycyrrhizol, maackiain, medicarpin, morisianine, orientanol, phaseolin, pisatin, striatine, trifolirhizin), and combinations thereof. Flavonoids and their derivatives may be included in the present composition in any suitable form, including, but not limited to, polymorphic and crystalline forms. Flavonoids may be included in the composition according to the invention in any suitable amount(s) or concentration(s). The amount/concentration of a flavonoid(s) may be an amount effective to impart a benefit to a plant, which may be indirectly through activity on soil microorganisms or other means, such as to enhance plant nutrition and/or yield. According to some embodiments, a flavonoid amount/concentration may not be effective to enhance the nutrition or yield of the plant without the beneficial contributions from one or more other ingredients of the composition, such as LCO, CO, and/or one or more pesticides.

The compound combination and the composition of the invention may be combined with one or more suitable non-flavonoid nod-gene inducer(s), including, but not limited to, jasmonic acid ([1R-[1$\alpha$,2$\beta$(Z)]]-3-oxo-2-(pentenyl) cyclopentaneacetic acid; JA), linoleic acid ((Z,Z)-9,12-Octadecadienoic acid) and/or linolenic acid ((Z,Z,Z)-9,12,15-octadecatrienoic acid), and analogues, derivatives, hydrates, isomers, polymers, salts and solvates thereof. Jasmonic acid and its methyl ester, methyl jasmonate (MeJA), collectively known as jasmonates, are octadecanoid-based compounds that occur naturally in some plants (e.g., wheat), fungi (e.g., *Botryodiplodia theobromae, Gibbrella fujikuroi*), yeast (e.g., *Saccharomyces cerevisiae*) and bacteria (e.g., *Escherichia coli*). Linoleic acid and linolenic acid may be produced in the course of the biosynthesis of jasmonic acid. Jasmonates, linoleic acid and linolenic acid (and their derivatives) are reported to be inducers of nod gene expression or LCO production by rhizobacteria. See, *e.g.,* Mabood et al., Plant Physiol. Biochem. 44(11):759 (2006); Mabood et al., Agr. J. 98(2):289 (2006); Mabood et al., Field Crops Res.95(2-3):412 (2006); and Mabood & Smith, Linoleic and linolenic acid induce the expression of nod genes in Bradyrhizobium japonicum USDA 3, Plant Biol. (2001).

Derivatives of jasmonic acid, linoleic acid, and linolenic acid that may be included or used in combination with the compound combination and the composition of the invention include esters, amides, glycosides and salts thereof. Representative esters are compounds in which the carboxyl group of linoleic acid, linolenic acid, or jasmonic acid has been replaced with a --COR group, where R is an --$OR^1$ group, in which $R^1$ is: an alkyl group, such as a $C_1$-$C_8$ unbranched or branched alkyl group, e.g., a methyl, ethyl or propyl group; an alkenyl group, such as a $C_2$-$C_8$ unbranched or branched alkenyl group; an alkynyl group, such as a $C_2$-$C_8$ unbranched or branched alkynyl group; an aryl group having, for example, 6 to 10 carbon atoms; or a heteroaryl group having, for example, 4 to 9 carbon atoms, wherein the heteroatoms in the heteroaryl group can be, for example, N, O, P, or S. Representative amides are compounds in which the carboxyl group of linoleic acid, linolenic acid, or jasmonic acid has been replaced with a --COR group, where R is an $NR^2R^3$ group, in which $R^2$ and $R^3$ are each independently: a hydrogen; an alkyl group, such as a $C_1$-$C_8$ unbranched or branched alkyl group, e.g., a methyl, ethyl or propyl group; an alkenyl group, such as a $C_2$-$C_8$ unbranched or branched alkenyl group; an alkynyl group, such as a $C_2$-$C_8$ unbranched or branched alkynyl group; an aryl group having, for example, 6 to 10 carbon atoms; or a heteroaryl group having, for example, 4 to 9 carbon atoms, wherein the heteroatoms in the heteroaryl group can be, for example, N, O, P, or S. Esters may be prepared by known methods, such as acid-catalyzed nucleophilic addition, wherein the carboxylic acid is reacted with an alcohol in the presence of a catalytic amount of a mineral acid. Amides may also be prepared by known methods, such as by reacting the carboxylic acid with the appropriate amine in the presence of a coupling agent, such as dicyclohexyl carbodiimide (DCC), under neutral conditions. Suitable salts of linoleic acid, linolenic acid and jasmonic acid include, for example, base addition salts. The bases that may be used as reagents to prepare metabolically acceptable base salts of these compounds include those derived from cations such as alkali metal cations (e.g., potassium and sodium) and alkaline earth metal cations (e.g., calcium and magnesium). These salts may be readily prepared by mixing a solution of linoleic acid, linolenic acid, or jasmonic acid with a solution of the base. The salts may be precipitated from solution and collected by filtration, or may be recovered by other means such as by evaporation of the solvent.

Non-flavonoid nod-gene inducers may be used in combination the compound combination and the composition of the invention in any suitable amount(s)/concentration(s). For example, the amount/concentration of non-flavonoid nod-gene inducers may be an amount effective to impart or confer a positive trait or benefit to a plant, such as to enhance the growth and/or yield of the plant to which the composition is applied. According to some embodiments, the amount/concentration of non-flavonoid nod-gene inducers may not be effective to enhance the growth and/or yield of the plant without beneficial contributions from one or more other ingredients of the composition, such as a LCO, CO and/or one or more pesticides.

The compound combination and the composition of the invention may be combined with karrakins, including but not limited to 2H-furo[2,3-c]pyran-2-ones, as well as analogues, derivatives, hydrates, isomers, polymers, salts and

solvates thereof. Examples of biologically acceptable salts of karrakins include acid addition salts formed with biologically acceptable acids, examples of which include hydrochloride, hydrobromide, sulphate or bisulphate, phosphate or hydrogen phosphate, acetate, benzoate, succinate, fumarate, maleate, lactate, citrate, tartrate, gluconate; methanesulphonate, benzenesulphonate and p-toluenesulphonic acid. Additional biologically acceptable metal salts may include alkali metal salts, with bases, examples of which include the sodium and potassium salts. Karrakins may be incorporated into the composition according to the invention in any suitable amount(s) or concentration(s). For example, the amount/concentration of a karrakin may be an amount or concentration effective to impart or confer a positive trait or benefit to a plant, such as to enhance the growth and/or yield of the plant to which the composition is applied. In an aspect, a karrakin amount/concentration may not be effective to enhance the growth and/or yield of the plant without beneficial contributions from one or more other ingredients of the composition, such as a LCO, CO and/or one or more pesticides.

The compound combination and the composition of the invention may be combined with one or more anthocyanidins and/or anthoxanthins, such as one or more of cyanidin, delphinidin, malvidin, pelargonidin, peonidin, petunidin, flavones (e.g., apigenin, baicalein, chrysin, 7,8-dihydroxyflavone, diosmin, flavoxate, 6-hydroxyflavone, luteolin, scutellarein, tangeritin and/or wogonin) and/or flavonols (e.g., amurensin, astragalin, azaleatin, azalein, fisetin, furanoflavonols galangin, gossypetin, 3-hydroxyflavone, hyperoside, icariin, isoquercetin, kaempferide, kaempferitrin, kaempferol, isorhamnetin, morin, myricetin, myricitrin, natsudaidain, pachypodol, pyranoflavonols quercetin, quericitin, rhamnazin, rhamnetin, robinin, rutin, spiraeoside, troxerutin and/or zanthorhamnin), and combinations thereof.

The compound combination and the composition of the invention may be combined with gluconolactone and/or an analogue, derivative, hydrate, isomer, polymer, salt and/or solvate thereof. Gluconolactone may be incorporated into the composition according to the inventionin any suitable amount(s)/concentration(s). For example, the amount/concentration of a gluconolactone amount/concentration may be an amount effective to impart or confer a positive trait or benefit to a plant, such as to enhance the growth and/or yield of the plant to which the composition is applied. In an aspect, the gluconolactone amount/concentration may not be effective to enhance the growth and/or yield of the plant without beneficial contributions from one or more other ingredients of the composition, such as a LCO, CO and/or one or more pesticides.

The compound combination and the composition of the invention may be combined with one or more suitable nutrient(s) and/or fertilizer(s), such as organic acids (e.g., acetic acid, citric acid, lactic acid, malic acid, taurine, etc.), macrominerals (e.g., phosphorous, calcium, magnesium, potassium, sodium, iron, etc.), trace minerals (e.g., boron, cobalt, chloride, chromium, copper, fluoride, iodine, iron, manganese, molybdenum, selenium, zinc, etc.), vitamins, (e.g., vitamin A, vitamin B complex (i.e., vitamin $B_1$, vitamin $B_2$, vitamin $B_3$, vitamin $B_5$, vitamin $B_6$, vitamin $B_7$, vitamin $B_8$, vitamin $B_9$, vitamin $B_{12}$, choline) vitamin C, vitamin D, vitamin E, vitamin K.), and/or carotenoids ($\alpha$-carotene, $\beta$-carotene, cryptoxanthin, lutein, lycopene, zeaxanthin, etc.), and combinations thereof. In an aspect, the compound combination and the composition according to the invention may be combined with macro- and micronutrients of plants or microbes, including phosphorous, boron, chlorine, copper, iron, manganese, molybdenum and/or zinc. According to some embodiments, the compound combination and the composition according to the invention may be combined with one or more beneficial micronutrients. Non-limiting examples of micronutrients for use in compositions described herein may include vitamins, (e.g., vitamin A, vitamin B complex (i.e., vitamin B1, vitamin B2, vitamin B3, vitamin B5, vitamin B6, vitamin B7, vitamin B8, vitamin B9, vitamin B12, choline) vitamin C, vitamin D, vitamin E, vitamin K, carotenoids ($\alpha$-carotene, $\beta$-carotene, cryptoxanthin, lutein, lycopene, zeaxanthin, etc.), macrominerals (e.g., phosphorous, calcium, magnesium, potassium, sodium, iron, etc.), trace minerals (e.g., boron, cobalt, chloride, chromium, copper, fluoride, iodine, iron, manganese, molybdenum, selenium, zinc, etc.), organic acids (e.g., acetic acid, citric acid, lactic acid, malic acid, taurine, etc.), and combinations thereof (BAYFOLAN secure, BAYFOLAN complete, BAYFOLAN energy, BAYFOLAN power, Aglukon GmbH, Germany). In a particular aspect, compositions may comprise phosphorous, boron, chlorine, copper, iron, manganese, molybdenum, and/or zinc, and combinations thereof. For compositions comprising phosphorous, it is envisioned that any suitable source of phosphorous may be used. For example, phosphorus may be derived from a rock phosphate source, such as monoammonium phosphate, diammonium phosphate, monocalcium phosphate, super phosphate, triple super phosphate, and/or ammonium polyphosphate, an organic phosphorous source, or a phosphorous source capable of solubilization by one or more microorganisms (e.g., *Penicillium bilaiae*).

*Methods and uses*

The compound combination and the composition of the invention have potent microbicidal activity and/or plant defense modulating potential. They can be used for controlling unwanted microorganisms, such as unwanted fungi and bacteria, on plants. They can be particularly useful in crop protection (they control microorganisms that cause plants diseases) or for protecting materials (e.g. industrial materials, timber, storage goods) as described in more details herein below. More specifically, compound combination and the composition of the invention can be used to protect seeds, germinating seeds, emerged seedlings, plants, plant parts, fruits, harvest goods and/or the soil in which the plants grow from unwanted microorganisms.

Control or controlling as used herein encompasses protective, curative and eradicative treatment of unwanted microorganisms. Unwanted microorganisms may be pathogenic bacteria, pathogenic virus, pathogenic oomycetes or pathogenic fungi, more specifically phytopathogenic bacteria, phytopathogenic virus, phytopathogenic oomycetes or phytopathogenic fungi. As detailed herein below, these phytopathogenic microorganims are the causal agents of a broad spectrum of plants diseases.

More specifically, the compound combination and the composition of the invention can be used as fungicides. For the purpose of the specification, the term "fungicide" refers to a compound or composition that can be used in crop protection for the control of unwanted fungi, such as Plasmodiophoromycetes, Chytridiomycetes, Zygomycetes, Ascomycetes, Basidiomycetes and Deuteromycetes and/or for the control of Oomycetes.

The compound combination and the composition of the invention may also be used as antibacterial agent. In particular, they may be used in crop protection, for example for the control of unwanted bacteria, such as Pseudomonadaceae, Rhizobiaceae, Xanthomonadaceae, Enterobacteriaceae, Corynebacteriaceae and Streptomycetaceae.

The present invention also relates to a method for controlling unwanted microorganisms, such as unwanted fungi, oomycetes and bacteria, on plants comprising the step of applying the compound combination or the composition of the invention to the microorganisms and/or their habitat (to the plants, plant parts, seeds, fruits or to the soil in which the plants grow), wherein the compounds (A) and (B) and optionally (C) may be applied in a simultaneous, separate or sequential manner. If the single compounds are applied in a sequential manner, i.e. at different times, they are applied one after the other within a reasonably short period, such as a few hours or days.

Typically, when the compound combination and the composition of the invention are used in curative or protective methods for controlling phytopathogenic fungi and/or phytopathogenic oomycetes, an effective and plant-compatible amount thereof is applied to the plants, plant parts, fruits, seeds or to the soil or substrates in which the plants grow. Suitable substrates that may be used for cultivating plants include inorganic based substrates, such as mineral wool, in particular stone wool, perlite, sand or gravel; organic substrates, such as peat, pine bark or sawdust; and petroleum based substrates such as polymeric foams or plastic beads. Effective and plant-compatible amount means an amount that is sufficient to control or destroy the fungi present or liable to appear on the cropland and that does not entail any appreciable symptom of phytotoxicity for said crops. Such an amount can vary within a wide range depending on the fungus to be controlled, the type of crop, the crop growth stage, the climatic conditions and the respective compound or composition of the invention used. This amount can be determined by systematic field trials that are within the capabilities of a person skilled in the art.

*Plants and plant parts*

The compound combination and the composition of the invention may be applied to any plants or plant parts.

Plants mean all plants and plant populations, such as desired and undesired wild plants or crop plants (including naturally occurring crop plants). Crop plants may be plants which can be obtained by conventional breeding and optimization methods or by biotechnological and genetic engineering methods or combinations of these methods, including the genetically modified plants (GMO or transgenic plants) and the plant cultivars which are protectable and non-protectable by plant breeders' rights.

Plant cultivars are understood to mean plants which have new properties ("traits") and have been obtained by conventional breeding, by mutagenesis or by recombinant DNA techniques. They can be cultivars, varieties, bio- or genotypes.

Plant parts are understood to mean all parts and organs of plants above and below the ground, such as shoots, leaves, needles, stalks, stems, flowers, fruit bodies, fruits, seeds, roots, tubers and rhizomes. The plant parts also include harvested material and vegetative and generative propagation material, for example cuttings, tubers, rhizomes, slips and seeds.

Plants which may be treated in accordance with the methods of the invention include the following: cotton, flax, grapevine, fruit, vegetables, such as *Rosaceae sp.* (for example pome fruits such as apples and pears, but also stone fruits such as apricots, cherries, almonds and peaches, and soft fruits such as strawberries), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (for example banana trees and plantations), *Rubiaceae sp.* (for example coffee), *Theaceae sp., Sterculiceae sp., Rutaceae sp.* (for example lemons, oranges and grapefruit); *Solanaceae sp.* (for example tomatoes), *Liliaceae sp., Asteraceae sp.* (for example lettuce), *Umbelliferae sp., Cruciferae sp., Chenopodiaceae sp., Cucurbitaceae sp.* (for example cucumber), *Alliaceae sp.* (for example leek, onion), *Papilionaceae sp.* (for example peas); major crop plants, such as *Gramineae sp.* (for example maize, turf, cereals such as wheat, rye, rice, barley, oats, millet and triticale), *Asteraceae sp.* (for example sunflower), *Brassicaceae sp.* (for example white cabbage, red cabbage, broccoli, cauliflower, Brussels sprouts, pak choi, kohlrabi, radishes, and oilseed rape, mustard, horseradish and cress), *Fabacae sp.* (for example bean, peanuts), *Papilionaceae sp.* (for example soya bean), *Solanaceae sp.* (for example potatoes), *Chenopodiaceae sp.* (for example sugar beet, fodder beet, swiss chard, beetroot); useful plants and ornamental plants for

gardens and wooded areas; and genetically modified varieties of each of these plants.

Plants and plant cultivars which may be treated by the above disclosed methods include plants and plant cultivars which are resistant against one or more biotic stresses, i.e. said plants show a better defense against animal and microbial pests, such as against nematodes, insects, mites, phytopathogenic fungi, bacteria, viruses and/or viroids.

Plants and plant cultivars which may be treated by the above disclosed methods include those plants which are resistant to one or more abiotic stresses. Abiotic stress conditions may include, for example, drought, cold temperature exposure, heat exposure, osmotic stress, flooding, increased soil salinity, increased mineral exposure, ozone exposure, high light exposure, limited availability of nitrogen nutrients, limited availability of phosphorus nutrients, shade avoidance.

Plants and plant cultivars which may be treated by the above disclosed methods include those plants characterized by enhanced yield characteristics. Increased yield in said plants may be the result of, for example, improved plant physiology, growth and development, such as water use efficiency, water retention efficiency, improved nitrogen use, enhanced carbon assimilation, improved photosynthesis, increased germination efficiency and accelerated maturation. Yield may furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content and composition for example cotton or starch, protein content, oil content and composition, nutritional value, reduction in anti-nutritional compounds, improved processability and better storage stability.

Plants and plant cultivars which may be treated by the above disclosed methods include plants and plant cultivars which are hybrid plants that already express the characteristic of heterosis or hybrid vigor which results in generally higher yield, vigor, health and resistance towards biotic and abiotic stresses.

*Transgenic plants, seed treatment and integration events*

The compound combination according to the invention can be advantageously used to treat transgenic plants, plant cultivars or plant parts that received genetic material which imparts advantageous and/or useful properties (traits) to these plants, plant cultivars or plant parts. Therefore, it is contemplated that the present invention may be combined with one or more recombinant traits or transgenic event(s) or a combination thereof. For the purposes of this application, a transgenic event is created by the insertion of a specific recombinant DNA molecule into a specific position (locus) within the chromosome of the plant genome. The insertion creates a novel DNA sequence referred to as an "event" and is characterized by the inserted recombinant DNA molecule and some amount of genomic DNA immediately adjacent to/flanking both ends of the inserted DNA. Such trait(s) or transgenic event(s) include, but are not limited to, pest resistance, water use efficiency, yield performance, drought tolerance, seed quality, improved nutritional quality, hybrid seed production, and herbicide tolerance, in which the trait is measured with respect to a plant lacking such trait or transgenic event. Concrete examples of such advantageous and/or useful properties (traits) are better plant growth, vigor, stress tolerance, standability, lodging resistance, nutrient uptake, plant nutrition, and/or yield, in particular improved growth, increased tolerance to high or low temperatures, increased tolerance to drought or to levels of water or soil salinity, enhanced flowering performance, easier harvesting, accelerated ripening, higher yields, higher quality and/or a higher nutritional value of the harvested products, better storage life and/or processability of the harvested products, and increased resistance against animal and microbial pests, such as against insects, arachnids, nematodes, mites, slugs and snails.

Among DNA sequences encoding proteins which confer properties of tolerance to such animal and microbial pests, in particular insects, mention will particularly be made of the genetic material from *Bacillus thuringiensis* encoding the Bt proteins widely described in the literature and well known to those skilled in the art. Mention will also be made of proteins extracted from bacteria such as *Photorhabdus* (WO97/17432 and WO98/08932). In particular, mention will be made of the Bt Cry or VIP proteins which include the CryIA, CryIAb, CryIAc, CryIIA, CryIIIA, CryIIIB2, Cry9c Cry2Ab, Cry3Bb and CryIF proteins or toxic fragments thereof and also hybrids or combinations thereof, especially the CryIF protein or hybrids derived from a CryIF protein (e.g. hybrid CryIA-CryIF proteins or toxic fragments thereof), the CryIA-type proteins or toxic fragments thereof, preferably the CryIAc protein or hybrids derived from the CryIAc protein (e.g. hybrid CryIAb-CryIAc proteins) or the CryIAb or Bt2 protein or toxic fragments thereof, the Cry2Ae, Cry2Af or Cry2Ag proteins or toxic fragments thereof, the CryIA.105 protein or a toxic fragment thereof, the VIP3Aa19 protein, the VIP3Aa20 protein, the VIP3A proteins produced in the COT202 or COT203 cotton events, the VIP3Aa protein or a toxic fragment thereof as described in Estruch et al. (1996), Proc Natl Acad Sci US A. 28;93(11):5389-94, the Cry proteins as described in WO2001/47952, the insecticidal proteins from *Xenorhabdus* (as described in WO98/50427), *Serratia* (particularly from S. *entomophila)* or *Photorhabdus* species strains, such as Tc-proteins from Photorhabdus as described in WO98/08932. Also any variants or mutants of any one of these proteins differing in some amino acids (1-10, preferably 1-5) from any of the above named sequences, particularly the sequence of their toxic fragment, or which are fused to a transit peptide, such

as a plastid transit peptide, or another protein or peptide, is included herein.

Another and particularly emphasized example of such properties is conferred tolerance to one or more herbicides, for example imidazolinones, sulphonylureas, glyphosate or phosphinothricin. Among DNA sequences encoding proteins which confer properties of tolerance to certain herbicides on the transformed plant cells and plants, mention will be particularly be made to the bar or PAT gene or the Streptomyces coelicolor gene described in WO2009/152359 which confers tolerance to glufosinate herbicides, a gene encoding a suitable EPSPS (5-Enolpyruvylshikimat-3-phosphat-synthase) which confers tolerance to herbicides having EPSPS as a target, especially herbicides such as glyphosate and its salts, a gene encoding glyphosate-n-acetyltransferase, or a gene encoding glyphosate oxidoreductase. Further suitable herbicide tolerance traits include at least one ALS (acetolactate synthase) inhibitor (e.g. WO2007/024782), a mutated Arabidopsis ALS/AHAS gene (e.g. U.S. Patent 6,855,533), genes encoding 2,4-D-monooxygenases conferring tolerance to 2,4-D (2,4- dichlorophenoxyacetic acid) and genes encoding Dicamba monooxygenases conferring tolerance to dicamba (3,6-dichloro-2- methoxybenzoic acid).

Yet another example of such properties is resistance to one or more phytopathogenic fungi, for example Asian Soybean Rust. Among DNA sequences encoding proteins which confer properties of resistance to such diseases, mention will particularly be made of the genetic material from *glycine tomentella,* for example from any one of publically available accession lines PI441001 , PI483224, PI583970, PI446958, PI499939, PI505220, PI499933, PI441008, PI505256 or PI446961 as described in WO2019/103918.

Further and particularly emphasized examples of such properties are increased resistance against bacteria and/or viruses owing, for example, to systemic acquired resistance (SAR), systemin, phytoalexins, elicitors and also resistance genes and correspondingly expressed proteins and toxins.

Particularly useful transgenic events in transgenic plants or plant cultivars which can be treated with preference in accordance with the invention include Event 531/ PV-GHBK04 (cotton, insect control, described in WO2002/040677), Event 1143-14A (cotton, insect control, not deposited, described in WO2006/128569); Event 1143-51B (cotton, insect control, not deposited, described in WO2006/128570); Event 1445 (cotton, herbicide tolerance, not deposited, described in US-A 2002-120964 or WO2002/034946); Event 17053 (rice, herbicide tolerance, deposited as PTA-9843, described in WO2010/117737); Event 17314 (rice, herbicide tolerance, deposited as PTA-9844, described in WO2010/117735); Event 281-24-236 (cotton, insect control - herbicide tolerance, deposited as PTA-6233, described in WO2005/103266 or US-A 2005-216969); Event 3006-210-23 (cotton, insect control - herbicide tolerance, deposited as PTA-6233, described in US-A 2007-143876 orWO2005/103266); Event 3272 (corn, quality trait, deposited as PTA-9972, described in WO2006/098952 or US-A 2006-230473); Event 33391 (wheat, herbicide tolerance, deposited as PTA-2347, described in WO2002/027004), Event 40416 (corn, insect control - herbicide tolerance, deposited as ATCC PTA-11508, described in WO 11/075593); Event 43A47 (corn, insect control - herbicide tolerance, deposited as ATCC PTA-11509, described in WO2011/075595); Event 5307 (corn, insect control, deposited as ATCC PTA-9561, described in WO2010/077816); Event ASR-368 (bent grass, herbicide tolerance, deposited as ATCC PTA-4816, described in US-A 2006-162007 or WO2004/053062); Event B16 (corn, herbicide tolerance, not deposited, described in US-A 2003-126634); Event BPS-CV127- 9 (soybean, herbicide tolerance, deposited as NCIMB No. 41603, described in WO2010/080829); Event BLRl (oilseed rape, restoration of male sterility, deposited as NCIMB 41193, described in WO2005/074671), Event CE43-67B (cotton, insect control, deposited as DSM ACC2724, described in US-A 2009-217423 or WO2006/128573); Event CE44-69D (cotton, insect control, not deposited, described in US-A 2010- 0024077); Event CE44-69D (cotton, insect control, not deposited, described in WO2006/128571); Event CE46-02A (cotton, insect control, not deposited, described in WO2006/128572); Event COT102 (cotton, insect control, not deposited, described in US-A 2006-130175 or WO2004/039986); Event COT202 (cotton, insect control, not deposited, described in US-A 2007-067868 or WO2005/054479); Event COT203 (cotton, insect control, not deposited, described in WO2005/054480); ); Event DAS21606-3 / 1606 (soybean, herbicide tolerance, deposited as PTA-11028, described in WO2012/033794), Event DAS40278 (corn, herbicide tolerance, deposited as ATCC PTA-10244, described in WO2011/022469); Event DAS-44406-6 / pDAB8264.44.06.l (soybean, herbicide tolerance, deposited as PTA-11336, described in WO2012/075426), Event DAS-14536-7 /pDAB8291.45.36.2 (soybean, herbicide tolerance, deposited as PTA-11335, described in WO2012/075429), Event DAS-59122-7 (corn, insect control - herbicide tolerance, deposited as ATCC PTA 11384, described in US-A 2006-070139); Event DAS-59132 (corn, insect control - herbicide tolerance, not deposited, described in WO2009/100188); Event DAS68416 (soybean, herbicide tolerance, deposited as ATCC PTA-10442, described in WO2011/066384 or WO2011/066360); Event DP-098140-6 (corn, herbicide tolerance, deposited as ATCC PTA-8296, described in US-A 2009- 137395 or WO 08/112019); Event DP-305423-1 (soybean, quality trait, not deposited, described in US-A 2008-312082 or WO2008/054747); Event DP-32138-1 (corn, hybridization system, deposited as ATCC PTA-9158, described in US-A 2009-0210970 or WO2009/103049); Event DP-356043-5 (soybean, herbicide tolerance, deposited as ATCC PTA-8287, described in US-A 2010-0184079 or WO2008/002872); Event EE-I (brinjal, insect control, not deposited, described in WO 07/091277); Event Fil 17 (corn, herbicide tolerance, deposited as ATCC 209031, described in US-A 2006-059581 or WO 98/044140); Event FG72 (soybean, herbicide tolerance, deposited as PTA-11041, described in WO2011/063413), Event GA21 (corn, herbicide tolerance, deposited as ATCC 209033,

described in US-A 2005-086719 or WO 98/044140); Event GG25 (corn, herbicide tolerance, deposited as ATCC 209032, described in US-A 2005-188434 or WO98/044140); Event GHB119 (cotton, insect control - herbicide tolerance, deposited as ATCC PTA-8398, described in WO2008/151780); Event GHB614 (cotton, herbicide tolerance, deposited as ATCC PTA-6878, described in US-A 2010-050282 or WO2007/017186); Event GJ11 (corn, herbicide tolerance, deposited as ATCC 209030, described in US-A 2005-188434 or WO98/044140); Event GM RZ13 (sugar beet, virus resistance, deposited as NCIMB-41601, described in WO2010/076212); Event H7-l (sugar beet, herbicide tolerance, deposited as NCIMB 41158 or NCIMB 41159, described in US-A 2004-172669 or WO 2004/074492); Event JOPLINl (wheat, disease tolerance, not deposited, described in US-A 2008-064032); Event LL27 (soybean, herbicide tolerance, deposited as NCIMB41658, described in WO2006/108674 or US-A 2008-320616); Event LL55 (soybean, herbicide tolerance, deposited as NCIMB 41660, described in WO 2006/108675 or US-A 2008-196127); Event LLcotton25 (cotton, herbicide tolerance, deposited as ATCC PTA-3343, described in WO2003/013224 or US- A 2003-097687); Event LLRICE06 (rice, herbicide tolerance, deposited as ATCC 203353, described in US 6,468,747 or WO2000/026345); Event LLRice62 ( rice, herbicide tolerance, deposited as ATCC 203352, described in WO2000/026345), Event LLRICE601 (rice, herbicide tolerance, deposited as ATCC PTA-2600, described in US-A 2008-2289060 or WO2000/026356); Event LY038 (corn, quality trait, deposited as ATCC PTA-5623, described in US-A 2007-028322 or WO2005/061720); Event MIR162 (corn, insect control, deposited as PTA-8166, described in US-A 2009-300784 or WO2007/142840); Event MIR604 (corn, insect control, not deposited, described in US-A 2008-167456 or WO2005/103301); Event MON15985 (cotton, insect control, deposited as ATCC PTA-2516, described in US-A 2004-250317 or WO2002/100163); Event MON810 (corn, insect control, not deposited, described in US-A 2002-102582); Event MON863 (corn, insect control, deposited as ATCC PTA-2605, described in WO2004/011601 or US-A 2006-095986); Event MON87427 (corn, pollination control, deposited as ATCC PTA-7899, described in WO2011/062904); Event MON87460 (corn, stress tolerance, deposited as ATCC PTA-8910, described in WO2009/111263 or US-A 2011-0138504); Event MON87701 (soybean, insect control, deposited as ATCC PTA- 8194, described in US-A 2009-130071 or WO2009/064652); Event MON87705 (soybean, quality trait - herbicide tolerance, deposited as ATCC PTA-9241, described in US-A 2010-0080887 or WO2010/037016); Event MON87708 (soybean, herbicide tolerance, deposited as ATCC PTA-9670, described in WO2011/034704); Event MON87712 (soybean, yield, deposited as PTA-10296, described in WO2012/051199), Event MON87754 (soybean, quality trait, deposited as ATCC PTA-9385, described in WO2010/024976); Event MON87769 (soybean, quality trait, deposited as ATCC PTA- 8911, described in US-A 2011-0067141 or WO2009/102873); Event MON88017 (corn, insect control - herbicide tolerance, deposited as ATCC PTA-5582, described in US-A 2008-028482 or WO2005/059103); Event MON88913 (cotton, herbicide tolerance, deposited as ATCC PTA-4854, described in WO2004/072235 or US-A 2006-059590); Event MON88302 (oilseed rape, herbicide tolerance, deposited as PTA-10955, described in WO2011/153186), Event MON88701 (cotton, herbicide tolerance, deposited as PTA-11754, described in WO2012/134808), Event MON89034 (corn, insect control, deposited as ATCC PTA-7455, described in WO 07/140256 or US-A 2008-260932); Event MON89788 (soybean, herbicide tolerance, deposited as ATCC PTA-6708, described in US-A 2006-282915 or WO2006/130436); Event MSl 1 (oilseed rape, pollination control - herbicide tolerance, deposited as ATCC PTA-850 or PTA-2485, described in WO2001/031042); Event MS8 (oilseed rape, pollination control - herbicide tolerance, deposited as ATCC PTA-730, described in WO2001/041558 or US-A 2003-188347); Event NK603 (corn, herbicide tolerance, deposited as ATCC PTA-2478, described in US-A 2007-292854); Event PE-7 (rice, insect control, not deposited, described in WO2008/114282); Event RF3 (oilseed rape, pollination control - herbicide tolerance, deposited as ATCC PTA-730, described in WO2001/041558 or US-A 2003-188347); Event RT73 (oilseed rape, herbicide tolerance, not deposited, described in WO2002/036831 or US-A 2008-070260); Event SYHT0H2 / SYN-000H2-5 (soybean, herbicide tolerance, deposited as PTA-11226, described in WO2012/082548), Event T227-1 (sugar beet, herbicide tolerance, not deposited, described in WO2002/44407 or US-A 2009-265817); Event T25 (corn, herbicide tolerance, not deposited, described in US-A 2001-029014 or WO2001/051654); Event T304-40 (cotton, insect control - herbicide tolerance, deposited as ATCC PTA-8171, described in US-A 2010-077501 or WO2008/122406); Event T342-142 (cotton, insect control, not deposited, described in WO2006/128568); Event TC1507 (corn, insect control - herbicide tolerance, not deposited, described in US-A 2005-039226 or WO2004/099447); Event VIP1034 (corn, insect control - herbicide tolerance, deposited as ATCC PTA-3925, described in WO2003/052073), Event 32316 (corn, insect control-herbicide tolerance, deposited as PTA-11507, described in WO2011/084632), Event 4114 (corn, insect control-herbicide tolerance, deposited as PTA-11506, described in WO2011/084621), event EE-GM3 / FG72 (soybean, herbicide tolerance, ATCC Accession N° PTA-11041) optionally stacked with event EE-GM1/LL27 or event EE-GM2/LL55 (WO2011/063413A2), event DAS-68416-4 (soybean, herbicide tolerance, ATCC Accession N° PTA-10442, WO2011/066360A1), event DAS-68416-4 (soybean, herbicide tolerance, ATCC Accession N° PTA-10442, WO2011/066384A1), event DP-040416-8 (corn, insect control, ATCC Accession N° PTA-11508, WO2011/075593A1), event DP-043A47-3 (corn, insect control, ATCC Accession N° PTA-11509, WO2011/075595A1), event DP- 004114-3 (corn, insect control, ATCC Accession N° PTA-11506, WO2011/084621A1), event DP-032316-8 (corn, insect control, ATCC Accession N° PTA-11507, WO2011/084632A1), event MON-88302-9 (oilseed rape, herbicide tolerance, ATCC Accession N° PTA-10955, WO2011/153186A1), event DAS-21606-3 (soybean, herbicide tolerance, ATCC Accession No.

PTA-11028, WO2012/033794A2), event MON-87712-4 (soybean, quality trait, ATCC Accession N°. PTA-10296, WO2012/051199A2), event DAS-44406-6 (soybean, stacked herbicide tolerance, ATCC Accession N°. PTA-11336, WO2012/075426A1), event DAS-14536-7 (soybean, stacked herbicide tolerance, ATCC Accession N°. PTA-11335, WO2012/075429A1), event SYN-000H2-5 (soybean, herbicide tolerance, ATCC Accession N°. PTA-11226, WO2012/082548A2), event DP-061061-7 (oilseed rape, herbicide tolerance, no deposit N° available, WO2012071039A1), event DP-073496-4 (oilseed rape, herbicide tolerance, no deposit N° available, US2012131692), event 8264.44.06.1 (soybean, stacked herbicide tolerance, Accession N° PTA-11336, WO2012075426A2), event 8291.45.36.2 (soybean, stacked herbicide tolerance, Accession N°. PTA-11335, WO2012075429A2), event SYHT0H2 (soybean, ATCC Accession N°. PTA-11226, WO2012/082548A2), event MON88701 (cotton, ATCC Accession N° PTA-11754, WO2012/134808A1), event KK179-2 (alfalfa, ATCC Accession N° PTA-11833, WO2013/003558A1), event pDAB8264.42.32.1 (soybean, stacked herbicide tolerance, ATCC Accession N° PTA-11993, WO2013/010094A1), event MZDT09Y (corn, ATCC Accession N° PTA-13025, WO2013/012775A1).

Further, a list of such transgenic event(s) is provided by the United States Department of Agriculture's (USDA) Animal and Plant Health Inspection Service (APHIS) and can be found on their website on the world wide web at aphis.usda.gov. For this application, the status of such list as it is/was on the filing date of this application, is relevant.

The genes/events which impart the desired traits in question may also be present in combinations with one another in the transgenic plants. Examples of transgenic plants which may be mentioned are the important crop plants, such as cereals (wheat, rice, triticale, barley, rye, oats), maize, soya beans, potatoes, sugar beet, sugar cane, tomatoes, peas and other types of vegetable, cotton, tobacco, oilseed rape and also fruit plants (with the fruits apples, pears, citrus fruits and grapes), with particular emphasis being given to maize, soya beans, wheat, rice, potatoes, cotton, sugar cane, tobacco and oilseed rape. Traits which are particularly emphasized are the increased resistance of the plants to insects, arachnids, nematodes and slugs and snails, as well as the increased resistance of the plants to one or more herbicides.

Commercially available examples of such plants, plant parts or plant seeds that may be treated with preference in accordance with the invention include commercial products, such as plant seeds, sold or distributed under the GENUITY®, DROUGHTGARD®, SMARTSTAX®, RIB COMPLETE®, ROUNDUP READY®, VT DOUBLE PRO®, VT TRIPLE PRO®, BOLLGARD II®, ROUNDUP READY 2 YIELD®, YIELDGARD®, ROUNDUP READY® 2 XTEN^DTM^, INTACTA RR2 PRO®, VISTIVE GOLD®, and/or XTENDFLEX™ trade names.

*Pathogens*

Non-limiting examples of pathogens of fungal diseases which may be treated in accordance with the invention include:

diseases caused by powdery mildew pathogens, for example *Blumeria* species, for example *Blumeria graminis*; *Podosphaera* species, for example *Podosphaera leucotricha*; *Sphaerotheca* species, for example *Sphaerotheca fuliginea*; *Uncinula* species, for example *Erysiphe necator;*

diseases caused by rust disease pathogens, for example *Gymnosporangium* species, for example *Gymnosporangium sabinae; Hemileia* species, for example *Hemileia vastatrix; Phakopsora* species, for example *Phakopsora pachyrhizi, Phakopsora meibomiae* or *Phakopsora euvitis; Puccinia* species, for example *Puccinia recondita, Puccinia graminis* oder *Puccinia striiformis*; *Uromyces* species, for example *Uromyces appendiculatus*;

diseases caused by pathogens from the group of the Oomycetes, for example *Albugo* species, for example *Albugo candida; Bremia* species, for example *Bremia lactucae*; *Peronospora* species, for example *Peronospora pisi* or *P. brassicae; Phytophthora* species, for example *Phytophthora infestans*; *Plasmopara* species, for example *Plasmopara viticola*; *Pseudoperonospora* species, for example *Pseudoperonospora humuli* or *Pseudoperonospora cubensis; Pythium* species, for example *Pythium ultimum;*

leaf blotch diseases and leaf wilt diseases caused, for example, by *Alternaria* species, for example *Alternaria solani; Cercospora* species, for example *Cercospora beticola*; *Cladiosporium* species, for example *Cladiosporium cucumerinum; Cochliobolus* species, for example Cochliobolus sativus (conidial form: *Drechslera,* syn: *Helminthosporium)* or *Cochliobolus miyabeanus; Colletotrichum* species, for example *Colletotrichum lindemuthanium; Corynespora* species, for example *Corynespora cassiicola*; *Cycloconium* species, for example *Cycloconium oleaginum; Diaporthe* species, for example *Diaporthe citri; Elsinoe* species, for example *Elsinoe fawcettii; Gloeosporium* species, for example *Gloeosporium laeticolor*; *Glomerella* species, for example *Glomerella cingulata*; *Guignardia* species, for example *Guignardia bidwelli; Leptosphaeria* species, for example *Leptosphaeria maculans*; *Magnaporthe* species, for example *Magnaporthe grisea*; *Microdochium* species, for example *Microdochium nivale*; *Mycosphaerella* species, for example *Zymoseptoria tritici* (syn: *Mycosphaerella graminicola), Mycosphaerella arachidicola* or *Mycosphaerella*

*fijiensis; Phaeosphaeria* species, for example *Phaeosphaeria nodorum; Pyrenophora* species, for example *Pyrenophora teres* or *Pyrenophora tritici repentis; Ramularia* species, for example *Ramularia collo-cygni* or *Ramularia areola; Rhynchosporium* species, for example *Rhynchosporium secalis; Septoria* species, for example *Septoria apii* or *Septoria lycopersici*; *Stagonospora* species, for example *Stagonospora nodorum; Typhula* species, for example *Typhula incarnata*; *Venturia* species, for example *Venturia inaequalis*;

root and stem diseases caused, for example, by *Corticium* species, for example *Corticium graminearum; Fusarium* species, for example *Fusarium oxysporum; Gaeumannomyces* species, for example *Gaeumannomyces graminis*; *Plasmodiophora* species, for example *Plasmodiophora brassicae*; *Rhizoctonia* species, for example *Rhizoctonia solani*; *Sarocladium* species, for example *Sarocladium oryzae*; *Sclerotium* species, for example *Sclerotium oryzae*; *Tapesia* species, for example *Tapesia acuformis*; *Thielaviopsis* species, for example *Thielaviopsis basicola*;

ear and panicle diseases (including corn cobs) caused, for example, by *Alternaria* species, for example *Alternaria spp.*; *Aspergillus* species, for example *Aspergillus flavus*; *Cladosporium* species, for example *Cladosporium cladosporioides*; *Claviceps* species, for example *Claviceps purpurea; Fusarium* species, for example *Fusarium culmorum; Gibberella* species, for example *Gibberella zeae; Monographella* species, for example *Monographella nivalis; Stagnospora* species, for example *Stagnospora nodorum*;

diseases caused by smut fungi, for example *Sphacelotheca* species, for example *Sphacelotheca reiliana*; *Tilletia* species, for example *Tilletia caries* or *Tilletia controversa*; *Urocystis* species, for example *Urocystis occulta*; *Ustilago* species, for example *Ustilago nuda*;

fruit rot caused, for example, by *Aspergillus* species, for example *Aspergillus flavus; Botrytis* species, for example *Botrytis cinerea; Monilinia* species, for example *Monilinia laxa*; *Penicillium* species, for example *Penicillium expansum* or *Penicillium purpurogenum; Rhizopus* species, for example *Rhizopus stolonifer; Sclerotinia* species, for example *Sclerotinia sclerotiorum; Verticilium* species, for example *Verticilium alboatrum*;

seed- and soil-borne rot and wilt diseases, and also diseases of seedlings, caused, for example, by *Alternaria* species, for example *Alternaria brassicicola*; *Aphanomyces* species, for example *Aphanomyces euteiches; Ascochyta* species, for example *Ascochyta lentis*; *Aspergillus* species, for example *Aspergillus flavus; Cladosporium* species, for example *Cladosporium herbarum*; *Cochliobolus* species, for example *Cochliobolus sativus* (conidial form: *Drechslera,* Bipolaris Syn: *Helminthosporium); Colletotrichum* species, for example *Colletotrichum coccodes*; *Fusarium* species, for example *Fusarium culmorum; Gibberella* species, for example *Gibberella zeae*; *Macrophomina* species, for example *Macrophomina phaseolina*; *Microdochium* species, for example *Microdochium nivale; Monographella* species, for example *Monographella nivalis*; *Penicillium* species, for example *Penicillium expansum*; *Phoma* species, for example *Phoma lingam*; *Phomopsis* species, for example *Phomopsis sojae*; *Phytophthora* species, for example *Phytophthora cactorum; Pyrenophora* species, for example *Pyrenophora graminea*; *Pyricularia* species, for example *Pyricularia oryzae; Pythium* species, for example *Pythium ultimum; Rhizoctonia* species, for example *Rhizoctonia solani; Rhizopus* species, for example *Rhizopus oryzae; Sclerotium* species, for example *Sclerotium rolfsii; Septoria* species, for example *Septoria nodorum; Typhula* species, for example *Typhula incarnata*; *Verticillium* species, for example *Verticillium dahliae*;

cancers, galls and witches' broom caused, for example, by *Nectria* species, for example *Nectria galligena*;

wilt diseases caused, for example, by *Verticillium* species, for example *Verticillium longisporum; Fusarium* species, for example *Fusarium oxysporum;*

deformations of leaves, flowers and fruits caused, for example, by *Exobasidium* species, for example *Exobasidium vexans; Taphrina* species, for example *Taphrina deformans;*

degenerative diseases in woody plants, caused, for example, by *Esca* species, for example *Phaeomoniella chlamydospora, Phaeoacremonium aleophilum* or *Fomitiporia mediterranea*; *Ganoderma* species, for example *Ganoderma boninense;*

diseases of plant tubers caused, for example, by *Rhizoctonia* species, for example *Rhizoctonia solani*; *Helminthosporium* species, for example *Helminthosporium solani*;

diseases caused by bacterial pathogens, for example *Xanthomonas* species, for example *Xanthomonas campestris*

*pv. oryzae*; *Pseudomonas* species, for example *Pseudomonas syringae pv. lachrymans*; *Erwinia* species, for example *Erwinia amylovora*; *Liberibacter* species, for example *Liberibacter asiaticus*; *Xyella* species, for example *Xylella fastidiosa*; *Ralstonia* species, for example *Ralstonia solanacearum*; *Dickeya* species, for example *Dickeya solani*; *Clavibacter* species, for example *Clavibacter michiganensis*; *Streptomyces* species, for example *Streptomyces scabies.*

diseases of soya beans:

Fungal diseases on leaves, stems, pods and seeds caused, for example, by *Alternaria* leaf spot (*Alternaria spec. atrans tenuissima*), *Anthracnose (Colletotrichum gloeosporoides dematium var. truncatum),* brown spot (*Septoria glycines*), *cercospora* leaf spot and blight (*Cercospora kikuchii*), *choanephora* leaf blight (*Choanephora infundibulifera trispora (Syn.)*), *dactuliophora* leaf spot (*Dactuliophora glycines*), downy mildew (*Peronospora manshurica*), *drechslera* blight (*Drechslera glycini*), frogeye leaf spot (*Cercospora sojina*), *leptosphaerulina* leaf spot (*Leptosphaerulina trifolii), phyllostica* leaf spot (*Phyllosticta sojaecola*), pod and stem blight (*Phomopsis sojae*), powdery mildew (*Microsphaera diffusa*), *pyrenochaeta* leaf spot (*Pyrenochaeta glycines*), rhizoctonia aerial, foliage, and web blight (*Rhizoctonia solani*), rust (*Phakopsora pachyrhizi, Phakopsora meibomiae, Phakopsora euvitis*), scab (*Sphaceloma glycines*), *stemphylium* leaf blight (*Stemphylium botryosum*), sudden death syndrome (*Fusarium virguliforme*), target spot (*Corynespora cassiicola*).

Fungal diseases on roots and the stem base caused, for example, by black root rot (*Calonectria crotalariae*), charcoal rot (*Macrophomina phaseolina*), fusarium blight or wilt, root rot, and pod and collar rot (*Fusarium oxysporum, Fusarium orthoceras, Fusarium semitectum, Fusarium equiseti*), mycoleptodiscus root rot (*Mycoleptodiscus terrestris*), neocosmospora (*Neocosmospora vasinfecta*), pod and stem blight (*Diaporthe phaseolorum*), stem canker (*Diaporthe phaseolorum var. caulivora*), phytophthora rot (*Phytophthora megasperma*), brown stem rot (*Phialophora gregata*), pythium rot (*Pythium aphanidermatum, Pythium irregulare, Pythium debaryanum, Pythium myriotylum, Pythium ultimum*), rhizoctonia root rot, stem decay, and damping-off (*Rhizoctonia solani*), sclerotinia stem decay (*Sclerotinia sclerotiorum*), sclerotinia southern blight (*Sclerotinia rolfsii*), thielaviopsis root rot (*Thielaviopsis basicola*).

*Mycotoxins*

In addition, the compound combination and the composition of the invention may reduce the mycotoxin content in the harvested material and the foods and feeds prepared therefrom. Mycotoxins include particularly, but not exclusively, the following: deoxynivalenol (DON), nivalenol, 15-Ac-DON, 3-Ac-DON, T2- and HT2-toxin, fumonisins, zearalenon, moniliformin, fusarin, diaceotoxyscirpenol (DAS), beauvericin, enniatin, fusaroproliferin, fusarenol, ochratoxins, patulin, ergot alkaloids and aflatoxins which can be produced, for example, by the following fungi: *Fusarium* spec., such as *F. acuminatum, F. asiaticum, F. avenaceum, F. crookwellense, F. culmorum, F. graminearum (Gibberella zeae), F. equiseti, F. fujikoroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F. tricinctum, F. verticillioides,* and also by *Aspergillus* spec., such as *A. flavus, A. parasiticus, A. nomius, A. ochraceus, A. clavatus, A. terreus, A. versicolor, Penicillium* spec., such as *P. verrucosum, P. viridicatum, P. citrinum, P. expansum, P. claviforme, P. roqueforti, Claviceps* spec., such as *C. purpurea, C. fusiformis, C. paspali, C. africana, Stachybotrys* spec. and others.

*Material Protection*

The compound combinations according to the invention and compositions comprising such combination can also be used in the protection of industrial materials, for protection of industrial materials against attack and destruction by phytopathogenic fungi.

In addition, the compound combinations according to the invention and compositions comprising such combination can be used as antifouling compositions, alone or in combinations with other active ingredients.

Industrial materials in the present context are understood to mean inanimate materials which have been prepared for use in industry. For example, industrial materials which are to be protected from microbial alteration or destruction may be adhesives, glues, paper, wallpaper and board/cardboard, textiles, carpets, leather, wood, fibers and tissues, paints and plastic articles, cooling lubricants and other materials which can be infected with or destroyed by microorganisms. Parts of production plants and buildings, for example cooling-water circuits, cooling and heating systems and ventilation and air-conditioning units, which may be impaired by the proliferation of microorganisms may also be mentioned within the scope of the materials to be protected. Industrial materials within the scope of the present invention preferably include adhesives, sizes, paper and card, leather, wood, paints, cooling lubricants and heat transfer fluids, more

preferably wood.

The compound combination and the composition of the invention may prevent adverse effects, such as rotting, decay, discoloration, decoloration or formation of mould.

In the case of treatment of wood the compound combination and the composition of the invention may also be used against fungal diseases liable to grow on or inside timber.

Timber means all types of species of wood, and all types of working of this wood intended for construction, for example solid wood, high-density wood, laminated wood, and plywood. In addition, the compound and the composition of the invention may be used to protect objects which come into contact with saltwater or brackish water, especially hulls, screens, nets, buildings, moorings and signalling systems, from fouling.

The compound combination and the composition of the invention may also be employed for protecting storage goods. Storage goods are understood to mean natural substances of vegetable or animal origin or processed products thereof which are of natural origin, and for which long-term protection is desired. Storage goods of vegetable origin, for example plants or plant parts, such as stems, leaves, tubers, seeds, fruits, grains, may be protected freshly harvested or after processing by (pre)drying, moistening, comminuting, grinding, pressing or roasting. Storage goods also include timber, both unprocessed, such as construction timber, electricity poles and barriers, or in the form of finished products, such as furniture. Storage goods of animal origin are, for example, hides, leather, furs and hairs. The compound combination and the composition of the invention may prevent adverse effects, such as rotting, decay, discoloration, decoloration or formation of mould.

Microorganisms capable of degrading or altering industrial materials include, for example, bacteria, fungi, yeasts, algae and slime organisms. The compound combination and the composition of the invention preferably act against fungi, especially moulds, wood-discoloring and wood-destroying fungi (*Ascomycetes, Basidiomycetes, Deuteromycetes* and *Zygomycetes*), and against slime organisms and algae. Examples include microorganisms of the following genera: *Alternaria,* such as *Alternaria tennis; Aspergillus,* such as *Aspergillus niger; Chaetomium,* such as *Chaetomium globosum*; *Coniophora,* such as *Coniophora puetana*; *Lentinus,* such as *Lentinus tigrinus*; *Penicillium,* such as *Penicillium glaucum*; *Polyporus,* such as *Polyporus versicolor*; *Aureobasidium,* such as *Aureobasidium pullulans*; *Sclerophoma,* such as *Sclerophoma pityophila*; *Trichoderma,* such as *Trichoderma viride*; *Ophiostoma spp., Ceratocystis spp., Humicola spp., Petriella spp., Trichurus spp., Coriolus spp., Gloeophyllum spp., Pleurotus spp., Poria spp., Serpula spp.* and *Tyromyces spp., Cladosporium spp., Paecilomyces spp. Mucor spp., Escherichia,* such as *Escherichia coli; Pseudomonas,* such as *Pseudomonas aeruginosa*; *Staphylococcus,* such as *Staphylococcus aureus, Candida spp.* and *Saccharomyces spp.,* such as *Saccharomyces cerevisae.*

*Seed Treatment*

The compound combination and the composition of the invention may also be used to protect seeds from unwanted microorganisms, such as phytopathogenic microorganisms, for instance phytopathogenic fungi or phytopathogenic oomycetes. The term seed(s) as used herein include dormant seeds, primed seeds, pregerminated seeds and seeds with emerged roots and leaves.

Thus, the present invention also relates to a method for protecting seeds from unwanted microorganisms which comprises the step of treating the seeds with the compound combination or the composition of the invention, wherein the seeds may be treated simultaneously, separately or sequentially with the compounds (A) and (B).

The treatment of seeds with the compound combination or the composition of the invention protects the seeds from phytopathogenic microorganisms, but also protects the germinating seeds, the emerging seedlings and the plants after emergence from the treated seeds. Therefore, the present invention also relates to a method for protecting seeds, germinating seeds and emerging seedlings.

The seeds treatment may be performed prior to sowing, at the time of sowing or shortly thereafter.

When the seeds treatment is performed prior to sowing (e.g. so-called on-seed applications), the seeds treatment may be performed as follows: the seeds may be placed into a mixer with a desired amount of the compound combination or the composition of the invention, the seeds and the compound combination or the composition of the invention are mixed until an homogeneous distribution on seeds is achieved. If appropriate, the seeds may then be dried.

The invention also relates to seeds coated with the compound combination or the composition of the invention.

Preferably, the seeds are treated in a state in which it is sufficiently stable for no damage to occur in the course of treatment. In general, seeds can be treated at any time between harvest and shortly after sowing. It is customary to use seeds which have been separated from the plant and freed from cobs, shells, stalks, coats, hairs or the flesh of the fruits. For example, it is possible to use seeds which have been harvested, cleaned and dried down to a moisture content of less than 15% by weight. Alternatively, it is also possible to use seeds which, after drying, for example, have been treated with water and then dried again, or seeds just after priming, or seeds stored in primed conditions or pre-germinated seeds, or seeds sown on nursery trays, tapes or paper.

The amount of the compound combination or the composition of the invention applied to the seeds is typically

such that the germination of the seed is not impaired, or that the resulting plant is not damaged. This must be ensured particularly in case the compounds contained in the compound combination of the invention would exhibit phytotoxic effects at certain application rates. The intrinsic phenotypes of transgenic plants should also be taken into consideration when determining the amount of the compound combination of the invention to be applied to the seed in order to achieve optimum seed and germinating plant protection with a minimum amount of compound being employed.

The compounds contained in the compound combination of the invention can be applied as such, directly to the seeds, i.e. without the use of any other components and without having been diluted. They can be applied in a simultaneous, separate or sequential manner. Also compositions containing the compounds contained in the compound combination of the invention, such as the composition of the invention, can be applied to the seeds.

The compound combination and the composition of the invention are suitable for protecting seeds of any plant variety. Preferred seeds are that of cereals (such as wheat, barley, rye, millet, triticale, and oats), oilseed rape, maize, cotton, soybean, rice, potatoes, sunflower, beans, coffee, peas, beet (e.g. sugar beet and fodder beet), peanut, vegetables (such as tomato, cucumber, onions and lettuce), lawns and ornamental plants. More preferred are seeds of wheat, soybean, oilseed rape, maize and rice.

The compound combination and the composition of the invention may be used for treating transgenic seeds, in particular seeds of plants capable of expressing a polypeptide or protein which acts against pests, herbicidal damage or abiotic stress, thereby increasing the protective effect. Seeds of plants capable of expressing a polypeptide or protein which acts against pests, herbicidal damage or abiotic stress may contain at least one heterologous gene which allows the expression of said polypeptide or protein. These heterologous genes in transgenic seeds may originate, for example, from microorganisms of the species Bacillus, Rhizobium, Pseudomonas, Serratia, Trichoderma, Clavibacter, Glomus or Gliocladium. These heterologous genes preferably originate from Bacillus sp., in which case the gene product is effective against the European com borer and/or the Western corn rootworm. Particularly preferably, the heterologous genes originate from Bacillus thuringiensis.

*Application*

The compound combination of the invention can be applied as such, or for example in the form of as readyto-use solutions, emulsions, water- or oil-based suspensions, powders, wettable powders, pastes, soluble powders, dusts, soluble granules, granules for broadcasting, suspoemulsion concentrates, natural products impregnated with the compound combination of the invention, synthetic substances impregnated with the compound combination of the invention, fertilizers or microencapsulations in polymeric substances.

Application is accomplished in a customary manner, for example by watering, spraying, atomizing, broadcasting, dusting, foaming or spreading-on. It is also possible to deploy the compound combination of the invention by the ultra-low volume method, via a drip irrigation system or drench application, to apply it in-furrow or to inject it into the soil stem or trunk. It is further possible to apply the compound combination of the invention by means of a wound seal, paint or other wound dressing. The effective and plant-compatible amount of the compound combination of the invention which is applied to the plants, plant parts, fruits, seeds or soil will depend on various factors, such as the compound/composition employed, the subject of the treatment (plant, plant part, fruit, seed or soil), the type of treatment (dusting, spraying, seed dressing), the purpose of the treatment (curative and protective), the type of microorganisms, the development stage of the microorganisms, the sensitivity of the microorganisms, the crop growth stage and the environmental conditions.

When the compound combination of the invention is used as a fungicide, the application rates can vary within a relatively wide range, depending on the kind of application. For the treatment of plant parts, such as leaves, the application rate may range from 0.1 to 10 000 g/ha, preferably from 10 to 1000 g/ha, more preferably from 50 to 300 g/ha (in the case of application by watering or dripping, it is even possible to reduce the application rate, especially when inert substrates such as rockwool or perlite are used). For the treatment of seeds, the application rate may range from 0.1 to 200 g per 100 kg of seeds, preferably from 1 to 150 g per 100 kg of seeds, more preferably from 2.5 to 25 g per 100 kg of seeds, even more preferably from 2.5 to 12.5 g per 100 kg of seeds. For the treatment of soil, the application rate may range from 0.1 to 10 000 g/ha, preferably from 1 to 5000 g/ha. The outlined application rates refer to the total application rates of compounds (A) and (B) present in the compound combination of the present invention.

These application rates are merely examples and are not intended to limit the scope of the present invention.

The compound combination of the invention can be used in combination with models e.g. embedded in computer programs for site specific crop management, satellite farming, precision farming or precision agriculture. Such models support the site specific management of agricultural sites with data from various sources such as soils, weather, crops (e.g. type, growth stage, plant health), weeds (e.g. type, growth stage), diseases, pests, nutrients, water, moisture, biomass, satellite data, yield etc. with the purpose to optimize profitability, sustainability and protection of the environment. In particular, such models can help to optimize agronomical decisions, control the precision of pesticide applications and record the work performed.

As an example, the compound of the invention can be applied to a crop plant according to appropriate dose

regime if a model models the development of a fungal disease and calculates that a threshold has been reached for which it is recommendable to apply the compound of the invention to the crop plant.

Commercially available systems which include agronomic models are e.g. FieldScripts™ from The Climate Corporation, Xarvio™ from BASF, AGLogic™ from John Deere, etc.

The compounds of the invention can also be used in combination with smart spraying equipment such as e.g. spot spraying or precision spraying equipment attached to or housed within a farm vehicle such as a tractor, robot, helicopter, airplane, unmanned aerial vehicle (UAV) such as a drone, etc. Such an equipment usually includes input sensors (such as e.g. a camera) and a processing unit configured to analyze the input data and configured to provide a decision based on the analysis of the input data to apply the compound of the invention to the crop plants (respectively the weeds) in a specific and precise manner. The use of such smart spraying equipment usually also requires positions systems (e.g. GPS receivers) to localize recorded data and to guide or to control farm vehicles; geographic information systems (GIS) to represent the information on intelligible maps, and appropriate farm vehicles to perform the required farm action such as the spraying.

In an example, fungal diseases can be detected from imagery acquired by a camera. In an example fungal diseases can be identified and/or classified based on that imagery. Such identification and/ classification can make use of image processing algorithms. Such image processing algorithms can utilize machine learning algorithms, such as trained neutral networks, decision trees and utilize artificial intelligence algorithms. In this manner, the compounds described herein can be applied only where needed.

The invention is illustrated by the examples below. However, the invention is not limited to the examples.

## Examples

The advanced fungicidal activity of the active compound combinations according to the invention is evident from the examples below. While the individual active compounds exhibit weaknesses with regard to the fungicidal activity, the combinations have an activity which exceeds a simple addition of activities.

A synergistic effect of fungicides is always present when the fungicidal activity of the active compound combinations exceeds the total of the activities of the active compounds when applied individually. The expected activity for a given combination of two active compounds can be calculated as follows (cf. Colby, S.R., "Calculating Synergistic and Antagonistic Responses of Herbicide Combinations", Weeds 1967, 15, 20-22):
If

X is the efficacy when active compound A is applied at an application rate of m ppm (or g/ha),

Y is the efficacy when active compound B is applied at an application rate of n ppm (or g/ha), and

E is the efficacy when the active compounds A and B are applied at application rates of m and n ppm (or g/ha), respectively,

then

$$E = X + Y - \frac{X \cdot Y}{100}$$

For ternary mixtures the following Colby equation results:
If

X is the efficacy when active compound A is applied at an application rate of m ppm (or g/ha),

Y is the efficacy when active compound B is applied at an application rate of n ppm (or g/ha),

Z is the efficacy when active compound C is applied at an application rate of o ppm (or g/ha), and

E is the efficacy when the active compounds A, B and C are applied at application rates of m, n and o ppm (or g/ha), respectively,

then

$$E = X + Y + Z - \frac{X \cdot Y}{100} - \frac{X \cdot Z}{100} - \frac{Y \cdot Z}{100} + \frac{X \cdot Y \cdot Z}{100 \cdot 100}$$

The degree of efficacy, expressed in % is denoted. 0 % means an efficacy which corresponds to that of the control while an efficacy of 100 % means that no disease is observed.

If the actual fungicidal activity exceeds the calculated value, then the activity of the combination is superadditive, i.e. a synergistic effect exists. In this case, the efficacy which was actually observed must be greater than the value for the expected efficacy (E) calculated from the abovementioned formula.

A further way of demonstrating a synergistic effect is the method of Tammes (cf. "Isoboles, a graphic representation of synergism in pesticides" in Neth. J. Plant Path., 1964, 70, 73-80).

Example A: *in vitro-Test* with fungal microorganisms

Wells of 96-well microtiter plates are filled with 10µl of a preparation of test compound or compound combination in methanol + emulsifier alkylaryl-polyglycol-ether. Thereafter, the solvent is evaporated in a hood. At the next step, into each well 100µl of liquid potato dextrose medium is given, that has been amended with an appropriate concentration of spores or mycelium suspension of the test fungus.

With the aid of a photometer the extinction in all wells is measured at the wavelength of 620nm.

The microtiter plates are incubated at 20°C and 85% relative humidity. The inhibition of growth is determined again photometrically 3-5 days after the application. Efficacy is calculated in relation to the untreated control, 0% efficacy means fungal growth as high as in untreated control while 100% efficacy means no fungal growth is measured.

The tables below clearly show that the observed activity of the active compound combination according to the invention is greater than the calculated activity, i.e. a synergistic effect is present.

**Table A1: *in vitro* -Test with *Alternaria alternata***

| (3.017) Metarylpicoxamid (ppm) | (I-1) (ppm) | Ratio | Efficacy % | Colby expected value % |
|---|---|---|---|---|
| 10 | | | 50 | |
| | 0.5 | | 18 | |
| | 0.1 | | 0 | |
| | 0.02 | | 3 | |
| 10 | 0.5 | 1:0.05 | 74 | 59 |
| 10 | 0.1 | 1:0.01 | 70 | 50 |
| 10 | 0.02 | 1:0.002 | 69 | 51 |

**Table B1: *in vitro* -Test with *Botrytis cinerea***

| (3.017) Metarylpicoxamid (ppm) | (I-1) (ppm) | Ratio | Efficacy % | Colby expected value % |
|---|---|---|---|---|
| 10 | | | 20 | |
| 0.8 | | | 0 | |
| | 0.1 | | 0 | |
| | 0.02 | | 1 | |
| 10 | 0.1 | 1:0.01 | 24 | 20 |
| 10 | 0.02 | 1:0.002 | 49 | 21 |
| 0.8 | 0.1 | 1:1.25 | 23 | 0 |
| 0.8 | 0.02 | 1:0.25 | 7 | 1 |

**Table C1: *in vitro* -Test with *Colletotrichum coccodes***

| (3.017) Metarylpicoxamid (ppm) | (I-1) (ppm) | Ratio | Efficacy % | Colby expected value % |
|---|---|---|---|---|
| 0.4 | | | 26 | |

(continued)

| (3.017) Metarylpicoxamid (ppm) | (I-1) (ppm) | Ratio | Efficacy % | Colby expected value % |
|---|---|---|---|---|
| 0.08 | | | 19 | |
| | 2.5 | | 91 | |
| | 0.1 | | 0 | |
| | 0.02 | | 0 | |
| 0.4 | 2.5 | 1:6.25 | 99 | 93 |
| 0.4 | 0.1 | 1:0.25 | 27 | 26 |
| 0.08 | 0.02 | 1:0.05 | 29 | 26 |
| 0.08 | 2.5 | 1:31.25 | 99 | 93 |

**Table D1: *in vitro* -Test with *Cordana musae***

| (3.017) Metarylpicoxamid (ppm) | (I-1) (ppm) | Ratio | Efficacy % | Colby expected value % |
|---|---|---|---|---|
| 0.08 | | | 44 | |
| | 2.5 | | 97 | |
| | 0.5 | | 54 | |
| | 0.02 | | 14 | |
| 0.08 | 2.5 | 1:31.25 | 99 | 98 |
| 0.08 | 0.5 | 1:6.25 | 67 | 65 |
| 0.08 | 0.02 | 1:0.25 | 82 | 52 |

**Table E1: *in vitro* -Test with *Diaporthe citri***

| (3.017) Metarylpicoxamid (ppm) | (I-1) (ppm) | Ratio | Efficacy % | Colby expected value % |
|---|---|---|---|---|
| 10 | | | 89 | |
| 2 | | | 89 | |
| | 2.5 | | 100 | |
| | 0.1 | | 0 | |
| | 0.02 | | 0 | |
| 10 | 2.5 | 1:0.25 | 100 | 100 |
| 10 | 0.1 | 1:0.01 | 94 | 89 |
| 10 | 0.02 | 1:0.002 | 96 | 89 |
| 2 | 2.5 | 1:1.25 | 100 | 100 |
| 2 | 0.1 | 1:0.05 | 94 | 89 |
| 2 | 0.02 | 1:0.01 | 95 | 89 |

**Table F1: *in vitro* -Test with *Fusarium culmorum***

| (3.017) Metarylpicoxamid (ppm) | (I-1) (ppm) | Ratio | Efficacy % | Colby expected value % |
|---|---|---|---|---|
| 10 | | | 4 | |
| 2 | | | 0 | |
| 0.08 | | | 10 | |
| | 2.5 | | 25 | |
| 10 | 2.5 | 1:0.25 | 93 | 28 |

(continued)

| (3.017) Metarylpicoxamid (ppm) | (I-1) (ppm) | Ratio | Efficacy % | Colby expected value % |
|---|---|---|---|---|
| 2 | 2.5 | 1:1.25 | 36 | 26 |
| 0.08 | 2.5 | 1:31.25 | 32 | 33 |

## Claims

1. Active compound combination comprising

   (A) as compound (A) methyl 2-[2-chloro-4-(4-chlorophenoxy)phenyl]-2-hydroxy-3-(1,2,4-triazol-1-yl)propanoate, and
   (B) as compound (B) (3.017) metarylpicoxamid.

2. Active compound combination according to claim 1, wherein the weight ratio of compound (A) to compound (B) is from 5,000:1 to 1:5,000.

3. Active compound combination according to at least one of claims 1 to 2, wherein the active compound combination comprises as compound(s) (C) at least one further fungicidally active compound selected from the following groups (1') to (15'):

   (1') inhibitors of the ergosterol synthesis selected from the group consisting of (1.001) cyproconazole, (1.002) difenoconazole, (1.003) epoxiconazole, (1.004) fenbuconazole, (1.005) fenhexamid, (1.006) fenpropidin, (1.007) fenpropimorph, (1.008) fenpyrazamine, (1.009) Fluoxytioconazole, (1.010) fluquinconazole, (1.011) flutriafol, (1.012) hexaconazole, (1.013) imazalil, (1.014) imazalil sulfate, (1.015) ipconazole, (1.016) ipfentrifluconazole, (1.017) mefentrifluconazole, (1.018) metconazole, (1.019) myclobutanil, (1.020) paclobutrazol, (1.021) penconazole, (1.022) prochloraz, (1.023) propiconazole, (1.024) prothioconazole, (1.025) pyrisoxazole, (1.026) spiroxamine, (1.027) tebuconazole, (1.028) tetraconazole, (1.029) triadimenol, (1.030) tridemorph, (1.031) triticonazole, (1.032) (1R,2S,5S)-5-(4-chlorobenzyl)-2-(chloromethyl)-2-methyl-1-(1H-1,2,4-triazol-1-ylmethyl)cyclopentanol, (1.033) (1S,2R,5R)-5-(4-chlorobenzyl)-2-(chloromethyl)-2-methyl-1-(1H-1,2,4-triazol-1-ylmethyl)cyclopentanol, (1.034) (2R)-2-(1-chlorocyclopropyl)-4-[(1R)-2,2-dichlorocyclopropyl]-1-(1H-1,2,4-triazol-1-yl)butan-2-ol, (1.035) (2R)-2-(1-chlorocyclopropyl)-4-[(1S)-2,2-dichlorocyclopropyl]-1-(1H-1,2,4-triazol-1-yl)butan-2-ol, (1.036) (2R)-2-[4-(4-chlorophenoxy)-2-(trifluoromethyl)phenyl]-1-(1H-1,2,4-triazol-1-yl)propan-2-ol, (1.037) (2S)-2-(1-chlorocyclopropyl)-4-[(1R)-2,2-dichlorocyclopropyl]-1-(1H-1,2,4-triazol-1-yl)butan-2-ol, (1.038) (2S)-2-(1-chlorocyclopropyl)-4-[(1S)-2,2-dichlorocyclopropyl]-1-(1H-1,2,4-triazol-1-yl)butan-2-ol, (1.039) (2S)-2-[4-(4-chlorophenoxy)-2-(trifluoromethyl)phenyl]-1-(1H-1,2,4-triazol-1-yl)propan-2-ol, (1.040) (R)-[3-(4-chloro-2-fluorophenyl)-5-(2,4-difluorophenyl)-1,2-oxazol-4-yl] (pyridin-3-yl)methanol, (1.041) (S)-[3-(4-chloro-2-fluorophenyl)-5-(2,4-difluorophenyl)-1,2-oxazol-4-yl](pyridin-3-yl)methanol, (1.042) [3-(4-chloro-2-fluorophenyl)-5-(2,4-difluorophenyl)-1,2-oxazol-4-yl](pyridin-3-yl)methanol, (1.043) 1-({(2R,4S)-2-[2-chloro-4-(4-chlorophenoxy)phenyl]-4-methyl-1,3-dioxolan-2-yl}methyl)-1H-1,2,4-triazole, (1.044) 1-({(2S,4S)-2-[2-chloro-4-(4-chlorophenoxy)phenyl]-4-methyl-1,3-dioxolan-2-yl}methyl)-1H-1,2,4-triazole, (1.045) 1-{[3-(2-chlorophenyl)-2-(2,4-difluorophenyl)oxiran-2-yl]methyl}-1H-1,2,4-triazol-5-yl thiocyanate, (1.046) 1-{[rel(2R,3R)-3-(2-chlorophenyl)-2-(2,4-difluorophenyl)oxiran-2-yl]methyl}-1H-1,2,4-triazol-5-yl thiocyanate, (1.047) 1-{[rel(2R,3S)-3-(2-chlorophenyl)-2-(2,4-difluorophenyl)oxiran-2-yl]methyl}-1H-1,2,4-triazol-5-yl thiocyanate, (1.048) 2-[(2R,4R,5R)-1-(2,4-dichlorophenyl)-5-hydroxy-2,6,6-trimethylheptan-4-yl]-2,4-dihydro-3H-1,2,4-triazole-3-thione, (1.049) 2-[(2R.4R,55)-1-(2,4-dichlorophenyl)-5-hydroxy-2.6,6-trimethylheptan-4-yl]-2,4-dihydro-3H-1,2,4-triazole-3-thione, (1.050) 2-[(2R,4S,5R)-1-(2,4-dichlorophenyl)-5-hydroxy-2,6,6-trimethylheptan-4-yl]-2,4-dihydro-3H-1,2,4-triazole-3-thione, (1.051) 2-[(2R,4S,5S)-1-(2,4-dichlorophenyl)-5-hydroxy-2,6,6-trimethylheptan-4-yl]-2,4-dihydro-3H-1,2,4-triazole-3-thione, (1.052) 2-[(2S,4R,5R)-1-(2,4-dichlorophenyl)-5-hydroxy-2,6,6-trimethylheptan-4-yl]-2,4-dihydro-3H-1,2,4-triazole-3-thione, (1.053) 2-[(2S,4R,5S)-1-(2,4-dichlorophenyl)-5-hydroxy-2,6,6-trimethylheptan-4-yl]-2,4-dihydro-3H-1,2,4-triazole-3-thione, (1.054) 2-[(2S,4S,5R)-1-(2,4-dichlorophenyl)-5-hydroxy-2,6,6-trimethylheptan-4-yl]-2,4-dihydro-3H-1,2,4-triazole-3-thione, (1.055) 2-[(2S,4S,5S)-1-(2,4-dichlorophenyl)-5-hydroxy-2,6,6-trimethylheptan-4-yl]-2,4-dihydro-3H-1,2,4-triazole-3-thione, (1.056) 2-[1-(2,4-dichlorophenyl)-5-hydroxy-2,6,6-trimethylheptan-4-yl]-2,4-dihydro-3H-1,2,4-triazole-3-thione, (1.057) 2-[6-(4-bromophenoxy)-2-(trifluoromethyl)-3-pyridyl]-1-(1,2,4-triazol-1-yl)propan-2-ol, (1.058) 2-[6-(4-chlorophenoxy)-2-(trifluoromethyl)-3-pyridyl]-1-(1,2,4-triazol-1-yl)propan-2-ol, (1.059) 2-{[3-(2-chlorophenyl)-2-(2,4-difluorophenyl)oxiran-2-yl] methyl} -2,4-dihydro-3H-1,2,4-triazole-3-thione, (1.060) 2-{[rel(2R,3R)-3-(2-chlorophenyl)-2-(2,4-difluorophenyl)oxiran-2-yl]methyl}-2,4-dihydro-3H-1,2,4-triazole-3-thione, (1.061) 2-{[rel(2R,3S)-3-(2-chlorophenyl)-2-(2,4-difluorophenyl)oxiran-2-yl]methyl }-2,4-dihydro-3H-1,2,4-triazole-3-thione, (1.062) 3-[2-(1-chlorocyclopropyl)-3-(3-chloro-2-fluoro-phenyl)-2-hydroxy-propyl]imidazole-4-carbonitrile, (1.063) 5-(4-chlorobenzyl)-2-(chloromethyl)-2-methyl-1-(1H-1,2,4-triazol-1-ylmethyl)cyclopentanol, (1.064) 5-(allylsulfanyl)-1-{[3-(2-chlorophenyl)-2-(2,4-difluorophenyl)oxiran-2-yl]methyl}-1H-1,2,4-triazole, (1.065) 5-(allylsulfanyl)-1-{[rel(2R,3R)-3-(2-chlorophenyl)-2-(2,4-difluorophenyl)oxiran-2-yl]methyl}-1H-1,2,4-triazole, (1.066) 5-(allylsulfanyl)-1-{[rel(2R,3S)-3-(2-chlorophenyl)-2-(2,4-difluorophenyl)oxiran-2-yl]methyl}-1H-1,2,4-triazole, (1.068) N'-(2-chloro-5-methyl-4-phenoxyphenyl)-N-ethyl-N-methylimidoformamide, (1.069) N'-[2-chloro-4-(2-fluorophenoxy)-5-methylphenyl]-N-ethyl-N-methylimidoformamide, (1.070) N'-[5-bromo-6-(2,3-dihydro-1H-inden-2-yloxy)-2-methylpyridin-3-yl]-N-ethyl-N-methylimidoformamide, (1.071) N'-{4-[(4,5-dichloro-1,3-thiazol-2-yl)oxy]-2,5-dimethylphenyl}-N-ethyl-N-methylimidoformamide, (1.072) N'-{5-bromo-2-methyl-6-[(1-propoxypropan-2-yl)oxy]pyridin-3-yl}-N-ethyl-N-methylimidoformamide, (1.073) N'-{5-bromo-6-[(1R)-1-(3,5-difluorophenyl)ethoxy]-2-methylpyridin-3-yl}-N-ethyl-N-methylimidoformamide, (1.074) N'-{5-bromo-6-[(1S)-1-(3,5-difluorophenyl)ethoxy]-2-methylpyridin-3-yl}-N-ethyl-N-methylimidoformamide, (1.075) N'-{5-bromo-6-[(cis-4-isopropylcyclohexyl)oxy]-2-methylpyridin-3-yl}-N-ethyl-N-methylimidoformamide, (1.076) N'-{5-bromo-6-[(trans-4-isopropylcyclohexyl)oxy]-2-methylpyridin-3-yl}-N-ethyl-N-methylimidoformamide, (1.077) N'-{5-bromo-6-[1-(3,5-difluorophenyl)ethoxy]-2-methylpyridin-3-yl}-N-ethyl-N-methylimidoformamide, (1.078) N-isopropyl-N'-[5-methoxy-2-methyl-4-(2,2,2-trifluoro-1-hydroxy-1-phenylethyl)phenyl]-N-methylimidoformamide,

(2') inhibitors of the respiratory chain at complex I or II selected from the group consisting of (2.001) benzovindiflupyr, (2.002) bixafen, (2.003) boscalid, (2.004) carboxin, (2.005) cyclobutrifluram, (2.006) flubeneteram, (2.007) fluindapyr, (2.008) fluopyram, (2.009) flutolanil, (2.010) fluxapyroxad, (2.011) furametpyr, (2.012) inpyrfluxam, (2.013) isofetamid, (2.014) isoflucypram, (2.015) isopyrazam, (2.016) penflufen, (2.017) penthiopyrad, (2.018) pydiflumetofen, (2.019) pyrapropoyne, (2.020) pyraziflumid, (2.021) sedaxane, (2.022) thifluxamide, (2.023) 1,3-dimethyl-N-(1,1,3-trimethyl-2,3-dihydro-1H-inden-4-yl)-1H-pyrazole-4-carboxamide, (2.024) 1,3-dimethyl-N-[(3R)-1,1,3-trimethyl-2,3-dihydro-1H-inden-4-yl]-1H-pyrazole-4-carboxamide, (2.025) 1,3-dimethyl-N-[(3S)-1,1,3-trimethyl-2,3-dihydro-1H-inden-4-yl]-1H-pyrazole-4-carboxamide, (2.026) 1-methyl-3-(trifluoromethyl)-N-[2'-(trifluoromethyl)biphenyl-2-yl]-1H-pyrazole-4-carboxamide, (2.027) 2-fluoro-6-(trifluoromethyl)-N-(1,1,3-trimethyl-2,3-dihydro-1H-inden-4-yl)benzamide, (2.028) 3-(difluoromethyl)-1-methyl-N-(1,1,3-trimethyl-2,3-dihydro-1H-inden-4-yl)-1H-pyrazole-4-carboxamide, (2.029) 3-(difluoromethyl)-1-methyl-N-[(3S)-1,1,3-trimethyl-2,3-dihydro-1H-inden-4-yl]-1H-pyrazole-4-carboxamide, (2.030) 3-(difluoromethyl)-N-[(3R)-7-fluoro-1,1,3-trimethyl-2,3-dihydro-1H-inden-4-yl]-1-methyl-1H-pyrazole-4-carboxamide, (2.031) 3-(difluoromethyl)-N-[(3S)-7-fluoro-1,1,3-trimethyl-2,3-dihydro-1H-inden-4-yl]-1-methyl-1H-pyrazole-4-carboxamide, (2.032) 5,8-difluoro-N-[2-(2-fluoro-4-{[4-(trifluoromethyl)pyridin-2-yl]oxy}phenyl)ethyl]quinazolin-4-amine, (2.033) N-[(1R,4S)-9-(dichloromethylene)-1,2,3,4-tetrahydro-1,4-methanonaphthalen-5-yl]-3-(difluoromethyl)-1-methyl-1H-pyrazole-4-carboxamide, (2.034) N-[(1S,4R)-9-(dichloromethylene)-1,2,3,4-tetrahydro-1,4-methanonaphthalen-5-yl]-3-(difluoromethyl)-1-methyl-1H-pyrazole-4-carboxamide, (2.035) N-[1-(2,4-dichlorophenyl)-1-methoxypropan-2-yl]-3-(difluoromethyl)-1-methyl-1H-pyrazole-4-carboxamide, (2.036) N-[rac-(1S,2S)-2-(2,4-dichlorophenyl)cyclobutyl]-2-(trifluoromethyl)nicotinamide,

(3') inhibitors of the respiratory chain at complex III selected from the group consisting of (3.001) ametoctradin, (3.002) amisulbrom, (3.003) azoxystrobin, (3.004) coumethoxystrobin, (3.005) coumoxystrobin, (3.006) cyazofamid, (3.007) dimoxystrobin, (3.008) enoxastrobin, (3.009) famoxadone, (3.010) fenamidone, (3.011) fenpicoxamid, (3.012) florylpicoxamid, (3.013) flufenoxystrobin, (3.014) fluoxastrobin, (3.015) kresoxim-methyl, (3.016) mandestrobin, (3.017) metarylpicoxamid, (3.018) metominostrobin, (3.019) metyltetraprole, (3.020) orysastrobin, (3.021) picoxystrobin, (3.022) pyraclostrobin, (3.023) pyrametostrobin, (3.024) pyraoxystrobin, (3.025) trifloxystrobin, (3.026) (2E)-2-{2-[({[(1E)-1-(3-{[(E)-1-fluoro-2-phenylvinyl]oxy}phenyl)ethylidene]amino}oxy) methyl]phenyl}-2-(methoxyimino)-N-methylacetamide, (3.027) (2E,3Z)-5-{[1-(4-chlorophenyl)-1H-pyrazol-3-yl] oxy}-2-(methoxyimino)-N,3-dimethylpent-3-enamide, (3.028) (2R)-2-{2-[(2,5-dimethylphenoxy)methyl]phenyl}-2-methoxy-N-methylacetamide, (3.029) (2S)-2-{2-[(2,5-dimethylphenoxy)methyl]phenyll-2-methoxy-N-methylacetamide, (3.030) N-(3-ethyl-3,5,5-trimethylcyclohexyl)-3-formamido-2-hydroxybenzamide, (3.031) (2E,3Z)-5-{[1-(4-chloro-2-fluorophenyl)-1H-pyrazol-3-yl]oxy}-2-(methoxyimino)-N,3-dimethylpent-3-enamide, (3.032) methyl {5-[3-(2,4-dimethylphenyl)-1H-pyrazol-1-yl]-2-methylbenzyl}carbamate,

(4') inhibitors of the mitosis and cell division selected from the group consisting of (4.001) carbendazim, (4.002) diethofencarb, (4.003) ethaboxam, (4.004) fluopicolide, (4.005) fluopimomide, (4.006) metrafenone, (4.007) pencycuron, (4.008) pyridachlometyl, (4.009) pyriofenone (chlazafenone), (4.010) thiabendazole, (4.011) thiophanate-methyl, (4.012) zoxamide, (4.013) 3-chloro-5-(4-chlorophenyl)-4-(2,6-difluorophenyl)-6-methylpyridazine, (4.014) 3-chloro-5-(6-chloropyridin-3-yl)-6-methyl-4-(2,4,6-trifluorophenyl)pyridazine, (4.015) 4-(2-bromo-4-fluorophenyl)-N-(2,6-difluorophenyl)-1,3-dimethyl-1H-pyrazol-5-amine, (4.016) 4-(2-bromo-4-fluorophenyl)-N-(2-bromo-6-fluorophenyl)-1,3-dimethyl-1H-pyrazol-5-amine, (4.017) 4-(2-bromo-4-fluorophenyl)-N-(2-bromophenyl)-1,3-dimethyl-1H-pyrazol-5-amine, (4.018) 4-(2-bromo-4-fluorophenyl)-N-(2-chloro-6-fluorophenyl)-1,3-dimethyl-1H-pyrazol-5-amine, (4.019) 4-(2-bromo-4-fluorophenyl)-N-(2-chlorophenyl)-1,3-dimethyl-1H-pyrazol-5-amine, (4.020) 4-(2-bromo-4-fluorophenyl)-N-(2-fluorophenyl)-1,3-dimethyl-1H-pyrazol-5-amine, (4.021) 4-(2-chloro-4-fluorophenyl)-N-(2,6-difluorophenyl)-1,3-dimethyl-1H-pyrazol-5-amine, (4.022) 4-(2-chloro-4-fluorophenyl)-N-(2-chloro-6-fluorophenyl)-1,3-dimethyl-1H-pyrazol-5-amine, (4.023) 4-(2-chloro-4-fluorophenyl)-N-(2-chlorophenyl)-1,3-dimethyl-1H-pyrazol-5-amine, (4.024) 4-(2-chloro-4-fluorophenyl)-N-(2-fluorophenyl)-1,3-dimethyl-1H-pyrazol-5-amine, (4.025) 4-(4-chlorophenyl)-5-(2,6-difluorophenyl)-3,6-dimethylpyridazine, (4.026) N-(2-bromo-6-fluorophenyl)-4-(2-chloro-4-fluorophenyl)-1,3-dimethyl-1H-pyrazol-5-amine, (4.027) N-(2-bromophenyl)-4-(2-chloro-4-fluorophenyl)-1,3-dimethyl-1H-pyrazol-5-amine, (4.028) N-(4-chloro-2,6-difluorophenyl)-4-(2-chloro-4-fluorophenyl)-1,3-dimethyl-1H-pyrazol-5-amine,

(5') compounds capable of having a multisite action selected from the group consisting of (5.001) bordeaux mixture, (5.002) captafol, (5.003) captan, (5.004) chlorothalonil, (5.005) copper hydroxide, (5.006) copper naphthenate, (5.007) copper oxide, (5.008) copper oxychloride, (5.009) copper(2+) sulfate, (5.010) dithianon, (5.011) dodine, (5.012) folpet, (5.013) mancozeb, (5.014) maneb, (5.015) metiram, (5.016) metiram zinc, (5.017) oxine-copper, (5.018) propineb, (5.019) sulfur and sulfur preparations including calcium polysulfide, (5.020) thiram, (5.021) zineb, (5.022) ziram, (5.023) 6-ethyl-5,7-dioxo-6,7-dihydro-5H-pyrrolo[3',4':5,6][1,4]dithiino[2,3-c][1,2]thiazole-3-carbonitrile,

(6') compounds capable of inducing a host defense selected from the group consisting of 6.001) acibenzolar-S-methyl, (6.002) fosetyl-aluminium, (6.003) fosetyl-calcium, (6.004) fosetylsodium, (6.005) isotianil, (6.006) phosphorous acid and its salts, (6.007) probenazole, (6.008) tiadinil,

(7') inhibitors of the amino acid and/or protein biosynthesis selected from the group consisting of (7.001) cyprodinil, (7.002) kasugamycin, (7.003) kasugamycin hydrochloride hydrate, (7.004) oxytetracycline, (7.005) pyrimethanil,

(8') inhibitors of the ATP production selected from the group consisting of (8.001) silthiofam,

(9') inhibitors of the cell wall synthesis selected from the group consisting of (9.001) benthiavalicarb, (9.002) dimethomorph, (9.003) flumorph, (9.004) iprovalicarb, (9.005) mandipropamid, (9.006) pyrimorph, (9.007) valifenalate, (9.008) (2E)-3-(4-tert-butylphenyl)-3-(2-chloropyridin-4-yl)-1-(morpholin-4-yl)prop-2-en-1-one, (9.009) (2Z)-3-(4-tert-butylphenyl)-3-(2-chloropyridin-4-yl)-1-(morpholin-4-yl)prop-2-en-1-one,

(10') inhibitors of the lipid and membrane synthesis selected from the group consisting of (10.001) fluoxapiprolin, (10.002) natamycin, (10.003) oxathiapiprolin, (10.004) propamocarb, (10.005) propamocarb hydrochloride, (10.006) propamocarb-fosetylate, (10.007) tolclofos-methyl, (10.008) 1-(4-{4-[(5R)-5-(2,6-difluorophenyl)-4,5-dihydro-1,2-oxazol-3-yl]-1,3-thiazol-2-yl }piperidin-1-yl)-2-[5-methyl-3-(trifluoromethyl)-1H-pyrazol-1-yl]ethanone, (10.009) 1-(4-{4-[(5S)-5-(2,6-difluorophenyl)-4,5-dihydro-1,2-oxazol-3-yl]-1,3-thiazol-2-yl}piperidin-1-yl)-2-[5-methyl-3-(trifluoromethyl)-1H-pyrazol-1-yl]ethanone, (10.010) 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, (10.011) 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, (10.012) 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl }-1,3-thiazol-2-yl)piperidin-1-yl]ethanone, (10.013) 2-{(5R)-3-[2-(1-{[3,5-bis(difluoromethyl)-1H-pyrazol-1-yl]acetyl} piperidin-4-yl)-1,3-thiazol-4-yl]-4,5-dihydro-1,2-oxazol-5-yl}-3-chlorophenyl methanesulfonate, (10.014) 2-{(5S)-3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate, (10.015) 2-{3-[2-(1-{[3,5-bis(difluoromethyl)-1H-pyrazol-1-yl] acetyl}piperidin-4-yl)-1,3-thiazol-4-yl]-4,5-dihydro-1,2-oxazol-5-yl}phenyl methanesulfonate, (10.016) 3-[2-(1-{[5-methyl-3-(trifluoromethyl)-1H-pyrazol-1-yl]acetyl}piperidin-4-yl)-1,3-thiazol-4-yl]-1,5-dihydro-2,4-benzodioxepin-6-yl methanesulfonate, (10.017) 9-fluoro-3-[2-(1-{[5-methyl-3-(trifluoromethyl)-1H-pyrazol-1-yl] acetyl}piperidin-4-yl)-1,3-thiazol-4-yl]-1,5-dihydro-2,4-benzodioxepin-6-yl methanesulfonate, (10.018) 3-[2-(1-{[3,5-bis(difluoromethyl)-1H-pyrazol-1-yl]acetyl}piperidin-4-yl)-1,3-thiazol-4-yl]-1,5-dihydro-2,4-benzodioxepin-6-yl methanesulfonate, (10.019) 3-[2-(1-{[3,5-bis(difluoromethyl)-1H-pyrazol-1-yl]acetyl}piperidin-4-yl)-1,3-thiazol-4-yl]-9-fluoro-1,5-dihydro-2,4-benzodioxepin-6-yl methanesulfonate,

(11') inhibitors of the melanine biosynthesis selected from the group consisting of (11.001) tolprocarb, (11.002) tricyclazole,

(12') inhibitors of the nucleic acid synthesis selected from the group consisting of (12.001) benalaxyl, (12.002) benalaxyl-M (kiralaxyl), (12.003) metalaxyl, (12.004) metalaxyl-M (mefenoxam),

(13') inhibitors of the signal transduction selected from the group consisting of (13.001) fludioxonil, (13.002) iprodione, (13.003) procymidone, (13.004) proquinazid, (13.005) quinoxyfen, (13.006) vinclozolin,

(14') compounds capable of acting as uncoupler selected from the group consisting of (14.001) fluazinam, (14.002) meptyldinocap,

(15') other fungicides selected from the group consisting of (15.001) abscisic acid, (15.002) aminopyrifen, (15.003) benthiazole, (15.004) bethoxazin, (15.005) capsimycin, (15.006) carvone, (15.007) chinomethionat, (15.008) chloroinconazide, (15.009) cufraneb, (15.010) cyflufenamid, (15.011) cymoxanil, (15.012) cyprosulfamide, (15.013) dipymetitrone, (15.014) flutianil, (15.015) flufenoxadiazam, (15.016) flumetylsulforim, (15.017) ipflufenoquin, (15.018) methyl isothiocyanate, (15.019) mildiomycin, (15.020) nickel dimethyldithiocarbamate, (15.021) nitrothal-isopropyl, (15.022) oxyfenthiin, (15.023) pentachlorophenol and salts, (15.024) picarbutrazox, (15.025) quinofumelin, (15.026) D-tagatose, (15.027) tebufloquin, (15.028) tecloftalam, (15.029) tolnifanide, (15.030) 2-(6-benzylpyridin-2-yl)quinazoline, (15.031) 2-[6-(3-fluoro-4-methoxyphenyl)-5-methylpyridin-2-yl]quinazoline, (15.032) 2-phenylphenol and salts, (15.033) 4-amino-5-fluoropyrimidin-2-ol (tautomeric form: 4-amino-5-fluoropyrimidin-2(1H)-one), (15.034) 4-oxo-4-[(2-phenylethyl)amino]butanoic acid, (15.035) 5-amino-1,3,4-thiadiazole-2-thiol, (15.036) 5-chloro-N'-phenyl-N'-(prop-2-yn-1-yl)thiophene-2-sulfonohydrazide, (15.037) 5-fluoro-2-[(4-fluorobenzyl)oxy]pyrimidin-4-amine, (15.038) 5-fluoro-2-[(4-methylbenzyl)oxy]pyrimidin-4-amine, (15.039) but-3-yn-1-yl {6-[({[(Z)-(1-methyl-1H-tetrazol-5-yl)(phenyl)methylene]amino}oxy)methyl]pyridin-2-yl}carbamate, (15.040) ethyl (2Z)-3-amino-2-cyano-3-phenylacrylate, (15.041) phenazine-1-carboxylic acid, (15.042) propyl 3,4,5-trihydroxybenzoate, (15.043) quinolin-8-ol, (15.044) quinolin-8-ol sulfate (2:1), (15.045) 1-(4,5-dimethyl-1H-benzimidazol-1-yl)-4,4-difluoro-3,3-dimethyl-3,4-dihydroisoquinoline, (15.046) 1-(5-(fluoromethyl)-6-methyl-pyridin-3-yl)-4,4-difluoro-3,3-dimethyl-3,4-dihydroisoquinoline, (15.047) 1-(5,6-dimethylpyridin-3-yl)-4,4-difluoro-3,3-dimethyl-3,4-dihydroisoquinoline, (15.048) 1-(6-(difluoromethyl)-5-methoxy-pyridin-3-yl)-4,4-difluoro-3,3-dimethyl-3,4-dihydroisoquinoline, (15.049) 1-(6-(difluoromethyl)-5-methyl-pyridin-3-yl)-4,4-difluoro-3,3-dimethyl-3,4-dihydroisoquinoline, (15.050) 1-(6,7-dimethylpyrazolo[1,5-a]pyridin-3-yl)-4,4-difluoro-3,3-dimethyl-3,4-dihydroisoquinoline, (15.051) 2-{2-fluoro-6-[(8-fluoro-2-methylquinolin-3-yl)oxy]phenyl}propan-2-ol, (15.052) 3-(4,4,5-trifluoro-3,3-dimethyl-3,4-dihydroisoquinolin-1-yl)quinoline, (15.053) 3-(4,4-difluoro-3,3-dimethyl-3,4-dihydroisoquinolin-1-yl)-8-fluoroquinoline, (15.054) 3-(4,4-difluoro-5,5-dimethyl-4,5-dihydrothieno[2,3-c]pyridin-7-yl)quinoline, (15.055) 3-(5-fluoro-3,3,4,4-tetramethyl-3,4-dihydroisoquinolin-1-yl)quinoline, (15.056) 5-bromo-1-(5,6-dimethylpyridin-3-yl)-3,3-dimethyl-3,4-dihydroisoquinoline, (15.057) 8-fluoro-3-(5-fluoro-3,3,4,4-tetramethyl-3,4-dihydroisoquinolin-1-yl)-quinoline, (15.058) 8-fluoro-3-(5-fluoro-3,3-dimethyl-3,4-dihydroisoquinolin-1-yl)-quinoline, (15.059) 8-fluoro-N-(4,4,4-trifluoro-2-methyl-1-phenylbutan-2-yl)quinoline-3-carboxamide, (15.060) 8-fluoro-N-[(2S)-4,4,4-trifluoro-2-methyl-1-phenylbutan-2-yl]quinoline-3-carboxamide, (15.061) 9-fluoro-2,2-dimethyl-5-(quinolin-3-yl)-2,3-dihydro-1,4-benzoxazepine, (15.062) N-(2,4-dimethyl-1-phenylpentan-2-yl)-8-fluoroquinoline-3-carboxamide, (15.063) N-[(2S)-2,4-dimethyl-1-phenylpentan-2-yl]-8-fluoroquinoline-3-carboxamide, (15.063A) N-[(2R)-2,4-dimethyl-1-phenylpentan-2-yl]-8-fluoroquinoline-3-carboxamide, (15.063B) 2-benzyl-N-(8-fluoro-2-methyl-3-quinolyl)-2,4-dimethyl-pentanamide, (15.063C) (2S)-2-benzyl-N-(8-fluoro-2-methyl-3-quinolyl)-2,4-dimethyl-pentanamide, (15.063D) (2R)-2-benzyl-N-(8-fluoro-2-methyl-3-quinolyl)-2,4-dimethyl-pentanamide, (15.064) 1,1-diethyl-3-[[4-[5-(trifluoromethyl)-1,2,4-oxadiazol-3-yl]phenyl]methyl]urea, (15.065) 1,3-dimethoxy-1-[[4-[5-(trifluoromethyl)-1,2,4-oxadiazol-3-yl]phenyl]methyl]urea, (15.066) 1-[[3-fluoro-4-(5-(trifluoromethyl)-1,2,4-oxadiazol-3-yl)phenyl]methyl]azepan-2-one, (15.067) 1-[[4-[5-(trifluoromethyl)-1,2,4-oxadiazol-3-yl]phenyl]methyl]piperidin-2-one, (15.068) 1-methoxy-1-methyl-3-[[4-[5-(trifluoromethyl)-1,2,4-oxadiazol-3-yl]phenyl]methyl]urea, (15.069) 1-methoxy-3-methyl-1-[[4-[5-(trifluoromethyl)-1,2,4-oxadiazol-3-yl]phenyl]methyl]urea, (15.070) 1-methoxy-3-methyl-1-[[4-[5-(trifluoromethyl)-1,2,4-oxadiazol-3-yl]phenyl]methyl]urea, (15.071) 2,2-difluoro-N-methyl-2-[4-[5-(trifluoromethyl)-1,2,4-oxadiazol-3-yl]phenyl]acetamide, (15.072) 3,3-dimethyl-1-[[4-[5-(trifluoromethyl)-1,2,4-oxadiazol-3-yl]phenyl]methyl]piperidin-2-one, (15.073) 3-ethyl-1-methoxy-1-[[4-[5-(trifluoromethyl)-1,2,4-oxadiazol-3-yl]phenyl]methyl]urea, (15.074) 4,4-dimethyl-1-[[4-[5-(trifluoromethyl)-1,2,4-oxadiazol-3-yl]phenyl]methyl]pyrrolidin-2-one, (15.075) 4,4-dimethyl-2-[[4-[5-(trifluoromethyl)-1,2,4-oxadiazol-3-yl]phenyl]methyl]isoxazolidin-3-one, (15.076) 4-[5-(trifluoromethyl)-1,2,4-oxadiazol-3-yl]phenyl dimethylcarbamate, (15.077) 5,5-dimethyl-2-[[4-[5-(trifluoromethyl)-1,2,4-oxadiazol-3-yl]phenyl]methyl]isoxazolidin-3-one, (15.078) 5-methyl-1-[[4-[5-(trifluoromethyl)-1,2,4-oxadiazol-3-yl]phenyl]methyl]pyrrolidin-2-one, (15.079) ethyl 1-{4-[5-(trifluoromethyl)-1,2,4-oxadiazol-3-yl]benzyl}-1H-pyrazole-4-carboxylate, (15.080) methyl {4-[5-(trifluoromethyl)-1,2,4-oxadiazol-3-yl]phenyl}carbamate, (15.081) N-(1-methylcyclopropyl)-4-[5-(trifluoromethyl)-1,2,4-oxadiazol-3-yl]benzamide, (15.082) N-(2,4-difluorophenyl)-4-[5-(trifluoromethyl)-1,2,4-oxadiazol-3-yl]benzamide, (15.083) N,2-dimethoxy-N-[[4-[5-(trifluoromethyl)-1,2,4-oxadiazol-3-yl]phenyl]methyl]propanamide, (15.084) N,N-dimethyl-1-{4-[5-(trifluoromethyl)-1,2,4-oxadiazol-3-yl]benzyl}-1H-1,2,4-triazol-3-amine, (15.085) N-[(E)-methoxyiminomethyl]-4-[5-(trifluoromethyl)-1,2,4-oxadiazol-3-yl]benzamide, (15.086) N-[(E)-N-methoxy-C-methyl-carbonimidoyl]-4-[5-(trifluoromethyl)-1,2,4-oxadiazol-3-yl]benzamide, (15.087) N-[(Z)-methoxyiminomethyl]-4-[5-(trifluoromethyl)-1,2,4-oxadiazol-3-yl]benzamide, (15.088) N-[(Z)-N-methoxy-C-methyl-carbonimidoyl]-4-[5-(trifluoromethyl)-1,2,4-oxadiazol-3-yl]benzamide,

(15.089) N-[[2,3-difluoro-4-[5-(trifluoromethyl)-1,2,4-oxadiazol-3-yl]phenyl]methyl]-3,3,3-trifluoro-propanamide, (15.090) N-[[4-[5-(trifluoromethyl)-1,2,4-oxadiazol-3-yl]phenyl]methyl]propanamide, (15.091) N-[4-[5-(trifluoromethyl)-1,2,4-oxadiazol-3-yl]phenyl]cyclopropanecarboxamide, (15.092) N-{2,3-difluoro-4-[5-(trifluoromethyl)-1,2,4-oxadiazol-3-yl]benzyl}butanamide, (15.093) N-{4-[5-(trifluoromethyl)-1,2,4-oxadiazol-3-yl]benzyl}cyclopropanecarboxamide, (15.094) N-{4-[5-(trifluoromethyl)-1,2,4-oxadiazol-3-yl]phenyl}propanamide, (15.095) N-allyl-N-[[4-[5-(trifluoromethyl)-1,2,4-oxadiazol-3-yl]phenyl]methyl]acetamide, (15.096) N-allyl-N-[[4-[5-(trifluoromethyl)-1,2,4-oxadiazol-3-yl]phenyl]methyl]propanamide, (15.097) N-ethyl-2-methyl-N-[[4-[5-(trifluoromethyl)-1,2,4-oxadiazol-3-yl]phenyl]methyl]propanamide, (15.098) N-methoxy-N-[[4-[5-(trifluoromethyl)-1,2,4-oxadiazol-3-yl]phenyl]methyl]cyclopropanecarboxamide, (15.099) N-methyl-4-[5-(trifluoromethyl)-1,2,4-oxadiazol-3-yl]benzamide, (15.100) N-methyl-4-[5-(trifluoromethyl)-1,2,4-oxadiazol-3-yl]benzenecarbothioamide, (15.101) N-methyl-N-phenyl-4-[5-(trifluoromethyl)-1,2,4-oxadiazol-3-yl]benzamide,

wherein the at least one further active compound (C) is different from compound (A) and compound (B).

4. Active compound combination according to claim 3, wherein compound (C) is selected from
(1.002) difenoconazole, (1.009) fluoxytioconazole, (1.015) ipconazole, (1.017) mefentrifluconazole, (1.024) prothioconazole, (1.026) spiroxamine, (1.027) tebuconazole, (2.001) benzovindiflupyr, (2.002) bixafen, (2.007) fluindapyr, (2.008) fluopyram, (2.010) fluxapyroxad, (2.012) inpyrfluxam, (2.014) isoflucypram, (2.016) penflufen, (2.017) penthiopyrad, (2.018) pydiflumetofen, (2.021) sedaxane, (3.003) azoxystrobin, (3.011) fenpicoxamid, (3.014) fluoxastrobin, (3.016) mandestrobin, (3.021) picoxystrobin, (3.022) pyraclostrobin, (3.025) trifloxystrobin, (4.007) pencycuron, (4.009) pyriofenone (chlazafenone), (4.011) thiophanate-methyl, (5.004) chlorothalonil, (5.011) dodine, (5.012) folpet, (5.013) mancozeb, (5.018) propineb, (6.005) isotianil, (7.005) pyrimethanil, (12.003) metalaxyl, (12.004) metalaxyl-M (mefenoxam), (13.001) fludioxonil, (13.004) proquinazid, (14.001) fluazinam, (14.002) meptyldinocap, (15.010) cyflufenamid and (15.025) quinofumelin.

5. Active compound combination according to at least one of claims 3 to 4, wherein the weight ratio of compound (A) to compound(s) (C) is from 5,000:1 to 1:5,000.

6. Composition for controlling harmful microorganisms in crop protection and in the protection of industrial materials, **characterized by** a content of an active compound combination according to at least one of claims 1 to 5, in addition to at least one carrier and/or surfactant.

7. Method for controlling harmful microorganisms in crop protection and in the protection of industrial materials, **characterized in that** an active compound combination according to at least one of claims 1 to 5 or a composition according to claim 6 is applied to the harmful microorganisms and/or their habitat.

8. Use of an active compound combination according to at least one of claims 1 to 5 or a composition according to claim 6 for treatment of a transgenic plant.

9. Use of an active compound combination according to at least one of claims 1 to 5 or a composition according to claim 6 for treatment of seed.

10. Seed coated with an active compound combination according to at least one of claims 1 to 5 or a composition according to claim 6.

## Patentansprüche

1. Wirkstoffkombination, umfassend

(A) als Verbindung (A) 2-[2-Chlor-4-(4-chlorphenoxy)phenyl]-2-hydroxy-3-(1,2,4-triazol-1-yl)propansäuremethylester und
(B) als Verbindung (B) (3.017) Metarylpicoxamid.

2. Wirkstoffkombination nach Anspruch 1, wobei das Gewichtsverhältnis von Verbindung (A) zu Verbindung (B) 5000:1 bis 1:5000 beträgt.

3. Wirkstoffkombination nach mindestens einem der Ansprüche 1 bis 2, wobei die Wirkstoffkombination als Verbindung(en) (C) mindestens einen weiteren fungiziden Wirkstoff umfasst, der aus den folgenden Gruppen (1') bis (15') ausgewählt ist:

(1') Inhibitoren der Ergosterolsynthese ausgewählt aus der Gruppe bestehend aus (1.001) Cyproconazol, (1.002) Difenoconazol, (1.003) Epoxiconazol, (1.004) Fenbuconazol, (1.005) Fenhexamid, (1.006) Fenpropidin, (1.007) Fenpropimorph, (1.008) Fenpyrazamin, (1.009) Fluoxytioconazol, (1.010) Fluquinconazol, (1.011) Flutriafol, (1.012) Hexaconazol, (1.013) Imazalil, (1.014) Imazalilsulfat, (1.015) Ipconazol, (1.016) Ipfentrifluconazol, (1.017) Mefentrifluconazol, (1.018) Metconazol, (1.019) Myclobutanil, (1.020) Paclobutrazol, (1.021) Penconazol, (1.022) Prochloraz, (1.023) Propiconazol, (1.024) Prothioconazol, (1.025) Pyrisoxazol, (1.026) Spiroxamin, (1.027) Tebuconazol, (1.028) Tetraconazol, (1.029) Triadimenol, (1.030) Tridemorph, (1.031) Triticonazol, (1.032) (1R,2S,5S)-5-(4-Chlorbenzyl)-2-(chlormethyl)-2-methyl-1-(1H-1,2,4-triazol-1-ylmethyl)cyclopentanol, (1.033) (1S,2R,5R)-5-(4-Chlorbenzyl)-2-(chlormethyl)-2-methyl-1-(1H-1,2,4-triazol-1-ylmethyl)cyclopentanol, (1.034) (2R)-2-(1-Chlorcyclopropyl)-4-[(1R)-2,2-dichlorcyclopropyl]-1-(1H-1,2,4-triazol-1-yl)butan-2-ol, (1.035) (2R)-2-(1-Chlorcyclopropyl)-4-[(1S)-2,2-dichlorcyclopropyl]-1-(1H-1,2,4-triazol-1-yl)butan-2-ol, (1.036) (2R)-2-[4-(4-Chlorphenoxy)-2-(trifluormethyl)phenyl]-1-(1H-1,2,4-triazol-1-yl)propan-2-ol, (1.037) (2S)-2-(1-Chlorcyclopropyl)-4-[(1R)-2,2-dichlorcyclopropyl]-1-(1H-1,2,4-triazol-1-yl)butan-2-ol, (1.038) (2S)-2-(1-Chlorcyclopropyl)-4-[(1S)-2,2-dichlorcyclopropyl]-1-(1H-1,2,4-triazol-1-yl)butan-2-ol, (1.039) (2S)-2-[4-(4-Chlorphenoxy)-2-(trifluormethyl)phenyl]-1-(1H-1,2,4-triazol-1-yl)propan-2-ol, (1.040) (R)-[3-(4-Chlor-2-fluorphenyl)-5-(2,4-difluorphenyl)-1,2-oxazol-4-yl](pyridin-3-yl)methanol, (1.041) (S)-[3-(4-Chlor-2-fluorphenyl)-5-(2,4-difluorphenyl)-1,2-oxazol-4-yl](pyridin-3-yl)methanol, (1.042) [3-(4-Chlor-2-fluorphenyl)-5-(2,4-difluorphenyl)-1,2-oxazol-4-yl](pyridin-3-yl)methanol, (1.043) 1-({(2R,4S)-2-[2-Chlor-4-(4-chlorphenoxy)phenyl]-4-methyl-1,3-dioxolan-2-yl}methyl)-1H-1,2,4-triazol, (1.044) 1-({(2S,4S)-2-[2-Chlor-4-(4-chlorphenoxy)phenyl]-4-methyl-1,3-dioxolan-2-yl}methyl)-1H-1,2,4-triazol, (1.045) 1-{[3-(2-Chlorphenyl)-2-(2,4-difluorphenyl)oxiran-2-yl]methyl}-1H-1,2,4-triazol-5-ylthiocyanat, (1.046) 1-{[rel(2R,3R)-3-(2-Chlorphenyl)-2-(2,4-difluorphenyl)oxiran-2-yl]methyl}-1H-1,2,4-triazol-5-ylthiocyanat, (1.047) 1-{[rel(2R,3S)-3-(2-Chlorphenyl)-2-(2,4-difluorphenyl)oxiran-2-yl]methyl}-1H-1,2,4-triazol-5-ylthiocyanat, (1.048) 2-[(2R,4R,5R)-1-(2,4-Dichlorphenyl)-5-hydroxy-2,6,6-trimethylheptan-4-yl]-2,4-dihydro-3H-1,2,4-triazol-3-thion, (1.049) 2-[(2R,4R,5S)-1-(2,4-Dichlorphenyl)-5-hydroxy-2,6,6-trimethylheptan-4-yl]-2,4-dihydro-3H-1,2,4-triazol-3-thion, (1.050) 2-[(2R,4S,5R)-1-(2,4-Dichlorphenyl)-5-hydroxy-2,6,6-trimethylheptan-4-yl]-2,4-dihydro-3H-1,2,4-triazol-3-thion, (1.051) 2-[(2R,4S,5S)-1-(2,4-Dichlorphenyl)-5-hydroxy-2,6,6-trimethylheptan-4-yl]-2,4-dihydro-3H-1,2,4-triazol-3-thion, (1.052) 2-[(2S,4R,5R)-1-(2,4-Dichlorphenyl)-5-hydroxy-2,6,6-trimethylheptan-4-yl]-2,4-dihydro-3H-1,2,4-triazol-3-thion, (1.053) 2-[(2S,4R,5S)-1-(2,4-Dichlorphenyl)-5-hydroxy-2,6,6-trimethylheptan-4-yl]-2,4-dihydro-3H-1,2,4-triazol-3-thion, (1.054) 2-[(2S,4S,5R)-1-(2,4-Dichlorphenyl)-5-hydroxy-2,6,6-trimethylheptan-4-yl]-2,4-dihydro-3H-1,2,4-triazol-3-thion, (1.055) 2-[(2S,4S,5S)-1-(2,4-Dichlorphenyl)-5-hydroxy-2,6,6-trimethylheptan-4-yl]-2,4-dihydro-3H-1,2,4-triazol-3-thion, (1.056) 2-[1-(2,4-Dichlorphenyl)-5-hydroxy-2,6,6-trimethylheptan-4-yl]-2,4-dihydro-3H-1,2,4-triazol-3-thion, (1.057) 2-[6-(4-Bromphenoxy)-2-(trifluormethyl)-3-pyridyl]-1-(1,2,4-triazol-1-yl)propan-2-ol, (1.058) 2-[6-(4-Chlorphenoxy)-2-(trifluormethyl)-3-pyridyl]-1-(1,2,4-triazol-1-yl)propan-2-ol, (1.059) 2-{[3-(2-Chlorphenyl)-2-(2,4-difluorphenyl)oxiran-2-yl]methyl}-2,4-dihydro-3H-1,2,4-triazol-3-thion, (1.060) 2-{[rel(2R,3R)-3-(2-Chlorphenyl)-2-(2,4-difluorphenyl)oxiran-2-yl]methyl}-2,4-dihydro-3H-1,2,4-triazol-3-thion, (1.061) 2-{[rel(2R,3S)-3-(2-Chlorphenyl)-2-(2,4-difluorphenyl)oxiran-2-yl]methyl}-2,4-dihydro-3H-1,2,4-triazol-3-thion, (1.062) 3-[2-(1-Chlorcyclopropyl)-3-(3-chlor-2-fluorphenyl)-2-hydroxypropyl]imidazol-4-carbonitril, (1.063) 5-(4-Chlorbenzyl)-2-(chlormethyl)-2-methyl-1-(1H-1,2,4-triazol-1-ylmethyl)cyclopentanol, (1.064) 5-(Allylsulfanyl)-1-{[3-(2-chlorphenyl)-2-(2,4-difluorphenyl)oxiran-2-yl]methyl}-1H-1,2,4-triazol, (1.065) 5-(Allylsulfanyl)-1-{[rel(2R,3R)-3-(2-chlorphenyl)-2-(2,4-difluorphenyl)oxiran-2-yl]methyl}-1H-1,2,4-triazol, (1.066) 5-(Allylsulfanyl)-1-{ [rel(2R,3S)-3-(2-chlorphenyl)-2-(2,4-difluorphenyl)oxiran-2-yl]methyl}-1H-1,2,4-triazol, (1.068) N'-(2-Chlor-5-methyl-4-phenoxyphenyl)-N-ethyl-N-methylimidoformamid, (1.069) N'-[2-Chlor-4-(2-fluorphenoxy)-5-methylphenyl]-N-ethyl-N-methylimidoformamid, (1.070) N'-[5-Brom-6-(2,3-dihydro-1H-inden-2-yloxy)-2-methylpyridin-3-yl]-N-ethyl-N-methylimidoformamid, (1.071) N'-{4-[(4,5-Dichlor-1,3-thiazol-2-yl)oxy]-2,5-dimethylphenyl}-N-ethyl-N-methylimidoformamid, (1.072) N'-{5-Brom-2-methyl-6-[(1-propoxypropan-2-yl)oxy]pyridin-3-yl}-N-ethyl-N-methylimidoformamid, (1.073) N'-{5-Brom-6-[(1R)-1-(3,5-difluorphenyl)ethoxy]-2-methylpyridin-3-yl}-N-ethyl-N-methylimidoformamid, (1.074) N'-{5-Brom-6-[(1S)-1-(3,5-difluorphenyl)ethoxy]-2-methylpyridin-3-yl}-N-ethyl-N-methylimidoformamid, (1.075) N'-{5-Brom-6-[(cis-4-isopropylcyclohexyl)oxy]-2-methylpyridin-3-yl}-N-ethyl-N-methylimidoformamid, (1.076) N'-{5-Brom-6-[(trans-4-isopropylcyclohexyl)oxy]-2-methylpyridin-3-yl}-N-ethyl-N-methylimidoformamid, (1.077) N'-{5-Brom-6-[1-(3,5-difluorphenyl)ethoxy]-2-methylpyridin-3-yl}-N-ethyl-N-methylimidoformamid, (1.078) N-Isopropyl-N'-[5-methoxy-2-methyl-4-(2,2,2-trifluor-1-hydroxy-1-phenylethyl)phenyl]-N-methylimidoformamid,

(2') Inhibitoren der Atmungskette an Komplex I oder II ausgewählt aus der Gruppe bestehend aus (2.001)

Benzovindiflupyr, (2.002) Bixafen, (2.003) Boscalid, (2.004) Carboxin, (2.005) Cyclobutrifluram, (2.006) Flubeneteram, (2.007) Fluindapyr, (2.008) Fluopyram, (2.009) Flutolanil, (2.010) Fluxapyroxad, (2.011) Furametpyr, (2.012) Inpyrfluxam, (2.013) Isofetamid, (2.014) Isoflucypram, (2.015) Isopyrazam, (2.016) Penflufen, (2.017) Penthiopyrad, (2.018) Pydiflumetofen, (2.019) Pyrapropoyn, (2.020) Pyraziflumid, (2.021) Sedaxan, (2.022) Thifluxamid, (2.023) 1,3-Dimethyl-N-(1,1,3-trimethyl-2,3-dihydro-1H-inden-4-yl)-1H-pyrazol-4-carboxamid, (2.024) 1,3-Dimethyl-N-[(3R)-1,1,3-trimethyl-2,3-dihydro-1H-inden-4-yl]-1H-pyrazol-4-carboxamid, (2.025) 1,3-Dimethyl-N-[(3S)-1,1,3-trimethyl-2,3-dihydro-1H-inden-4-yl]-1H-pyrazol-4-carboxamid, (2.026) 1-Methyl-3-(trifluormethyl)-N-[2'-(trifluormethyl)biphenyl-2-yl]-1H-pyrazol-4-carboxamid, (2.027) 2-Fluor-6-(trifluormethyl)-N-(1,1,3-trimethyl-2,3-dihydro-1H-inden-4-yl)benzamid, (2.028) 3-(Difluormethyl)-1-methyl-N-(1,1,3-trimethyl-2,3-dihydro-1H-inden-4-yl)-1H-pyrazol-4-carboxamid, (2.029) 3-(Difluormethyl)-1-methyl-N-[(3S)-1,1,3-trimethyl-2,3-dihydro-1H-inden-4-yl]-1H-pyrazol-4-carboxamid, (2.030) 3- (Difluormethyl)-N-[(3R)-7-fluor-1,1,3-trimethyl-2,3-dihydro-1H-inden-4-yl]-1-methyl-1H-pyrazol-4-carboxamid, (2.031) 3-(Difluormethyl)-N-[(3S)-7-fluor-1,1,3-trimethyl-2,3-dihydro-1H-inden-4-yl]-1-methyl-1H-pyrazol-4-carboxamid, (2.032) 5,8-Difluor-N-[2-(2-fluor-4-{[4-(trifluormethyl)pyridin-2-yl]oxy}phenyl)ethyl]chinazolin-4-amin, (2.033) N-[(1R,4S)-9-(Dichlormethylen)-1,2,3,4-tetrahydro-1,4-methanonaphthalin-5-yl]-3-(difluormethyl)-1-methyl-1H-pyrazol-4-carboxamid, (2.034) N-[(1S,4R)-9-(Dichlormethylen)-1,2,3,4-tetrahydro-1,4-methanonaphthalin-5-yl]-3-(difluormethyl)-1-methyl-1H-pyrazol-4-carboxamid, (2.035) N-[1-(2,4-Dichlorphenyl)-1-methoxypropan-2-yl]-3-(difluormethyl)-1-methyl-1H-pyrazol-4-carboxamid, (2.036) N-[rac-(1S,2S)-2-(2,4-Dichlorphenyl)cyclobutyl]-2-(trifluormethyl)nicotinamid,

(3') Inhibitoren der Atmungskette an Komplex III ausgewählt aus der Gruppe bestehend aus (3.001) Ametoctradin, (3.002) Amisulbrom, (3.003) Azoxystrobin, (3.004) Coumethoxystrobin, (3.005) Coumoxystrobin, (3.006) Cyazofamid, (3.007) Dimoxystrobin, (3.008) Enoxastrobin, (3.009) Famoxadon, (3.010) Fenamidon, (3.011) Fenpicoxamid, (3.012) Florylpicoxamid, (3.013) Flufenoxystrobin, (3.014) Fluoxastrobin, (3.015) Kresoxim-methyl, (3.016) Mandestrobin, (3.017) Metarylpicoxamid, (3.018) Metominostrobin, (3.019) Metyltetraprol, (3.020) Orysastrobin, (3.021) Picoxystrobin, (3.022) Pyraclostrobin, (3.023) Pyrametostrobin, (3.024) Pyraoxystrobin, (3.025) Trifloxystrobin, (3.026) (2E)-2-{2-[({[(1E)-1-(3-{[(E)-1-Fluor-2-phenylvinyl]oxy}phenyl)ethyliden]amino}oxy)methyl]pheny l}-2-(methoxyimino)-N-methylacetamid, (3.027) (2E,3Z)-5-{[1-(4-Chlorphenyl)-1H-pyrazol-3-yl]oxy}-2-(methoxyimino)-N,3-dimethylpent-3-enamid, (3.028) (2R)-2-{2-[(2,5-Dimethylphenoxy)methyl]phenyl}-2-methoxy-N-methylacetamid, (3.029) (2S)-2-{2-[(2,5-Dimethylphenoxy)methyl]phenyl}-2-methoxy-N-methylacetamid, (3.030) N-(3-Ethyl-3,5,5-trimethylcyclohexyl)-3-formamido-2-hydroxybenzamid, (3.031) (2E,3Z)-5-{[1-(4-Chlor-2-fluorphenyl)-1H-pyrazol-3-yl]oxy}-2-(methoxyimino)-N,3-dimethylpent-3-enamid, (3.032) {5-[3-(2,4-Dimethylphenyl)-1H-pyrazol-1-yl]-2-methylbenzyl}carbamidsäuremethylester,

(4') Inhibitoren von Metholose und Zellteilung ausgewählt aus der Gruppe bestehend aus (4.001) Carbendazim, (4.002) Diethofencarb, (4.003) Ethaboxam, (4.004) Fluopicolid, (4.005) Fluopimomid, (4.006) Metrafenon, (4.007) Pencycuron, (4.008) Pyridachlometyl, (4.009) Pyriofenon (Chlazafenon), (4.010) Thiabendazol, (4.011) Thiophanat-methyl, (4.012) Zoxamid, (4.013) 3-Chlor-5-(4-chlorphenyl)-4-(2,6-difluorphenyl)-6-methylpyridazin, (4.014) 3-Chlor-5-(6-chlorpyridin-3-yl)-6-methyl-4-(2,4,6-trifluorphenyl)pyridazin, (4.015) 4-(2-Brom-4-fluorphenyl)-N-(2,6-difluorphenyl)-1,3-dimethyl-1H-pyrazol-5-amin, (4.016) 4-(2-Brom-4-fluorphenyl)-N-(2-brom-6-fluorphenyl)-1,3-dimethyl-1H-pyrazol-5-amin, (4.017) 4-(2-Brom-4-fluorphenyl)-N-(2-bromphenyl)-1,3-dimethyl-1H-pyrazol-5-amin, (4.018) 4-(2-Brom-4-fluorphenyl)-N-(2-chlor-6-fluorphenyl)-1,3-dimethyl-1H-pyrazol-5-amin, (4.019) 4-(2-Brom-4-fluorphenyl)-N-(2-chlorphenyl)-1,3-dimethyl-1H-pyrazol-5-amin, (4.020) 4-(2-Brom-4-fluorphenyl)-N-(2-fluorphenyl)-1,3-dimethyl-1H-pyrazol-5-amin, (4.021) 4-(2-Chlor-4-fluorphenyl)-N-(2,6-difluorphenyl)-1,3-dimethyl-1H-pyrazol-5-amin, (4.022) 4-(2-Chlor-4-fluorphenyl)-N-(2-chlor-6-fluorphenyl)-1,3-dimethyl-1H-pyrazol-5-amin, (4.023) 4-(2-Chlor-4-fluorphenyl)-N-(2-chlorphenyl)-1,3-dimethyl-1H-pyrazol-5-amin, (4.024) 4-(2-Chlor-4-fluorphenyl)-N-(2-fluorphenyl)-1,3-dimethyl-1H-pyrazol-5-amin, (4.025) 4-(4-Chlorphenyl)-5-(2,6-difluorphenyl)-3,6-dimethylpyridazin, (4.026) N-(2-Brom-6-fluorphenyl)-4-(2-chlor-4-fluorphenyl)-1,3-dimethyl-1H-pyrazol-5-amin, (4.027) N-(2-Bromphenyl)-4-(2-chlor-4-fluorphenyl)-1,3-dimethyl-1H-pyrazol-5-amin, (4.028) N-(4-Chlor-2,6-difluorphenyl)-4-(2-chlor-4-fluorphenyl)-1,3-dimethyl-1H-pyrazol-5-amin,

(5') Verbindungen, die an mehreren Stellen wirken können ("Multisite Action"), ausgewählt aus der Gruppe bestehend aus (5.001) Bordeaux-Mischung, (5.002) Captafol, (5.003) Captan, (5.004) Chlorothalonil, (5.005) Kupferhydroxid, (5.006) Kupfernaphthenat, (5.007) Kupferoxid, (5.008) Kupferoxychlorid, (5.009) Kupfer(2+)-sulfat, (5.010) Dithianon, (5.011) Dodin, (5.012) Folpet, (5.013) Mancozeb, (5.014) Maneb, (5.015) Metiram, (5.016) Metiram-Zink, (5.017) Oxin-Kupfer, (5.018) Propineb, (5.019) Schwefel und Schwefelzubereitungen einschließlich Calciumpolysulfid, (5.020) Thiram, (5.021) Zineb, (5.022) Ziram, (5.023) 6-Ethyl-5,7-dioxo-6,7-dihydro-5H-pyrrolo[3',4':5,6][1,4]dithiino[2,3-c][1,2]thiazol-3-carbonsäurenitril,

(6') Verbindungen, die dazu fähig sind, eine Abwehrreaktion des Wirtes zu induzieren, ausgewählt aus der

Gruppe bestehend aus (6.001) Acibenzolar-S-methyl, (6.002) Fosetyl-Aluminium, (6.003) Fosetyl-Calcium, (6.004) Fosetyl-Natrium, (6.005) Isotianil, (6.006) phosphoriger Säure und ihren Salzen, (6.007) Probenazol, (6.008) Tiadinil,

(7') Inhibitoren von Aminosäure- und/oder Proteinbiosynthese ausgewählt aus der Gruppe bestehend aus (7.001) Cyprodinil, (7.002) Kasugamycin, (7.003) Kasugamycinhydrochlorid-hydrat, (7.004) Oxytetracyclin, (7.005) Pyrimethanil,

(8') Inhibitoren der ATP-Produktion ausgewählt aus der Gruppe bestehend aus (8.001) Silthiofam;

(9') Inhibitoren der Zellwandsynthese ausgewählt aus der Gruppe bestehend aus (9.001) Benthiavalicarb, (9.002) Dimethomorph, (9.003) Flumorph, (9.004) Iprovalicarb, (9.005) Mandipropamid, (9.006) Pyrimorph, (9.007) Valifenalat, (9.008) (2E)-3-(4-tert.-Butylphenyl)-3-(2-chlorpyridin-4-yl)-1-(morpholin-4-yl)prop-2-en-1-on, (9.009) (2Z)-3-(4-tert.-Butylphenyl)-3-(2-chlorpyridin-4-yl)-1-(morpholin-4-yl)prop-2-en-1-on,

(10') Inhibitoren der Lipid- und Membransynthese ausgewählt aus der Gruppe bestehend aus (10.001) Fluoxapiprolin, (10.002) Natamycin, (10.003) Oxathiapiprolin, (10.004) Propamocarb, (10.005) Propamocarb-hydrochlorid, (10.006) Propamocarbfosetylat, (10.007) Tolclofos-methyl, (10.008) 1-(4-{4-[(5R)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl] ethanon, (10.009) 1-(4-{4-[(5S)-5-(2,6-Difluorphenyl)-4,5-dihydro-1,2-oxazol-3-yl]-1,3-thiazol-2-yl}piperidin-1-yl)-2-[5-methyl-3-(trifluormethyl)-1H-pyrazol-1-yl]ethanon, (10.010) 2-[3,5-Bis(difluormethyl)-1H-pyrazol-1-yl]-1-[4-(4-{5-[2-(prop-2-in-1-yloxy)phenyl]-4,5-dihydro-1,2-oxazol-3-yl}-1,3-thiazol-2-yl)piperidin-1-yl]ethanon, (10.011) 2-[3,5-Bis(difluormethyl)-1H-pyrazol-1-yl]-1-[4-(4-{5-[2-chlor-6-(prop-2-in-1-yloxy)phenyl]-4,5-dihydro-1,2-oxazol-3-yl}-1,3-thiazol-2-yl)piperidin-1-yl]ethanon, (10.012) 2-[3,5-Bis(difluormethyl)-1H-pyrazol-1-yl]-1-[4-(4-{5-[2-fluor-6-(prop-2-in-1-yloxy)phenyl]-4,5-dihydro-1,2-oxazol-3-yl}-1,3-thiazol-2-yl)piperidin-1-yl] ethanon, (10.013) 2-{(5R)-3-[2-(1-{ [3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenylmethansulfonat, (10.014) 2-{(5S)-3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}-3-chlorphenylmethansulfonat, (10.015) 2-{3-[2-(1-{[3,5-Bis(difluormethyl)-1H-pyrazol-1-yl]acetyl}piperidin-4-yl)-1,3-thiazol-4-yl]-4,5-dihydro-1,2-oxazol-5-yl}phenylmethansulfonat, (10.016) 3-[2-(1-{[5-Methyl-3-(trifluormethyl)-1H-pyrazol-1-yl] acetyl}piperidin-4-yl)-1,3-thiazol-4-yl]-1,5-dihydro-2,4-benzodioxepin-6-ylmethansulfonat, (10.017) 9-Fluor-3-[2-(1-{[5-methyl-3-(trifluormethyl)-1H-pyrazol-1-yl]acetyl}piperidin-4-yl)-1,3-thiazol-4-yl]-1,5-dihydro-2,4-benzodioxepin-6-ylmethansulfonat, (10.018) 3-[2-(1-{[3,5-Bis(difluormethyl)-1H-pyrazol-1-yl]acetyl}piperidin-4-yl)-1,3-thiazol-4-yl]-1,5-dihydro-2,4-benzodioxepin-6-ylmethansulfonat, (10.019) 3-[2-(1-{[3,5-Bis(difluormethyl)-1H-pyrazol-1-yl]acetyl}piperidin-4-yl)-1,3-thiazol-4-yl]-9-fluor-1,5-dihydro-2,4-benzodioxepin-6-ylmethansulfonat,

(11') Inhibitoren der Melaninbiosynthese ausgewählt aus der Gruppe bestehend aus (11.001) Tolprocarb, (11.002) Tricyclazol,

(12') Inhibitoren der Nukleinsäuresynthese ausgewählt aus der Gruppe bestehend aus (12.001) Benalaxyl, (12.002) Benalaxyl-M (Kiralaxyl), (12.003) Metalaxyl, (12.004) Metalaxyl-M (Mefenoxam),

(13') Inhibitoren der Signalübertragung ausgewählt aus der Gruppe bestehend aus (13.001) Fludioxonil, (13.002) Iprodion, (13.003) Procymidon, (13.004) Proquinazid, (13.005) Quinoxyfen, (13.006) Vinclozolin,

(14') Verbindungen, die als Entkoppler wirken können, ausgewählt aus der Gruppe bestehend aus (14.001) Fluazinam, (14.002) Meptyldinocap,

(15') andere Fungizide ausgewählt aus der Gruppe bestehend aus (15.001) Abscisinsäure, (15.002) Aminopyrifen, (15.003) Benthiazol, (15.004) Bethoxazin, (15.005) Capsimycin, (15.006) Carvon, (15.007) Chinomethionat, (15.008) Chlorinconazid, (15.009) Cufraneb, (15.010) Cyflufenamid, (15.011) Cymoxanil, (15.012) Cyprosulfamid, (15.013) Dipymetitron, (15.014) Flutianil, (15.015) Flufenoxadiazam, (15.016) Flumetylsulforim, (15.017) Ipflufenoquin, (15.018) Methylisothiocyanat, (15.019) Mildiomycin, (15.020) Nickeldimethyldithiocarbamat, (15.021) Nitrothal-isopropyl, (15.022) Oxyfenthiin, (15.023) Pentachlorphenol und Salzen, (15.024) Picarbutrazox, (15.025) Quinofumelin, (15.026) D-Tagatose, (15.027) Tebufloquin, (15.028) Tecloftalam, (15.029) Tolnifanid, (15.030) 2-(6-Benzylpyridin-2-yl)chinazolin, (15.031) 2-[6-(3-Fluor-4-methoxyphenyl)-5-methylpyridin-2-yl]chinazolin, (15.032) 2-Phenylphenol und Salzen, (15.033) 4-Amino-5-fluorpyrimidin-2-ol (tautomere Form: 4-Amino-5-fluorpyrimidin-2(1H)-on), (15.034) 4-Oxo-4-[(2-phenylethyl)amino]butansäure, (15.035) 5-Amino-1,3,4-thiadiazol-2-thiol, (15.036) 5-Chlor-N'-phenyl-N'-(prop-2-in-1-yl)thiophen-2-sulfonohydrazid, (15.037) 5-Fluor-2-[(4-fluorbenzyl)oxy]pyrimidin-4-amin, (15.038) 5-Fluor-2-[(4-methylbenzyl)oxy]pyrimidin-4-amin, (15.039) {6-[({[(Z)-(1-Methyl-1H-tetrazol-5-yl) (phenyl)methylen]amino}oxy)methyl]pyridin-2-yl}carbamidsäurebut-3-in-1-ylester, (15.040) (2Z)-3-Amino-2-cyano-3-phenylacrylsäureethylester, (15.041) Phenazin-1-carbonsäure, (15.042) 3,4,5-Trihydroxybenzoesäurepropylester, (15.043) Chinolin-8-ol, (15.044) Chinolin-8-olsulfat (2:1), (15.045) 1-(4,5-Dimethyl-1H-benzimidazol-1-yl)-4,4-difluor-3,3-dimethyl-3,4-dihydroisochinolin, (15.046) 1-(5-(Fluormethyl)-6-methylpyridin-3-yl)-4,4-difluor-3,3-dimethyl-3,4-dihydroisochinolin, (15.047) 1-(5,6-Dimethylpyridin-3-yl)-4,4-difluor-3,3-dimethyl-3,4-dihydroisochinolin, (15.048) 1-(6-(Difluormethyl)-5-methoxy-pyridin-3-yl)-4,4-difluor-3,3-dimethyl-3,4-dihydroisochinolin, (15.049) 1-(6-(Difluormethyl)-5-methyl-pyridin-3-yl)-4,4-difluor-3,3-dimethyl-3,4-dihydroisochinolin, (15.050) 1-(6,7-Dimethylpyrazolo[1,5-a]pyridin-3-yl)-4,4-difluor-3,3-dimethyl-3,4-dihydroisochinolin, (15.051) 2-{2-Fluor-6-[(8-fluor-2-methylchinolin-3-yl)oxy]phenyl}propan-2-ol, (15.052) 3-(4,4,5-Trifluor-3,3-dimethyl-3,4-dihydroisochinolin-1-yl)chinolin, (15.053) 3-(4,4-Difluor-3,3-dimethyl-3,4-dihydroisochinolin-1-yl)-8-fluorchinolin, (15.054) 3-(4,4-Difluor-5,5-dimethyl-4,5-dihydrothieno[2,3-c]pyridin-7-yl)chinolin, (15.055) 3-(5-Fluor-3,3,4,4-tetramethyl-3,4-dihydroisochinolin-1-yl)chinolin, (15.056) 5-Brom-1-(5,6-dimethylpyridin-3-yl)-3,3-dimethyl-3,4-dihydroisochinolin, (15.057) 8-Fluor-3-(5-fluor-3,3,4,4-tetramethyl-3,4-dihydroisochinolin-1-yl)chinolin, (15.058) 8-Fluor-3-(5-fluor-3,3-dimethyl-3,4-dihydroisochinolin-1-yl)chinolin, (15.059) 8-Fluor-N-(4,4,4-trifluor-2-methyl-1-phenylbutan-2-yl)chinolin-3-carboxamid, (15.060) 8-Fluor-N-[(2S)-4,4,4-trifluor-2-methyl-1-phenylbutan-2-yl]chinolin-3-carboxamid, (15.061) 9-Fluor-2,2-dimethyl-5-(chinolin-3-yl)-2,3-dihydro-1,4-benzoxazepin, (15.062) N-(2,4-Dimethyl-1-phenylpentan-2-yl)-8-fluorchinolin-3-carboxamid, (15.063) N-[(2S)-2,4-Dimethyl-1-phenylpentan-2-yl]-8-fluorchinolin-3-carboxamid, (15.063A) N-[(2R)-2,4-Dimethyl-1-phenylpentan-2-yl]-8-fluorchinolin-3-carboxamid, (15.063B) 2-Benzyl-N-(8-fluor-2-methyl-3-chinolyl)-2,4-dimethylpentanamid, (15.063C) (2S)-2-Benzyl-N-(8-fluor-2-methyl-3-chinolyl)-2,4-dimethylpentanamid, (15.063D) (2R)-2-Benzyl-N-(8-fluor-2-methyl-3-chinolyl)-2,4-dimethylpentanamid, (15.064) 1,1-Diethyl-3-[[4-[5-(trifluormethyl)-1,2,4-oxadiazol-3-yl]phenyl]methyl]harnstoff, (15.065) 1,3-Dimethoxy-1-[[4-[5-(trifluormethyl)-1,2,4-oxadiazol-3-yl]phenyl]methyl]harnstoff, (15.066) 1-[[3-Fluor-4-(5-(trifluormethyl)-1,2,4-oxadiazol-3-yl)phenyl]methyl]azepan-2-on, (15.067) 1-[[4-[5-(Trifluormethyl)-1,2,4-oxadiazol-3-yl]phenyl]methyl]piperidin-2-on, (15.068) 1-Methoxy-1-methyl-3-[[4-[5-(trifluormethyl)-1,2,4-oxadiazol-3-yl]phenyl]methyl]harnstoff, (15.069) 1-Methoxy-3-methyl-1-[[4-[5-(trifluormethyl)-1,2,4-oxadiazol-3-yl]phenyl]methyl]harnstoff, (15.070) 1-Methoxy-3-methyl-1-[[4-[5-(trifluormethyl)-1,2,4-oxadiazol-3-yl]phenyl]methyl]harnstoff, (15.071) 2,2-Difluor-N-methyl-2-[4-[5-(trifluormethyl)-1,2,4-oxadiazol-3-yl]phenyl]acetamid, (15.072) 3,3-Dimethyl-1-[[4-[5-(trifluormethyl)-1,2,4-oxadiazol-3-yl]phenyl]methyl]piperidin-2-on, (15.073) 3-Ethyl-1-methoxy-1-[[4-[5-(trifluormethyl)-1,2,4-oxadiazol-3-yl]phenyl]methyl]harnstoff, (15.074) 4,4-Dimethyl-1-[[4-[5-(trifluormethyl)-1,2,4-oxadiazol-3-yl]phenyl]methyl]pyrrolidin-2-on, (15.075) 4,4-Dimethyl-2-[[4-[5-(trifluormethyl)-1,2,4-oxadiazol-3-yl]phenyl]methyl]isoxazolidin-3-on, (15.076) Dimethylcarbamidsäure-4-[5-(trifluormethyl)-1,2,4-oxadiazol-3-yl]phenylester, (15.077) 5,5-Dimethyl-2-[[4-[5-(trifluormethyl)-1,2,4-oxadiazol-3-yl]phenyl]methyl]isoxazolidin-3-on, (15.078) 5-Methyl-1-[[4-[5-(trifluormethyl)-1,2,4-oxadiazol-3-yl]phenyl]methyl]pyrrolidin-2-on, (15.079) 1-{4-[5-(Trifluormethyl)-1,2,4-oxadiazol-3-yl]benzyl}-1H-pyrazol-4-carbonsäureethylester, (15.080) {4-[5-(Trifluormethyl)-1,2,4-oxadiazol-3-yl]phenyl}carbamidsäuremethylester, (15.081) N-(1-Methylcyclopropyl)-4-[5-(trifluormethyl)-1,2,4-oxadiazol-3-yl]benzamid, (15.082) N-(2,4-Difluorphenyl)-4-[5-(trifluormethyl)-1,2,4-oxadiazol-3-yl]benzamid, (15.083) N,2-Dimethoxy-N-[[4-[5-(trifluormethyl)-1,2,4-oxadiazol-3-yl]phenyl]methyl]propanamid, (15.084) N,N-Dimethyl-1-{4-[5-(trifluormethyl)-1,2,4-oxadiazol-3-yl]benzyl}-1H-1,2,4-triazol-3-amin, (15.085) N-[(E)-Methoxyiminomethyl]-4-[5-(trifluormethyl)-1,2,4-oxadiazol-3-yl]benzamid, (15.086) N-[(E)-N-Methoxy-C-methylcarbonimidoyl]-4-[5-(trifluormethyl)-1,2,4-oxadiazol-3-yl]benzamid, (15.087) N-[(Z)-Methoxyiminomethyl]-4-[5-(trifluormethyl)-1,2,4-oxadiazol-3-yl]benzamid, (15.088) N-[(Z)-N-Methoxy-C-methylcarbonimidoyl]-4-[5-(trifluormethyl)-1,2,4-oxadiazol-3-yl]benzamid, (15.089) N-[[2,3-Difluor-4-[5-(trifluormethyl)-1,2,4-oxadiazol-3-yl]phenyl]methyl]-3,3,3-trifluor-propanamid, (15.090) N-[[4-[5-(Trifluormethyl)-1,2,4-oxadiazol-3-yl]phenyl]methyl]propanamid, (15.091) N-[4-[5-(Trifluormethyl)-1,2,4-oxadiazol-3-yl]phenyl]cyclopropancarboxamid, (15.092) N-{2,3-Difluor-4-[5-(trifluormethyl)-1,2,4-oxadiazol-3-yl]benzyl}butanamid, (15.093) N-{4-[5-(Trifluormethyl)-1,2,4-oxadiazol-3-yl]benzyl}cyclopropancarboxamid, (15.094) N-{4-[5-(Trifluormethyl)-1,2,4-oxadiazol-3-yl]phenyl}propanamid, (15.095) N-Allyl-N-[[4-[5-(trifluormethyl)-1,2,4-oxadiazol-3-yl]phenyl]methyl]acetamid, (15.096) N-Allyl-N-[[4-[5-(trifluormethyl)-1,2,4-oxadiazol-3-yl]phenyl]methyl]propanamid, (15.097) N-Ethyl-2-methyl-N-[[4-[5-(trifluormethyl)-1,2,4-oxadiazol-3-yl]phenyl]methyl]propanamid, (15.098) N-Methoxy-N-[[4-[5-(trifluormethyl)-1,2,4-oxadiazol-3-yl]phenyl]methyl]cyclopropancarboxamid, (15.099) N-Methyl-4-[5-(trifluormethyl)-1,2,4-oxadiazol-3-yl]benzamid, (15.100) N-Methyl-4-[5-(trifluormethyl)-1,2,4-oxadiazol-3-yl]benzolcarbothioamid, (15.101) N-Methyl-N-phenyl-4-[5-(trifluormethyl)-1,2,4-oxadiazol-3-yl]benzamid,

wobei der mindestens eine weitere Wirkstoff (C) von Verbindung (A) und Verbindung (B) verschieden ist.

**4.** Wirkstoffkombination nach Anspruch 3, wobei Verbindung (C) ausgewählt ist aus (1.002) Difenoconazol, (1.009) Fluoxytioconazol, (1.015) Ipconazol, (1.017) Mefentrifluconazol, (1.024) Prothioconazol, (1.026) Spiroxamin, (1.027) Tebuconazol, (2.001) Benzovindiflupyr, (2.002) Bixafen, (2.007) Fluindapyr, (2.008) Fluopyram, (2.010) Fluxapyroxad, (2.012) Inpyrfluxam, (2.014) Isoflucypram, (2.016) Penflufen, (2.017) Penthiopyrad, (2.018) Pydiflumetofen, (2.021) Sedaxan, (3.003) Azoxystrobin, (3.011) Fenpicoxamid, (3.014) Fluoxastrobin, (3.016) Mandestrobin, (3.021) Picoxystrobin, (3.022) Pyraclostrobin, (3.025) Trifloxystrobin, (4.007) Pencycuron, (4.009) Pyriofenon (Chlazafenon), (4.011) Thiophanat-methyl, (5.004) Chlorothalonil, (5.011) Dodin, (5.012) Folpet, (5.013) Mancozeb, (5.018) Propineb, (6.005) Isotianil, (7.005) Pyrimethanil, (12.003) Metalaxyl, (12.004) Metalaxyl-M (mefenoxam), (13.001) Fludioxonil, (13.004) Proquinazid, (14.001) Fluazinam, (14.002) Meptyldinocap, (15.010) Cyflufenamid und (15.025) Quinofumelin.

**5.** Wirkstoffkombination nach mindestens einem der Ansprüche 3 bis 4, wobei das Gewichtsverhältnis von Verbindung (A) zu Verbindung(en) (C) 5000:1 bis 1:5000 beträgt.

**6.** Zusammensetzung zur Bekämpfung von schädlichen Mikroorganismen beim Pflanzenschutz und beim Schutz von technischen Materialien, **gekennzeichnet durch** einen Gehalt einer Wirkstoffkombination nach mindestens einem der Ansprüche 1 bis 5 zusätzlich zu mindestens einem Träger und/oder Tensid.

**7.** Verfahren zur Bekämpfung von schädlichen Mikroorganismen beim Pflanzenschutz und beim Schutz von technischen Materialien, **dadurch gekennzeichnet, dass** man eine Wirkstoffkombination nach mindestens einem der Ansprüche 1 bis 5 oder eine Zusammensetzung nach Anspruch 6 auf die schädlichen Mikroorganismen und/oder ihren Lebensraum ausbringt.

**8.** Verwendung einer Wirkstoffkombination nach mindestens einem der Ansprüche 1 bis 5 oder einer Zusammensetzung nach Anspruch 6 zur Behandlung einer transgenen Pflanze.

**9.** Verwendung einer Wirkstoffkombination nach mindestens einem der Ansprüche 1 bis 5 oder einer Zusammensetzung nach Anspruch 6 zur Behandlung von Saatgut.

**10.** Saatgut, beschichtet mit einer Wirkstoffkombination nach mindestens einem der Ansprüche 1 bis 5 oder einer Zusammensetzung nach Anspruch 6.

## Revendications

**1.** Combinaison de composés actifs comprenant

(A) comme composé (A) le 2-[2-chloro-4-(4-chlorophénoxy)phényl]-2-hydroxy-3-(1,2,4-triazol-1-yl)propanoate de méthyle, et
(B) comme composé (B) (3.017) métarylpicoxamide.

**2.** Combinaison de composés actifs selon la revendication 1, le rapport en poids du composé (A) sur le composé (B) étant de 5 000 : 1 à 1 : 5 000.

**3.** Combinaison de composés actifs selon au moins l'une des revendications 1 à 2, la combinaison de composés actifs comprenant comme composé(s) (C) au moins un autre composé actif sur le plan fongicide choisi dans les groupes (1') à (15') suivants :

(1') inhibiteurs de la synthèse d'ergostérol choisis dans le groupe constitué par (1.001) cyproconazole, (1.002) difénoconazole, (1.003) époxiconazole, (1.004) fenbuconazole, (1.005) fenhexamide, (1.006) fenpropidine, (1.007) fenpropimorphe, (1.008) fenpyrazamine, (1.009) fluoxytioconazole, (1.010) fluquinconazole, (1.011) flutriafol, (1.012) hexaconazole, (1.013) imazalil, (1.014) sulfate d'imazalil, (1.015) ipconazole, (1.016) ipfentrifluconazole, (1.017) méfentrifluconazole, (1.018) metconazole, (1.019) myclobutanil, (1.020) paclobutrazol, (1.021) penconazole, (1.022) prochloraze, (1.023) propiconazole, (1.024) prothioconazole, (1.025) pyrisoxazole, (1.026) spiroxamine, (1,027) tébuconazole, (1.028) tétraconazole, (1.029) triadiménol, (1.030) tridémorphe, (1.031) triticonazole, (1.032) (1R,2S,5S)-5-(4-chlorobenzyl)-2-(chlorométhyl)-2-méthyl-1-(1H-1,2,4-triazol-1-ylméthyl)cyclopentanol, (1.033) (1S,2R,5R)-5-(4-chlorobenzyl)-2-(chlorométhyl)-2-méthyl-1-(1H-1,2,4-triazol-1-ylméthyl)cyclopentanol, (1.034) (2R)-2-(1-chlorocyclopropyl)-4-[(1R)-2,2-dichlorocyclopropyl]-1-(1H-1,2,4-triazol-1-yl)butan-2-ol, (1.035) (2R)-2-(1-chlorocyclopropyl)-4-[(1S)-2,2-dichlorocyclopropyl]-1-(1H-1,2,4-triazol-1-yl)butan-2-ol, (1.036) (2R)-2- [4-(4-chlorophénoxy)-2-(trifluorométhyl)phényl]-1-(1H-1,2,4-triazol-1-yl)propan-2-ol, (1.037) (2S)-2-(1-chlorocyclopropyl)-4-[(1R)-2,2-dichlorocyclopropyl]-1-(1H-1,2,4-triazol-1-yl)butan-2-ol, (1.038) (2S)-2-(1-chlorocyclopropyl)-4-[(1S)-2,2-dichlorocyclopropyl]-1-(1H-1,2,4-triazol-1-yl)butan-2-ol, (1.039) (2S)-2-[4-(4-chlorophénoxy)-2-(trifluorométhyl)phényl]-1-(1H-1,2,4-triazol-1-yl)propan-2-ol, (1.040) (R)-[3-(4-chloro-2-fluorophényl)-5-(2,4-difluorophényl)-1,2-oxazol-4-yl](pyridin-3-yl)méthanol, (1.041) (S)-[3-(4-chloro-2-fluorophényl)-5-(2,4-difluorophényl)-1,2-oxazol-4-yl](pyridin-3-yl)méthanol, (1.042) [3-(4-chloro-2-fluorophényl)-5-(2,4-difluorophényl)-1,2-oxazol-4-yl](pyridin-3-yl)méthanol, (1.043) 1-({(2R,4S)-2-[2-chloro-4-(4-chlorophénoxy)phényl]-4-méthyl-1,3-dioxolan-2-yl}méthyl)-1H-1,2,4-triazole, (1.044) 1-({(2S,4S)-2-[2-chloro-4-(4-chlorophénoxy)phényl]-4-méthyl-1,3-dioxolan-2-yl}méthyl)-1H-1,2,4-triazole, (1.045) thiocyanate de 1-{[3-(2-chlorophényl)-2-(2,4-difluorophényl)oxiran-2-yl]méthyl}-1H-1,2,4-triazol-5-yle, (1.046) thiocyanate de 1-{[rel(2R,3R)-3-(2-chlorophényl)-2-(2,4-difluorophényl)oxiran-2-yl]méthyl}-1H-1,2,4-triazol-5-yle, (1.047) thiocyanate de 1-{[rel(2R,3S)-3-(2-chlorophényl)-2-(2,4-difluorophényl)oxiran-2-yl]méthyl}-1H-1,2,4-triazol-5-yle, (1.048) 2-[(2R,4R,5R)-1-(2,4-dichlorophényl)-5-hydroxy-2,6,6-triméthylheptan-4-yl]-2,4-dihydro-3H-1,2,4-triazole-3-thione, (1.049) 2-[(2R,4R,5S)-1-(2,4-dichlorophényl)-5-hydroxy-2,6,6-triméthylheptan-4-yl]-2,4-dihydro-3H-1,2,4-triazole-3-thione, (1.050) 2-[(2R,4S,5R)-1-(2,4-dichlorophényl)-5-hydroxy-2,6,6-triméthylheptan-4-yl]-2,4-dihydro-3H-1,2,4-triazole-3-thione, (1.051) 2-[(2R,4S,5S)-1-(2,4-dichlorophényl)-5-hydroxy-2,6,6-triméthylheptan-4-yl]-2,4-dihydro-3H-1,2,4-triazole-3-thione, (1.052) 2-[(2S,4R,5R)-1-(2,4-dichlorophényl)-5-hydroxy-2,6,6-triméthylheptan-4-yl]-2,4-dihydro-3H-1,2,4-triazole-3-thione, (1.053) 2-[(2S,4R,5S)-1-(2,4-dichlorophényl)-5-hydroxy-2,6,6-triméthylheptan-4-yl]-2,4-dihydro-3H-1,2,4-triazole-3-thione, (1.054) 2-[(2S,4S,5R)-1-(2,4-dichlorophényl)-5-hydroxy-2,6,6-triméthylheptan-4-yl]-2,4-dihydro-3H-1,2,4-triazole-3-thione, (1.055) 2-[(2S,4S,5S)-1-(2,4-dichlorophényl)-5-hydroxy-2,6,6-triméthylheptan-4-yl]-2,4-dihydro-3H-1,2,4-triazole-3-thione, (1.056) 2-[1-(2,4-dichlorophényl)-5-hydroxy-2,6,6-triméthylheptan-4-yl]-2,4-dihydro-3H-1,2,4-triazole-3-thione, (1.057) 2-[6-(4-bromophénoxy)-2-(trifluorométhyl)-3-pyridyl]-1-(1,2,4-triazol-1-yl)propan-2-ol, (1.058) 2-[6-(4-chlorophénoxy)-2-(trifluorométhyl)-3-pyridyl]-1-(1,2,4-triazol-1-yl)propan-2-ol, (1.059) 2-{[3-(2-chlorophényl)-2-(2,4-difluorophényl)oxiran-2-yl]méthyl}-2,4-dihydro-3H-1,2,4-triazole-3-thione, (1.060) 2-{[rel(2R,3R)-3-(2-chlorophényl)-2-(2,4-difluorophényl)oxiran-2-yl]méthyl}-2,4-dihydro-3H-1,2,4-triazole-3-thione, (1.061) 2-{[rel(2R,3S)-3-(2-chlorophényl)-2-(2,4-difluorophényl)oxiran-2-yl]méthyl}-2,4-dihydro-3H-1,2,4-triazole-3-thione, (1.062) 3-[2-(1-chlorocyclopropyl)-3-(3-chloro-2-fluorophényl)-2-hydroxypropyl]imidazole-4-carbonitrile, (1.063) 5-(4-chlorobenzyl)-2-(chlorométhyl)-2-méthyl-1-(1H-1,2,4-triazol-1-ylméthyl)cyclopentanol, (1.064) 5-(allylsulfanyl)-1-{[3-(2-chlorophényl)-2-(2,4-difluorophényl)oxiran-2-yl]méthyl}-1H-1,2,4-triazole, (1.065) 5-(allylsulfanyl)-1-{[rel(2R,3R)-3-(2-chlorophényl)-2-(2,4-difluorophényl)oxiran-2-yl]méthyl}-1H-1,2,4-triazole, (1.066) 5-(allylsulfanyl)-1-{[rel(2R,3S)-3-(2-chlorophényl)-2-(2,4-difluorophényl)oxiran-2-yl]méthyl}-1H-1,2,4-triazole, (1.068) N'-(2-chloro-5-méthyl-4-phénoxyphényl)-N-éthyl-N-méthylimidoformamide, (1.069) N'-[2-chloro-4-(2-fluorophénoxy)-5-méthylphényl]-N-éthyl-N-méthylimidoformamide, (1.070) N'-[5-bromo-6-(2,3-dihydro-1H-indén-2-yloxy)-2-méthylpyridin-3-yl]-N-éthyl-N-méthylimidoformamide, (1.071) N'-{4-[(4,5-dichloro-1,3-thiazol-2-yl)oxy]-2,5-diméthylphényl}-N-éthyl-N-méthylimidoformamide, (1.072) N'-{5-bromo-2-méthyl-6-[(1-propoxypropan-2-yl)oxy]pyridin-3-yl}-N-éthyl-N-méthylimidoformamide, (1.073) N'-{5-bromo-6-[(1R)-1-(3,5-difluorophényl)éthoxy]-2-méthylpyridin-3-yl}-N-éthyl-N-méthylimidoformamide, (1.074) N'-{5-bromo-6-[(1S)-1-(3,5-difluorophényl)éthoxy]-2-méthylpyridin-3-yl}-N-éthyl-N-méthylimidoformamide, (1.075) N'-{5-bromo-6-[(cis-4-isopropylcyclohexyl)oxy]-2-méthylpyridin-3-yl}-N-éthyl-N-méthylimidoformamide, (1.076) N'-{5-bromo-6-[(trans-4-isopropylcyclohexyl)oxy]-2-méthylpyridin-3-yl}-N-éthyl-N-méthylimidoformamide, (1.077) N'-{5-bromo-6-[1-(3,5-difluorophényl)éthoxy]-2-méthylpyridin-3-yl}-N-éthyl-N-méthylimidoformamide, (1.078) N-isopropyl-N'-[5-méthoxy-2-méthyl-4-(2,2,2-trifluoro-1-hydroxy-1-phényléthyl)phényl]-N-méthylimidoformamide,

(2') inhibiteurs de la chaîne respiratoire au niveau du complexe I ou II choisis dans le groupe constitué par (2.001) benzovindiflupyr, (2.002) bixafène, (2.003) boscalide, (2.004) carboxine, (2.005) cyclobutrifluram, (2.006) flubénétéram, (2.007) fluindapyr, (2.008) fluopyram, (2.009) flutolanil, (2.010) fluxapyroxad, (2.011) furametpyr, (2.012) inpyrfluxam, (2.013) isofétamide, (2.014) isolucypram, (2.015) isopyrazam, (2.016) penflufène, (2.017) penthiopyrad, (2.018) pydiflumétofène, (2.019) pyrapropoyne, (2.020) pyraziflumide, (2.021) sédaxane, (2.022) thifluxamide, (2.023) 1,3-diméthyl-N-(1,1,3-triméthyl-2,3-dihydro-1H-indén-4-yl)-1H-pyrazole-4-carboxamide, (2.024) 1,3-diméthyl-N-[(3R)-1,1,3-triméthyl-2,3-dihydro-1H-indén-4-yl]-1H-pyrazole-4-carboxamide, (2.025) 1,3-diméthyl-N-[(3S)-1,1,3-triméthyl-2,3-dihydro-1H-indén-4-yl]-1H-pyrazole-4-carboxamide, (2.026) 1-méthyl-3-(trifluorométhyl)-N-[2'-(trifluorométhyl)biphényl-2-yl]-1H-pyrazole-4-carboxamide, (2.027) 2-fluoro-6-(trifluorométhyl)-N-(1,1,3-triméthyl-2,3-dihydro-1H-indén-4-yl)benzamide, (2.028) 3-(difluorométhyl)-1-méthyl-N-(1,1,3-triméthyl-2,3-dihydro-1H-indén-4-yl)-1H-pyrazole-4-carboxamide, (2.029) 3-(difluorométhyl)-1-méthyl-N-[(3S)-1,1,3-triméthyl-2,3-dihydro-1H-indén-4-yl]-1H-pyrazole-4-carboxamide, (2.030) 3-(difluorométhyl)-N-[(3R)-7-fluoro-1,1,3-triméthyl-2,3-dihydro-1H-indén-4-yl]-1-méthyl-1H-pyrazole-4-carboxamide, (2.031) 3-(difluorométhyl)-N-[(3S)-7-fluoro-1,1,3-triméthyl-2,3-dihydro-1H-indén-4-yl]-1-méthyl-1H-pyrazole-4-carboxamide, (2.032) 5,8-difluoro-N-[2-(2-fluoro-4-{ [4-(trifluorométhyl)pyridin-2-yl]oxy}phényl)éthyl]quinazolin-4-amine, (2.033) N-[(1R,4S)-9-(dichlorométhylène)-1,2,3,4-tétrahydro-1,4-méthanonaphtalén-5-yl]-3-(difluorométhyl)-1-méthyl-1H-pyrazole-4-carboxamide, (2.034) N-[(1S,4R)-9-(dichlorométhylène)-1,2,3,4-tétrahydro-1,4-méthanonaphtalén-5-yl]-3-(difluorométhyl)-1-méthyl-1H-pyrazole-4-carboxamide, (2.035)

N-[1-(2,4-dichlorophényl)-1-méthoxypropan-2-yl]-3-(difluorométhyl)-1-méthyl-1H-pyrazole-4-carboxamide, (2.036) N-[rac-(1S,2S)-2-(2,4-dichlorophényl)cyclobutyl]-2-(trifluorométhyl)nicotinamide,

(3') inhibiteurs de la chaîne respiratoire au niveau du complexe III choisis dans le groupe constitué par (3.001) amétoctradine, (3.002) amisulbrom, (3.003) azoxystrobine, (3.004) couméthoxystrobine, (3.005) coumoxystrobine, (3.006) cyazofamide, (3.007) dimoxystrobine, (3.008) énoxastrobine, (3.009) famoxadone, (3.010) fénamidone, (3.011) fenpicoxamide, (3.012) florylpicoxamide, (3.013) flufénoxystrobine, (3.014) fluoxastrobine, (3.015) krésoxim-méthyl, (3.016) mandestrobine, (3.017) métarylpicoxamide, (3.018) métominostrobine, (3.019) méthyltétraprole, (3.020) orysastrobine, (3.021) picoxystrobine, (3.022) pyraclostrobine, (3.023) pyramétostrobine, (3.024) pyraoxystrobine, (3.025) trifloxystrobine, (3.026) (2E)-2-{2-[({[(1E)-1-(3-{[(E)-1-fluoro-2-phénylvinyl]oxy}phényl)éthylidène]amino}oxy)méthyl]phén yl}-2-(méthoxyimino)-N-méthylacétamide, (3.027) (2E,3Z)-5-{[1-(4-chlorophényl)-1H-pyrazol-3-yl]oxy}-2-(méthoxyimino)-N,3-diméthylpent-3-énamide, (3.028) (2R)-2-{2-[(2,5-diméthylphénoxy)méthyl]phényl}-2-méthoxy-N-méthylacétamide, (3.029) (2S)-2-{2-[(2,5-diméthylphénoxy)méthyl]phényl}-2-méthoxy-N-méthylacétamide, (3.030) N-(3-éthyl-3,5,5-triméthylcyclohexyl)-3-formamido-2-hydroxybenzamide, (3.031) (2E,3Z)-5-{[1-(4-chloro-2-fluorophényl)-1H-pyrazol-3-yl]oxy}-2-(méthoxyimino)-N,3-diméthylpent-3-énamide, (3.032) {5-[3-(2,4-diméthylphényl)-1H-pyrazol-1-yl]-2-méthylbenzyl} carbamate de méthyle,

(4') inhibiteurs de la mitose et de la division cellulaire choisis dans le groupe constitué par (4.001) carbendazime, (4.002) diéthofencarbe, (4.003) éthaboxame, (4.004) fluopicolide, (4.005) fluopimomide, (4.006) métrafénone, (4.007) pencycuron, (4.008) pyridachlorométyl, (4.009) pyriofénone (chlazafénone), (4.010) thiabendazole, (4.011) thiophanate-méthyl, (4.012) zoxamide, (4.013) 3-chloro-5-(4-chlorophényl)-4-(2,6-difluorophényl)-6-méthylpyridazine, (4.014) 3-chloro-5-(6-chloropyridin-3-yl)-6-méthyl-4-(2,4,6-trifluorophényl)pyridazine, (4.015) 4-(2-bromo-4-fluorophényl)-N-(2,6-difluorophényl)-1,3-diméthyl-1H-pyrazol-5-amine, (4.016) 4-(2-bromo-4-fluorophényl)**-N-**(2-bromo-6-fluorophényl)-1,3-diméthyl-1H-pyrazol-5-amine, (4.017) 4-(2-bromo-4-fluorophényl)-N-(2-bromophényl)-1,3-diméthyl-1H-pyrazol-5-amine, (4.018) 4-(2-bromo-4-fluorophényl)-N-(2-chloro-6-fluorophényl)-1,3-diméthyl-1H-pyrazol-5-amine, (4.019) 4-(2-bromo-4-fluorophényl)-N-(2-chlorophényl)-1,3-diméthyl-1H-pyrazol-5-amine, (4.020) 4-(2-bromo-4-fluorophényl)-N-(2-fluorophényl)-1,3-diméthyl-1H-pyrazol-5-amine, (4.021) 4-(2-chloro-4-fluorophényl)-N-(2,6-difluorophényl)-1,3-diméthyl-1H-pyrazol-5-amine, (4.022) 4-(2-chloro-4-fluorophényl)-N-(2-chloro-6-fluorophényl)-1,3-diméthyl-1H-pyrazol-5-amine, (4.023) 4-(2-chloro-4-fluorophényl)-N-(2-chlorophényl)-1,3-diméthyl-1H-pyrazol-5-amine, (4.024) 4-(2-chloro-4-fluorophényl)-N-(2-fluorophényl)-1,3-diméthyl-1H-pyrazol-5-amine, (4.025) 4-(4-chlorophényl)-5-(2,6-difluorophényl)-3,6-diméthylpyridazine, (4.026) N-(2-bromo-6-fluorophényl)-4-(2-chloro-4-fluorophényl)-1,3-diméthyl-1H-pyrazol-5-amine, (4.027) N-(2-bromophényl)-4-(2-chloro-4-fluorophényl)-1,3-diméthyl-1H-pyrazol-5-amine, (4.028) N-(4-chloro-2,6-difluorophényl)-4-(2-chloro-4-fluorophényl)-1,3-diméthyl-1H-pyrazol-5-amine,

(5') composés capables d'avoir une action multisite choisis dans le groupe constitué par (5.001) bouillie bordelaise, (5.002) captafol, (5.003) captane, (5.004) chlorothalonil, (5.005) hydroxyde de cuivre, (5.006) naphténate de cuivre, (5.007) oxyde de cuivre, (5.008) oxychlorure de cuivre, (5.009) sulfate de cuivre(2+), (5.010) dithianon, (5.011) dodine, (5.012) folpet, (5.013) mancozèbe, (5.014) manèbe, (5.015) métirame, (5.016) métirame zinc, (5.017) oxine-cuivre, (5.018) propinèbe, (5.019) soufre et préparations soufrées comprenant du polysulfure de calcium, (5.020) thirame, (5.021) zinèbe, (5.022) zirame, (5.023) 6-éthyl-5,7-dioxo-6,7-dihydro-5H-pyrrolo[3',4':5,6][1,4]dithiino[2,3-c][1,2]thiazole-3-carbonitrile,

(6') composés capables d'induire une défense de l'hôte choisis dans le groupe constitué par 6.001) acibenzolar-S-méthyl, (6.002) fosétyl-aluminium, (6.003) fosétylcalcium, (6.004) fosétyl-sodium, (6.005) isotianil, (6.006) acide phosphoreux et ses sels, (6.007) probénazole, (6.008) tiadinil,

(7') inhibiteurs de la biosynthèse des acides aminés et/ou des protéines choisis dans le groupe constitué par (7.001) cyprodinil, (7.002) kasugamycine, (7.003) hydrate de chlorhydrate de kasugamycine, (7.004) oxytétracycline, (7.005) pyriméthanil,

(8') inhibiteurs de la production d'ATP choisis dans le groupe constitué par (8.001) silthiofam,

(9') inhibiteurs de la synthèse de la paroi cellulaire choisis dans le groupe constitué par (9.001) benthiavalicarbe, (9.002) diméthomorphe, (9.003) flumorphe, (9.004) iprovalicarbe, (9.005) mandipropamide, (9.006) pyrimorphe, (9.007) valifenalate, (9.008) (2E)-3-(4-tert-butylphényl)-3-(2-chloropyridin-4-yl)-1-(morpholin-4-yl)prop-2-én-1-one, (9.009) (2Z)-3-(4-tert-butylphényl)-3-(2-chloropyridin-4-yl)-1-(morpholin-4-yl)prop-2-én-1-one,

(10') inhibiteurs de la synthèse lipidique et membranaire choisis dans le groupe constitué par (10.001) fluoxapiproline, (10.002) natamycine, (10.003) oxathiapiproline, (10.004) propamocarbe, (10.005) chlorhydrate de propamocarbe, (10.006) fosétylate de propamocarbe, (10.007) tolclofos-méthyle, (10.008) 1-(4-{4-[(5R)-5-(2,6-difluorophényl)-4,5-dihydro-1,2-oxazol-3-yl]-1,3-thiazol-2-yl}pipéridin-1-yl)-2-[5-méthyl-3-(trifluorométhyl)-1H-pyrazol-1-yl]éthanone, (10.009) 1-(4-{4-[(5S)-5-(2,6-difluorophényl)-4,5-dihydro-1,2-oxazol-3-yl]-1,3-thiazol-2-yl}pipéridin-1-yl)-2-[5-méthyl-3-(trifluorométhyl)-1H-pyrazol-1-yl]éthanone,

(10.010) 2-[3,5-bis(difluorométhyl)-1H-pyrazol-1-yl]-1-[4-(4-{5-[2-(prop-2-yn-1-yloxy)phényl]-4,5-dihydro-1,2-oxazol-3-yl}-1,3-thiazol-2-yl)pipéridin-1-yl]éthanone, (10.011) 2-[3,5-bis(difluorométhyl)-1H-pyrazol-1-yl]-1-[4-(4-{5-[2-chloro-6-(prop-2-yn-1-yloxy)phényl]-4,5-dihydro-1,2-oxazol-3-yl}-1,3-thiazol-2-yl)pipéridin-1-yl]éthanone, (10.012) 2-[3,5-bis(difluorométhyl)-1H-pyrazol-1-yl]-1-[4-(4-{5-[2-fluoro-6-(prop-2-yn-1-yloxy)phényl]-4,5-dihydro-1,2-oxazol-3-yl}-1,3-thiazol-2-yl)pipéridin-1-yl]éthanone, (10.013) méthanesulfonate de 2-{(5R)-3-[2-(1-{[3,5-bis(difluorométhyl)-1H-pyrazol-1-yl]acétyl}pipéridin-4-yl)-1,3-thiazol-4-yl]-4,5-dihydro-1,2-oxazol-5-yl}-3-chlorophényle, (10.014) méthanesulfonate de 2-{(5S)-3-[2-(1-{[3,5-bis(difluorométhyl)-1H-pyrazol-1-yl]acétyl}pipéridin-4-yl)-1,3-thiazol-4-yl]-4,5-dihydro-1,2-oxazol-5-yl}-3-chlorophényl, (10.015) méthanesulfonate de 2-{3-[2-(1-{[3,5-bis(difluorométhyl)-1H-pyrazol-1-yl]acétyl}pipéridin-4-yl)-1,3-thiazol-4-yl]-4,5-dihydro-1,2-oxazol-5-yl}phényl, (10.016) méthanesulfonate de 3-[2-(1-{[5-méthyl-3-(trifluorométhyl)-1H-pyrazol-1-yl]acétyl}pipéridin-4-yl)-1,3-thiazol-4-yl]-1,5-dihydro-2,4-benzodioxépine-6-yle, (10.017) méthanesulfonate de 9-fluoro-3-[2-(1-{[5-méthyl-3-(trifluorométhyl)-1H-pyrazol-1-yl]acétyl}pipéridin-4-yl)-1,3-thiazol-4-yl]-1,5-dihydro-2,4-benzodioxépine-6-yle, (10.018) méthanesulfonate de 3-[2-(1-{[3,5-bis(difluorométhyl)-1H-pyrazol-1-yl]acétyl}pipéridin-4-yl)-1,3-thiazol-4-yl]-1,5-dihydro-2,4-benzodioxépine-6-yle, (10.019) méthanesulfonate de 3-[2-(1-{[3,5-bis(difluorométhyl)-1H-pyrazol-1-yl]acétyl}pipéridin-4-yl)-1,3-thiazol-4-yl]-9-fluoro-1,5-dihydro-2,4-benzodioxépine-6-yle,

(11') inhibiteurs de la biosynthèse de la mélanine choisis dans le groupe constitué par (11.001) tolprocarbe, (11.002) tricyclazole,

(12') inhibiteurs de la synthèse des acides nucléiques choisis dans le groupe constitué par (12.001) bénalaxyl, (12.002) bénalaxyl-M (kiralaxyl), (12.003) métalaxyl, (12.004) métalaxyl-M (méfénoxam),

(13') inhibiteurs de la transduction du signal choisis dans le groupe constitué par (13.001) fludioxonil, (13.002) iprodione, (13.003) procymidone, (13.004) proquinazide, (13.005) quinoxyfène, (13.006) vinclozoline,

(14') composés capables d'agir comme découplant choisis dans le groupe constitué par (14.001) fluazinam, (14.002) meptyldinocap,

(15') autres fongicides choisis dans le groupe constitué par (15.001) acide abscisique, (15.002) aminopyrifène, (15.003) benthiazole, (15.004) béthoxazine, (15.005) capsimycine, (15.006) carvone, (15.007) chinométhionate, (15.008) chloroinconazide, (15.009) cufranèbe, (15.010) cyflufénamide, (15.011) cymoxanil, (15.012) cyprosulfamide, (15.013) dipymétitrone, (15.014) flutianil, (15.015) flufénoxadiazam, (15.016) flumétylsulforim, (15.017) ipflufénoquine, (15.018) isothiocyanate de méthyle, (15.019) mildiomycine, (15.020) diméthyldithiocarbamate de nickel, (15.021) nitrothal-isopropyle, (15.022) oxyfenthiine, (15.023) pentachlorophénol et ses sels, (15.024) picarbutrazox, (15.025) quinofuméline, (15.026) D-tagatose, (15.027) tébufloquine, (15.028) técloftalam, (15.029) tolnifanide, (15.030) 2-(6-benzylpyridin-2-yl)quinazoline, (15.031) 2-[6-(3-fluoro-4-méthoxyphényl)-5-méthylpyridin-2-yl]quinazoline, (15.032) 2-phénylphénol et ses sels, (15.033) 4-amino-5-fluoropyrimidin-2-ol (forme tautomère : 4-amino-5-fluoropyrimidin-2(1H)-one), (15.034) acide 4-oxo-4-[(2-phényléthyl) amino]butanoïque, (15.035) 5-amino-1,3,4-thiadiazole-2-thiol, (15.036) 5-chloro-N'-phényl-N'-(prop-2-yn-1-yl) thiophène-2-sulfonohydrazide, (15.037) 5-fluoro-2-[(4-fluorobenzyl)oxy]pyrimidin-4-amine, (15.038) 5-fluoro-2-[(4-méthylbenzyl)oxy]pyrimidin-4-amine, (15.039) but-3-yn-1-yle {6-[({[(Z)-(1-méthyl-1H-tétrazol-5-yl) (phényl)méthylène]amino}oxy)méthyl]pyridin-2-yl}carbamate, (15.040) éthyl (2Z)-3-amino-2-cyano-3-phénylacrylate, (15.041) acide phénazine-1-carboxylique, (15.042) 3,4,5-trihydroxybenzoate de propyle, (15.043) quinoléine-8-ol, (15.044) sulfate de quinoléine-8-ol (2:1), (15.045) 1-(4,5-diméthyl-1H-benzimidazol-1-yl)-4,4-difluoro-3,3-diméthyl-3,4-dihydroisoquinoléine, (15.046) 1-(5-(fluorométhyl)-6-méthyl-pyridin-3-yl)-4,4-difluoro-3,3-diméthyl-3,4-dihydroisoquinoléine, (15.047) 1-(5,6-diméthylpyridin-3-yl)-4,4-difluoro-3,3-diméthyl-3,4-dihydroisoquinoléine, (15.048) 1-(6-(difluorométhyl)-5-méthoxy-pyridin-3-yl)-4,4-difluoro-3,3-diméthyl-3,4-dihydroisoquinoléine, (15.049) 1-(6-(difluorométhyl)-5-méthyl-pyridin-3-yl)-4,4-difluoro-3,3-diméthyl-3,4-dihydroisoquinoléine, (15.050) 1-(6,7-diméthylpyrazolo[1,5-a]pyridin-3-yl)-4,4-difluoro-3,3-diméthyl-3,4-dihydroisoquinoléine, (15.051) 2-{2-fluoro-6-[(8-fluoro-2-méthylquinoléin-3-yl)oxy]phényl}propan-2-ol, (15.052) 3-(4,4,5-trifluoro-3,3-diméthyl-3,4-dihydroisoquinoléin-1-yl) quinoléine, (15.053) 3-(4,4-difluoro-3,3-diméthyl-3,4-dihydroisoquinoléin-1-yl)-8-fluoroquinoléine, (15.054) 3-(4,4-difluoro-5,5-diméthyl-4,5-dihydrothiéno[2,3-c]pyridin-7-yl)quinoléine, (15.055) 3-(5-fluoro-3,3,4,4-tétraméthyl-3,4-dihydroisoquinoléin-1-yl) quinoléine, (15.056) 5-bromo-1-(5,6-diméthylpyridin-3-yl)-3,3-diméthyl-3,4-dihydroisoquinoléine, (15.057) 8-fluoro-3-(5-fluoro-3,3,4,4-tétraméthyl-3,4-dihydroisoquinoléin-1-yl)-quinoléine, (15.058) 8-fluoro-3-(5-fluoro-3,3-diméthyl-3,4-dihydroisoquinoléin-1-yl)-quinoléine, (15.059) 8-fluoro-N-(4,4,4-trifluoro-2-méthyl-1-phénylbutan-2-yl)quinoléine-3-carboxamide, (15.060) 8-fluoro-N-[(2S)-4,4,4-trifluoro-2-méthyl-1-phénylbutan-2-yl]quinoléine-3-carboxamide, (15.061) 9-fluoro-2,2-diméthyl-5-(quinoléin-3-yl)-2,3-dihydro-1,4-benzoxazépine, (15.062) N-(2,4-diméthyl-1-phénylpentan-2-yl)-8-fluoroquinoléine-3-carboxamide, (15.063) N-[(2S)-2,4-diméthyl-1-phénylpentan-2-yl]-8-fluoroquinoléine-3-carboxamide, (15.063A) N-[(2R)-2,4-diméthyl-1-phénylpentan-2-yl]-8-fluoroquinoléine-3-carboxamide, (15.063B) 2-benzyl-N-(8-fluoro-2-méthyl-3-quinoléin)-2,4-diméthyl-pentanamide, (15.063C) (2S)-2-benzyl-N-(8-fluoro-2-méthyl-3-quinolyl)-2,4-diméthyl-pentanamide, (15.063D) (2R)-2-benzyl-N-(8-fluoro-2-méthyl-3-quinolyl)-2,4-diméthyl-pentanamide, (15.064) 1,1-diéthyl-3-[[4-[5-(trifluorométhyl)-1,2,4-oxadiazol-3-yl]phényl]méthyl]urée, (15.065) 1,3-diméthoxy-1-[[4-[5-(trifluorométhyl)-1,2,4-oxadiazol-3-yl]phényl]méthyl]urée, (15.066) 1-[[3-fluoro-4-(5-(trifluorométhyl)-1,2,4-oxadiazol-3-yl)phényl]méthyl] azépan-2-one, (15.067) 1-[[4-[5-(trifluorométhyl)-1,2,4-oxadiazol-3-yl]phényl]méthyl]pipéridin-2-one, (15.068) 1-méthoxy-1-méthyl-3-[[4-[5-(trifluorométhyl)-1,2,4-oxadiazol-3-yl]phényl]méthyl]urée, (15.069) 1-méthoxy-3-méthyl-1-[[4-[5-(trifluorométhyl)-1,2,4-oxadiazol-3-yl]phényl]méthyl]urée, (15.070) 1-méthoxy-3-méthyl-1-[[4-[5-(trifluorométhyl)-1,2,4-oxadiazol-3-yl]phényl]méthyl]urée, (15.071) 2,2-difluoro-N-méthyl-2-[4-[5-(trifluorométhyl)-1,2,4-oxadiazol-3-yl]phényl]acétamide, (15.072) 3,3-diméthyl-1-[[4-[5-(trifluorométhyl)-1,2,4-oxadiazol-3-yl]phényl]méthyl]pipéridin-2-one, (15.073) 3-éthyl-1-méthoxy-1-[[4-[5-(trifluorométhyl)-1,2,4-oxadiazol-3-yl]phényl]méthyl]urée, (15.074) 4,4-diméthyl-1-[[4-[5-(trifluorométhyl)-1,2,4-oxadiazol-3-yl]phényl]méthyl]pyrrolidin-2-one, (15.075) 4,4-diméthyl-2-[[4-[5-(trifluorométhyl)-1,2,4-oxadiazol-3-yl] phényl]méthyl]isoxazolidin-3-one, (15.076) 4-[5-(trifluorométhyl)-1,2,4-oxadiazol-3-yl]phényl diméthylcarbamate, (15.077) 5,5-diméthyl-2-[[4-[5-(trifluorométhyl)-1,2,4-oxadiazol-3-yl]phényl]méthyl]isoxazolidin-3-one, (15.078) 5-méthyl-1-[[4-[5-(trifluorométhyl)-1,2,4-oxadiazol-3-yl]phényl]méthyl]pyrrolidin-2-one, (15.079) 1-{4-[5-(trifluorométhyl)-1,2,4-oxadiazol-3-yl]benzyl}-1H-pyrazole-4-carboxylate d'éthyle, (15.080) {4-[5-(trifluorométhyl)-1,2,4-oxadiazol-3-yl]phényl}carbamate de méthyle, (15.081) N-(1-méthylcyclopropyl)-4-[5-(trifluorométhyl)-1,2,4-oxadiazol-3-yl]benzamide, (15.082) N-(2,4-difluorophényl)-4-[5-(trifluorométhyl)-1,2,4-oxadiazol-3-yl]benzamide, (15.083) N,2-diméthoxy-N-[[4-[5-(trifluorométhyl)-1,2,4-oxadiazol-3-yl]phényl]méthyl] propanamide, (15.084) N,N-diméthyl-1-{4-[5-(trifluorométhyl)-1,2,4-oxadiazol-3-yl]benzyl}-1H-1,2,4-triazol-3-amine, (15.085) N-[(E)-méthoxyiminométhyl]-4-[5-(trifluorométhyl)-1,2,4-oxadiazol-3-yl]benzamide, (15.086) N-[(E)-N-méthoxy-C-méthyl-carbonimidoyl]-4-[5-(trifluorométhyl)-1,2,4-oxadiazol-3-yl]benzamide, (15.087) N-[(Z)-méthoxyiminométhyl]-4-[5-(trifluorométhyl)-1,2,4-oxadiazol-3-yl]benzamide, (15.088) N-[(Z)-N-méthoxy-C-méthyl-carbonimidoyl]-4-[5-(trifluorométhyl)-1,2,4-oxadiazol-3-yl]benzamide, (15.089) N-[[2,3-difluoro-4-[5-(trifluorométhyl)-1,2,4-oxadiazol-3-yl]phényl]méthyl]-3,3,3-trifluoropropanamide, (15.090) N-[[4-[5-(trifluorométhyl)-1,2,4-oxadiazol-3-yl]phényl]méthyl]propanamide, (15.091) N-[4-[5-(trifluorométhyl)-1,2,4-oxadiazol-3-yl]phényl]cyclopropanecarboxamide, (15.092) N-{2,3-difluoro-4-[5-(trifluorométhyl)-1,2,4-oxadiazol-3-yl]benzyl}butanamide, (15.093) N-{4-[5-(trifluorométhyl)-1,2,4-oxadiazol-3-yl]benzyl}cyclopropanecarboxamide, (15.094) N-{4-[5-(trifluorométhyl)-1,2,4-oxadiazol-3-yl]phényl}propanamide, (15.095) N-allyl-N-[[4-[5-(trifluorométhyl)-1,2,4-oxadiazol-3-yl]phényl]méthyl]acétamide, (15.096) N-allyl-N-[[4-[5-(trifluorométhyl)-1,2,4-oxadiazol-3-yl]phényl]méthyl]propanamide, (15.097) N-éthyl-2-méthyl-N-[[4-[5-(trifluorométhyl)-1,2,4-oxadiazol-3-yl]phényl]méthyl]propanamide, (15.098) N-méthoxy-N-[[4-[5-(trifluorométhyl)-1,2,4-oxadiazol-3-yl]phényl]méthyl]cyclopropanecarboxamide, (15.099) N-méthyl-4-[5-(trifluorométhyl)-1,2,4-oxadiazol-3-yl]benzamide, (15.100) N-méthyl-4-[5-(trifluorométhyl)-1,2,4-oxadiazol-3-yl]benzènecarbothioamide, (15.101) N-méthyl-N-phényl-4-[5-(trifluorométhyl)-1,2,4-oxadiazol-3-yl]benzamide,

l'au moins un autre composé actif (C) étant différent du composé (A) et du composé (B).

**4.** Combinaison de composés actifs selon la revendication 3, le composé (C) étant choisi parmi (1.002) difénoconazole, (1.009) fluoxytioconazole, (1.015) ipconazole, (1.017) méfentrifluconazole, (1.024) prothioconazole, (1.026) spiroxamine, (1.027) tébuconazole, (2.001) benzovindiflupyr, (2.002) bixafène, (2.007) fluindapyr, (2.008) fluopyram, (2.010) fluxapyroxad, (2.012) inpyrfluxam, (2.014) isolucypram, (2.016) penflufène, (2.017) penthiopyrade, (2.018) pydiflumétofène, (2.021) sédaxane, (3.003) azoxystrobine, (3.011) fenpicoxamide, (3.014) fluoxastrobine, (3.016) mandestrobine, (3.021) picoxystrobine, (3.022) pyraclostrobine, (3.025) trifloxystrobine, (4.007) pencycuron, (4.009) pyriofénone (chlazafénone), (4.011) thiophanate-méthyle, (5.004) chlorothalonil, (5.011) dodine, (5.012) folpet, (5.013) mancozèbe, (5.018) propinèbe, (6.005) isotianil, (7.005) pyriméthanil, (12.003) métalaxyl, (12.004) métalaxyl-M (méfénoxam), (13.001) fludioxonil, (13.004) proquinazide, (14.001) fluazinam, (14.002) meptyldinocap, (15.010) cyflufénamide et (15.025) quinofuméline.

**5.** Combinaison de composés actifs selon au moins l'une des revendications 3 à 4, le rapport en poids du composé (A) sur le ou les composés (C) étant de 5 000 : 1 à 1 : 5 000.

**6.** Composition pour la lutte contre des micro-organismes dangereux dans la protection de cultures et dans la protection de matières industrielles, **caractérisée par** une teneur d'une combinaison de composés actifs selon au moins l'une des revendications 1 à 5, en plus d'au moins un support et/ou tensioactif.

**7.** Procédé pour la lutte contre des micro-organismes dangereux dans la protection de cultures et dans la protection de matières industrielles, **caractérisé en ce qu'**une combinaison de composés actifs selon au moins l'une des revendications 1 à 5 ou une composition selon la revendication 6 est appliquée sur les micro-organismes dangereux

et/ou leur habitat.

**8.** Utilisation d'une combinaison de composés actifs selon au moins l'une des revendications 1 à 5 ou d'une composition selon la revendication 6 pour le traitement d'un végétal transgénique.

**9.** Utilisation d'une combinaison de composés actifs selon au moins l'une des revendications 1 à 5 ou d'une composition selon la revendication 6 pour le traitement d'une graine.

**10.** Graine revêtue par une combinaison de composés actifs selon au moins l'une des revendications 1 à 5 ou une composition selon la revendication 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2019093522 A1
- WO 2020213739 A1
- WO 200364572 A
- WO 2006043635 A
- WO 2006003494 A
- WO 2010052161 A
- EP 2647626 A
- JP 2010018586 A
- WO 2013144213 A
- WO 2010051926 A
- CN 103232431
- WO 2013050317 A1
- WO 2013162715 A2
- WO 2013162716 A2
- US 20140213448 A1
- CN 101337937 A
- CN 103109816 A
- WO 2012034403 A1
- WO 2011085575 A1
- CN 101337940 A
- CN 101715774 A
- CN 103524422 A
- CN 102391261 A
- US 20140275503 A1
- WO 2007040280 A1
- WO 2007040282 A1
- CN 103265527 A
- WO 2014187846 A1
- WO 2010066780 A1
- WO 2011151146 A1
- WO 2014053450 A1
- WO 2018177970 A1
- WO 2019236274 A1
- WO 2019059412 A1
- CN 110835330 A
- CN 106977494 A
- DE 3335514
- EP 30287 A
- DE 2906507
- US 5123951 A
- EP 2248421 A
- US 5549718 A
- US 4536207 A
- US 5965545 A
- US 5702752 A
- US 5990291 A
- US 6146668 A
- WO 9717432 A
- WO 9808932 A
- WO 200147952 A
- WO 9850427 A
- WO 2009152359 A
- WO 2007024782 A
- US 6855533 B
- WO 2019103918 A
- WO 2002040677 A
- WO 2006128569 A
- WO 2006128570 A
- US 2002120964 A
- WO 2002034946 A
- WO 2010117737 A
- WO 2010117735 A
- WO 2005103266 A
- US 2005216969 A
- US 2007143876 A
- WO 2006098952 A
- US 2006230473 A
- WO 2002027004 A
- WO 11075593 A
- WO 2011075595 A
- WO 2010077816 A
- US 2006162007 A
- WO 2004053062 A
- US 2003126634 A
- WO 2010080829 A
- WO 2005074671 A
- US 2009217423 A
- WO 2006128573 A
- US 2010 A
- US 0024077 A
- WO 2006128571 A
- WO 2006128572 A
- US 2006130175 A
- WO 2004039986 A
- US 2007067868 A
- WO 2005054479 A
- WO 2005054480 A
- WO 2012033794 A
- WO 2011022469 A
- WO 2012075426 A
- WO 2012075429 A
- US 2006070139 A
- WO 2009100188 A
- WO 2011066384 A
- WO 2011066360 A
- US 2009 A
- US 137395 A
- WO 08112019 A

- US 2008312082 A
- WO 2008054747 A
- US 20090210970 A
- WO 2009103049 A
- US 20100184079 A
- WO 2008002872 A
- WO 07091277 A
- US 2006059581 A
- WO 98044140 A
- WO 2011063413 A
- US 2005086719 A
- US 2005188434 A
- WO 2008151780 A
- US 2010050282 A
- WO 2007017186 A
- WO 2010076212 A
- US 2004172669 A
- WO 2004074492 A
- US 2008064032 A
- WO 2006108674 A
- US 2008320616 A
- WO 2006108675 A
- US 2008196127 A
- WO 2003013224 A
- US 2003097687 A
- US 6468747 B
- WO 2000026345 A
- US 20082289060 A
- WO 2000026356 A
- US 2007028322 A
- WO 2005061720 A
- US 2009300784 A
- WO 2007142840 A
- US 2008167456 A
- WO 2005103301 A
- US 2004250317 A
- WO 2002100163 A
- US 2002102582 A
- WO 2004011601 A
- US 2006095986 A
- WO 2011062904 A
- WO 2009111263 A
- US 20110138504 A
- US 2009130071 A
- WO 2009064652 A
- US 20100080887 A
- WO 2010037016 A
- WO 2011034704 A
- WO 2012051199 A
- WO 2010024976 A
- US 20110067141 A
- WO 2009102873 A
- US 2008028482 A
- WO 2005059103 A
- WO 2004072235 A
- US 2006059590 A
- WO 2011153186 A
- WO 2012134808 A
- WO 07140256 A
- US 2008260932 A
- US 2006282915 A
- WO 2006130436 A
- WO 2001031042 A
- WO 2001041558 A
- US 2003188347 A
- US 2007292854 A
- WO 2008114282 A
- WO 2002036831 A
- US 2008070260 A
- WO 2012082548 A
- WO 200244407 A
- US 2009265817 A
- US 2001029014 A
- WO 2001051654 A
- US 2010077501 A
- WO 2008122406 A
- WO 2006128568 A
- US 2005039226 A
- WO 2004099447 A
- WO 2003052073 A
- WO 2011084632 A
- WO 2011084621 A
- WO 2011063413 A2
- WO 2011066360 A1
- WO 2011066384 A1
- WO 2011075593 A1
- WO 2011075595 A1
- WO 2011084621 A1
- WO 2011084632 A1
- WO 2011153186 A1
- WO 2012033794 A2
- WO 2012051199 A2
- WO 2012075426 A1
- WO 2012075429 A1
- WO 2012082548 A2
- WO 2012071039 A1
- US 2012131692 A
- WO 2012075426 A2
- WO 2012075429 A2
- WO 2012134808 A1
- WO 2013003558 A1
- WO 2013010094 A1
- WO 2013012775 A1

**Non-patent literature cited in the description**


- *J. Med. Chem.*, 1995, vol. 38 (11), 1892-1903
- *J. Heterocyc. Chem.*, 1981, vol. 18 (7), 1305-1308

- *J. Am. Chem. Soc.*, 2001, vol. 123 (25), 5962-5973
- *CHEMICAL ABSTRACTS*, 2375110-88-4
- *CHEMICAL ABSTRACTS*, 1771741-86-6
- *CHEMICAL ABSTRACTS*, 885026-50-6
- *CHEMICAL ABSTRACTS*, 872999-66-1
- *CHEMICAL ABSTRACTS*, 1225292-17-0
- *CHEMICAL ABSTRACTS*, 1440516-42-6
- *CHEMICAL ABSTRACTS*, 1204776-60-2
- *CHEMICAL ABSTRACTS*, 1461743-15-6
- *CHEMICAL ABSTRACTS*, 1226889-14-0
- *CHEMICAL ABSTRACTS*, 1449220-44-3
- *CHEMICAL ABSTRACTS*, 1332628-83-7
- *CHEMICAL ABSTRACTS*, 1477923-37-7
- *CHEMICAL ABSTRACTS*, 1105672-77-2
- *CHEMICAL ABSTRACTS*, 1232543-85-9
- *CHEMICAL ABSTRACTS*, 1268277-22-0
- *CHEMICAL ABSTRACTS*, 1233882-22-8
- *CHEMICAL ABSTRACTS*, 1108184-52-6
- *CHEMICAL ABSTRACTS*, 1542271-46-4
- *CHEMICAL ABSTRACTS*, 1370358-69-2
- *CHEMICAL ABSTRACTS*, 1181213-14-8
- *CHEMICAL ABSTRACTS*, 1253850-56-4
- *CHEMICAL ABSTRACTS*, 933798-27-7
- *CHEMICAL ABSTRACTS*, 934001-66-8
- *CHEMICAL ABSTRACTS*, 1452877-50-7
- *CHEMICAL ABSTRACTS*, 1638765-58-8
- *CHEMICAL ABSTRACTS*, 1229023-00-0
- *CHEMICAL ABSTRACTS*, 1594624-87-9
- *CHEMICAL ABSTRACTS*, 1594637-65-6
- *CHEMICAL ABSTRACTS*, 1594626-19-3
- *CHEMICAL ABSTRACTS*, 2246757-58-2
- *CHEMICAL ABSTRACTS*, 2246757-56-0
- *CHEMICAL ABSTRACTS*, 2396747-83-2
- *CHEMICAL ABSTRACTS*, 1207977-87-4
- *CHEMICAL ABSTRACTS*, 2129147-03-9
- *CHEMICAL ABSTRACTS*, 1398-61-4
- *CHEMICAL ABSTRACTS*, 9012-76-4
- *CHEMICAL ABSTRACTS*, 129531-12-0
- *CHEMICAL ABSTRACTS*, 71526-07-3
- *CHEMICAL ABSTRACTS*, 52836-31-4
- **DENARIE et al.** *Ann. Rev. Biochem.*, 1996, vol. 65, 503
- **DIAZ et al.** *Mol. Plant-Microbe Interactions*, 2000, vol. 13, 268
- **HUNGRIA et al.** *Soil Biol. Biochem.*, 1997, vol. 29, 819
- **HAMEL et al.** *Planta*, 2010, vol. 232, 787
- **PROME et al.** *Pure & Appl. Chem.*, 1998, vol. 70 (1), 55
- **D'HAEZE et al.** *Glycobiol*, 2002, vol. 12 (6), 79R
- **DEMONT-CAULET et al.** *Plant Physiol.*, 1999, vol. 120 (1), 83
- **HANEL et al.** *Planta*, 2010, vol. 232, 787
- **MULLER et al.** *Plant Physiol.*, 2000, vol. 124, 733
- **ROBINA et al.** *Tetrahedron*, 2002, vol. 58, 521-530
- Docking of Chitin Oligomers and Nod Factors on Lectin Domains of the LysM-RLK Receptors in the Medicago-Rhizobium Symbiosis. **ROUGE et al.** The Molecular Immunology of Complex Carbohydrates-3. Springer Science, 2011
- **VAN DER HOLST et al.** *Curr. Opin. Struc. Biol.*, 2001, vol. 11, 608
- **WAN et al.** *Plant Cell*, 2009, vol. 21, 1053
- **COTTAZ et al.** *Meth. Eng.*, 2005, vol. 7 (4), 311
- **SAMAIN et al.** *Carbohydrate Res*, 1997, vol. 302, 35
- **SAMAIN et al.** *J. Biotechnol.*, 1999, vol. 72, 33
- **POCHANAVANICH et al.** *Lett. Appl. Microbiol.*, 2002, vol. 35, 17
- **JAIN et al.** *J. Plant Biochem. & Biotechnol.*, 2002, vol. 11, 1
- **SHAW et al.** *Environ. Microbiol.*, 2006, vol. 11, 1867
- **RALSTON et al.** *Plant Physiol.*, 2005, vol. 137, 1375
- **MABOOD et al.** *Plant Physiol. Biochem.*, 2006, vol. 44 (11), 759
- **MABOOD et al.** *Agr. J.*, 2006, vol. 98 (2), 289
- **MABOOD et al.** *Field Crops Res.*, 2006, vol. 95 (2-3), 412
- **MABOOD** ; **SMITH**. Linoleic and linolenic acid induce the expression of nod genes in Bradyrhizobium japonicum USDA 3. *Plant Biol.*, 2001
- **ESTRUCH et al.** *Proc Natl Acad Sci US A. 28*, 1996, vol. 93 (11), 5389-94
- **COLBY, S.R**. Calculating Synergistic and Antagonistic Responses of Herbicide Combinations. *Weeds*, 1967, vol. 15, 20-22
- **TAMMES**. Isoboles, a graphic representation of synergism in pesticides. *Neth. J. Plant Path.*, 1964, vol. 70, 73-80